(19)

Europäisches
Patentamt
European
Patent Office
Office européen
des brevets

(11) **EP 4 510 577 A1**

(12) **EUROPEAN PATENT APPLICATION**
published in accordance with Art. 153(4) EPC

(43) Date of publication:
**19.02.2025 Bulletin 2025/08**

(51) International Patent Classification (IPC):
***H04N 19/186*** (2014.01)  ***H04N 19/159*** (2014.01)

(21) Application number: **22936845.1**

(52) Cooperative Patent Classification (CPC):
**H04N 19/159; H04N 19/186**

(22) Date of filing: **12.04.2022**

(86) International application number:
**PCT/CN2022/086467**

(87) International publication number:
**WO 2023/197191 (19.10.2023 Gazette 2023/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **HUO, Junyan**
 **Dongguan, Guangdong 523860 (CN)**

• **MA, Yanzhuo**
 **Dongguan, Guangdong 523860 (CN)**
• **YANG, Fuzheng**
 **Dongguan, Guangdong 523860 (CN)**
• **DU, Hongqing**
 **Dongguan, Guangdong 523860 (CN)**
• **WANG, Danni**
 **Dongguan, Guangdong 523860 (CN)**
• **LI, Ming**
 **Dongguan, Guangdong 523860 (CN)**

(74) Representative: **Ipside**
 **7-9 Allée Haussmann**
 **33300 Bordeaux Cedex (FR)**

(54) **CODING METHOD AND APPARATUS, DECODING METHOD AND APPARATUS, CODING DEVICE, DECODING DEVICE, AND STORAGE MEDIUM**

(57)    A coding method and apparatus, an encoding device, a decoding device, and a storage medium are provided. The method includes the following. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block, where the number of prediction values of the second colour component of the first prediction block is greater than the number of second-colour-component samples in the current block. First filtering is performed on the first prediction block to determine a second prediction block for the second colour component of the current block. A reconstructed value of the second-colour-component sample in the current block is determined according to the second prediction block. In this way, it is possible not only to improve accuracy of chroma prediction and save bit-rate, but also to improve coding performance.

DETERMINE REFERENCE SAMPLE VALUE FOR FIRST COLOUR COMPONENT OF CURRENT BLOCK — S501

DETERMINE WEIGHTING FACTOR ACCORDING TO REFERENCE SAMPLE VALUE FOR FIRST COLOUR COMPONENT OF CURRENT BLOCK — S502

DETERMINE FIRST PREDICTION BLOCK FOR SECOND COLOUR COMPONENT OF CURRENT BLOCK ACCORDING TO WEIGHTING FACTOR AND REFERENCE SAMPLE VALUE FOR SECOND COLOUR COMPONENT OF CURRENT BLOCK — S503

PERFORM FIRST FILTERING ON FIRST PREDICTION BLOCK TO DETERMINE SECOND PREDICTION BLOCK FOR SECOND COLOUR COMPONENT OF CURRENT BLOCK — S504

DETERMINE RECONSTRUCTED VALUE OF SECOND-COLOUR-COMPONENT SAMPLE IN CURRENT BLOCK ACCORDING TO SECOND PREDICTION BLOCK — S505

FIG. 5

EP 4 510 577 A1

**Description**

TECHNICAL FIELD

Embodiments of the disclosure relate to the field of video coding technology, and more particularly, to a coding method and apparatus, an encoding device, a decoding device, and a storage medium.

BACKGROUND

With increase in people's requirements on video display quality, new video application forms such as high definition video and ultra-high definition video emerge. Joint video expert team (JVET) of international standard organizations (international organization for standardization (ISO)/international electrotechnical commission (IEC) and international telecommunication union telecommunication standardization sector (ITU-T)) has proposed a next-generation video coding standard, namely H.266/versatile video coding (VVC).

A cross-colour-component prediction technology is applied in H.266/VVC. However, a deviation between a prediction value and an original value of a coding block that is calculated with the cross-colour-component prediction technology in H.266/VVC is large, which results in low prediction accuracy and quality degradation of a decoded video, thus degrading encoding performance.

SUMMARY

Embodiments of the disclosure provide a coding method and apparatus, an encoding device, a decoding device, and a storage medium, which can not only improve accuracy of chroma prediction and save bit-rate, but also improve coding performance.

The technical solutions of embodiments of the disclosure can be implemented as follows.

In a first aspect, a decoding method is provided in embodiments of the disclosure. The method includes the following. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block. First filtering is performed on the first prediction block to determine a second prediction block for the second colour component of the current block, where the second prediction block comprises prediction values of all second-colour-component samples in the current block. A reconstructed value of the second-colour-component sample in the current block is determined according to the second prediction block.

In a second aspect, an encoding method is provided in embodiments of the disclosure. The method includes the following. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block. First filtering is performed on the first prediction block to determine a second prediction block for the second colour component of the current block, where the second prediction block comprises prediction values of all second-colour-component samples in the current block. A residual value of the second-colour-component sample in the current block is determined according to the second prediction block.

In a third aspect, an encoding apparatus is provided in embodiments of the disclosure. The encoding apparatus includes a first determining unit, a first predicting unit, and a first filtering unit. The first determining unit is configured to determine a reference sample value for a first colour component of a current block, and determine a weighting factor according to the reference sample value for the first colour component of the current block. The first predicting unit is configured to determine a first prediction block for a second colour component of the current block according to the weighting factor and a reference sample value for the second colour component of the current block. The first filtering unit is configured to perform first filtering on the first prediction block to determine a second prediction block for the second colour component of the current block, where the second prediction block comprises prediction values of all second-colour-component samples in the current block. The first determining unit is further configured to determine a residual value of the second-colour-component sample in the current block according to the second prediction block.

In a fourth aspect, an encoding device is provided in embodiments of the disclosure. The encoding device includes a first memory and a first processor. The first memory is configured to store computer programs executable by the first processor. The first processor is configured to execute the computer programs to perform the method described in the second aspect.

In a fifth aspect, a decoding apparatus is provided in embodiments of the disclosure. The decoding apparatus includes a second determining unit, a second predicting unit, and a second filtering unit. The second determining unit is configured to determine a reference sample value for a first colour component of a current block, and determine a weighting factor according to the reference sample value for the first colour component of the current block. The second predicting unit is configured to determine a first prediction block for a second colour component of the current block according to the weighting factor and a reference sample value for the second colour component of the current block. The second filtering unit is configured to perform first filtering on the first prediction block to determine a second prediction block for the second colour component of the current block, where the second prediction block comprises prediction values of all second-colour-component samples in the current block. The second determining unit is further configured to determine a reconstructed value of the second-colour-component sample in the current block according to the second prediction block.

In a sixth aspect, a decoding device is provided in embodiments of the disclosure. The decoding device includes a second memory and a second processor. The second memory is configured to store computer programs executable by the second processor. The second processor is configured to execute the computer programs to perform the method described in the first aspect.

In a seventh aspect, a computer-readable storage medium is provided in embodiments of the disclosure. The computer-readable storage medium is configured to store computer programs which, when executed, are operable to implement the method described in the first aspect is implemented or implement the method described in the second aspect.

Embodiments of the disclosure provide a coding method and apparatus, an encoding device, a decoding device, and a storage medium. At an encoding end or at a decoding end, the reference sample value for the first colour component of the current block is determined. The weighting factor is determined according to the reference sample value for the first colour component of the current block. The first prediction block for the second colour component of the current block is determined according to the weighting factor and the reference sample value for the second colour component of the current block. First filtering is performed on the first prediction block to determine the second prediction block for the second colour component of the current block, where the second prediction block comprises prediction values of all second-colour-component samples in the current block. In this way, at the encoding end, the residual value of the second-colour-component sample in the current block can be determined according to the second prediction block, such that at the decoding end, the reconstructed value of the second-colour-component sample in the current block can be determined according to the second prediction block. As such, the weighting factor can be calculated with aid of the reference sample neighbouring the current block and colour component information of the current block, correlation between the current block and neighbouring areas in terms of luma information is fully taken into consideration, and such correlation is used in chroma prediction of the current block, so as to improve accuracy of chroma prediction. Considering that human eyes have low sensitivity to chroma information and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, and thus improve coding performance.

BRIEF DESCRIPTION OF THE DRAWINGS

FIG. 1 is a schematic diagram illustrating distribution of valid neighbouring areas.

FIG. 2 is a schematic diagram illustrating distribution of selection areas in different prediction modes.

FIG. 3 is a schematic flowchart of a model parameter derivation scheme.

FIG. 4A is a schematic block diagram of an encoder provided in embodiments of the disclosure.

FIG. 4B is a schematic block diagram of a decoder provided in embodiments of the disclosure.

FIG. 5 is schematic flowchart I of a decoding method provided in embodiments of the disclosure.

FIG. 6A is a schematic diagram illustrating reference areas for a current block provided in embodiments of the disclosure.

FIG. 6B is a schematic diagram illustrating up-sampling interpolation on reference chroma information provided in embodiments of the disclosure.

FIG. 7 is a schematic diagram illustrating filter positions of the disclosure.

FIG. 8 is a schematic diagram illustrating a weighted prediction based on weighted chroma prediction (WCP) mode and another prediction mode(s) provided in embodiments of the disclosure.

FIG. 9 is a schematic diagram illustrating a framework of WCP provided in embodiments of the disclosure.

FIG. 10 is schematic flowchart II of a decoding method provided in embodiments of the disclosure.

FIG. 11 is schematic flowchart III of a decoding method provided in embodiments of the disclosure.

FIG. 12 is schematic flowchart IV of a decoding method provided in embodiments of the disclosure.

FIG. 13 is schematic diagram I illustrating up-sampling interpolation provided in embodiments of the disclosure.

FIG. 14 is schematic diagram II illustrating up-sampling interpolation provided in embodiments of the disclosure.

FIG. 15 is a schematic diagram illustrating weight values in up-sampling interpolation provided in embodiments of the disclosure.

FIG. 16 is schematic flowchart III of up-sampling interpolation provided in embodiments of the disclosure.

FIG. 17 is schematic flowchart I of another up-sampling interpolation provided in embodiments of the disclosure.

FIG. 18 is schematic flowchart of weight values in another up-sampling interpolation provided in embodiments of the disclosure.

FIG. 19 is schematic flowchart II of another up-sampling interpolation provided in embodiments of the disclosure.

FIG. 20 is a schematic flowchart I of an encoding method provided in embodiments of the disclosure.

FIG. 21 is a schematic flowchart II of an encoding method provided in embodiments of the disclosure.

FIG. 22 is a schematic structural diagram of an encoding apparatus provided in embodiments of the disclosure.

FIG. 23 is a schematic structural diagram illustrating hardware of an encoding device provided in embodiments of the disclosure.

FIG. 24 is a schematic structural diagram of a decoding apparatus provided in embodiments of the disclosure.

FIG. 25 is a schematic structural diagram illustrating hardware of a decoding device provided in embodiments of the disclosure.

FIG. 26 is a schematic structural diagram of a coding system provided in embodiments of the disclosure.

DETAILED DESCRIPTION

In order for more comprehensive understanding of the features and technical contents of embodiments of the disclosure, the implementation of embodiments of the disclosure will be described in detail below with reference to the accompanying drawings. The accompanying drawings are only intended for illustration rather than limiting embodiments of the disclosure.

Unless defined otherwise, all technology and terminology used herein have the same meaning as that commonly understood by those of skilled in the technical field of the disclosure. The terminology used herein is only for the purpose of describing embodiments of the disclosure rather than limiting the disclosure.

In the following elaborations, "some embodiments" refers to a sub-set of all possible embodiments, but it can be understood that "some embodiments" can be the same sub-set or different sub-sets of all possible embodiments, and can be combined with each other without conflict. It should also be noted that, the terms "first/second/third" in embodiments of the disclosure are merely intended for distinguishing similar objects, and do not mean a specific ordering of the objects. It can be understood that, the order or sequence of "first/second/third" can be changed when allowed, so that embodiments of the disclosure described herein can be implemented in an order other than that illustrated or described herein.

In a video picture, a first colour component, a second colour component, and a third colour component are usually used to represent a coding block (CB). The three colour components are a luma component, a blue chroma component, and a red chroma component respectively. Exemplarily, the luma component is usually represented by a symbol Y, the blue chroma component is usually represented by a symbol Cb or U, and the red chroma component is usually represented by a symbol Cr or V. In this way, the video picture can be expressed in a YCbCr format or a YUV format. In addition, the video picture can also be expressed in a red green blue (RGB) format, a luminance chrominance-green chrominance-orange (YCgCo) format, and the like, which is not limited in embodiments of the disclosure.

It can be understood that, in a current video picture or video coding process, a cross-component prediction technology mainly includes a cross-component linear model (CCLM) prediction mode and a multi-directional linear model (MDLM) prediction mode. No matter whether it is a model parameter derived according to the CCLM prediction mode or a model parameter derived according to the MDLM prediction mode, the prediction model corresponding thereto can be used to implement cross-colour-component prediction, for example, from the first colour component to the second colour component, from the second colour component to the first colour component, from the first colour component to the third colour component, from the third colour component to the first colour component, from the second colour component to the third colour component, or from the third colour component to the second colour component, etc.

Taking prediction from the first colour component to the second colour component as an example, assuming that the first colour component is a luma component and the second colour component is a chroma component, in order to reduce redundancy between the luma component and the chroma component, the CCLM prediction mode is used in versatile video coding (VVC), that is, a chroma prediction value (also known as predicted chroma value) is constructed according to a reconstructed luma value of the same coding block, such as $Pred_C(i, j) = \alpha \cdot Rec_L(i, j) + \beta$.

i, j represents a position coordinate of a sample to-be-predicted in a coding block, where i represents a horizontal direction, and j represents a vertical direction. $Pred_C(i, j)$ represents a chroma prediction value corresponding to the sample to-be-predicted at the position coordinate (i, j) in the coding block, and $Rec_L(i, j)$ represents a reconstructed luma (down-sampled) value corresponding to the sample to-be-predicted at the position coordinate (i, j) in the same coding block. In addition, $\alpha$ and $\beta$ represent model parameters, and the model parameters can be derived according to a reference sample.

A neighbouring area of the coding block can include five parts: a left neighbouring area, a top neighbouring area, a bottom-left neighbouring area, a top-left neighbouring area, and a top-right neighbouring area. In H.266/VVC, there are three CCLM prediction modes, i. e. a neighbouring left and top intra-CCLM prediction mode (which can be represented by INTRA_LT_CCLM), a neighbouring left and bottom-left intra-CCLM prediction mode (which can be represented by INTRA_L_CCLM), and a neighbouring top and top-right intra-CCLM prediction mode (which can be represented by INTRA_T_CCLM). For each of the three prediction modes, a preset number (for example, four) of reference samples can be selected for derivation of the model parameters $\alpha$ and $\beta$, and the major difference between the three prediction modes lies in that selection areas corresponding to the reference sample for derivation of the model parameters $\alpha$ and $\beta$ are different.

Specifically, for a coding block with a size of W × H corresponding to a chroma component, assuming that a top selection area corresponding to the reference sample is W' and a left selection area corresponding to the reference sample is H', then for the INTRA_LT_CCLM mode, the reference sample can be selected from the top neighbouring area and the left neighbouring area, i. e. W' = W and H' = H; for the INTRA_L_CCLM mode, the reference sample can be selected from a left neighbouring area and a bottom-left neighbouring area, i. e. H' = W + H and W' = 0; for the INTRA_T_CCLM mode, the reference sample can be selected from a top neighbouring area and a top-right neighbouring area, i. e. W' = W + H and H' = 0.

It should be noted that, in VVC test model (VTM), for the top-right neighbouring area, at most samples within the range W are stored, and for the bottom-left neighbouring area, at most samples within the range H are stored. Although the range of the selection area for the INTRA_L_CCLM mode or the INTRA_T_CCLM mode is defined as W + H, in practice, the selection area for the INTRA_L_CCLM mode is limited to H + H, and the selection area for the INTRA_T_CCLM mode is limited to W + W. In this way, for the INTRA_L_CCLM mode, the reference sample can be selected from the left neighbouring area and the bottom-left neighbouring area, where H' = min{W + H, H + H} ; for the INTRA_T_CCLM mode, the reference sample can be selected from the top neighbouring area and the top-right neighbouring area, where W' = min {W + H, W + W}.

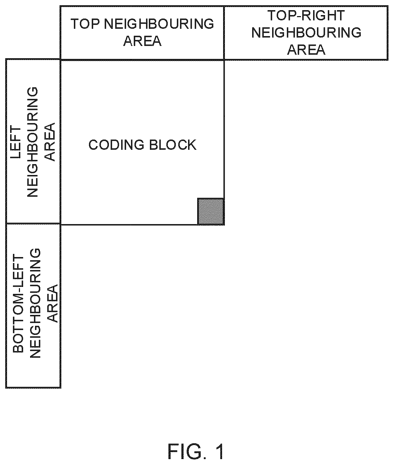

Referring to FIG. 1, FIG. 1 is a schematic diagram illustrating distribution of valid neighbouring areas. In FIG. 1, the left neighbouring area, the bottom-left neighbouring area, the top neighbouring area, and the top-right neighbouring area are all valid. In addition, the gray-filled block represents the sample to-be-predicted whose position coordinate is (i, j) in the coding block.

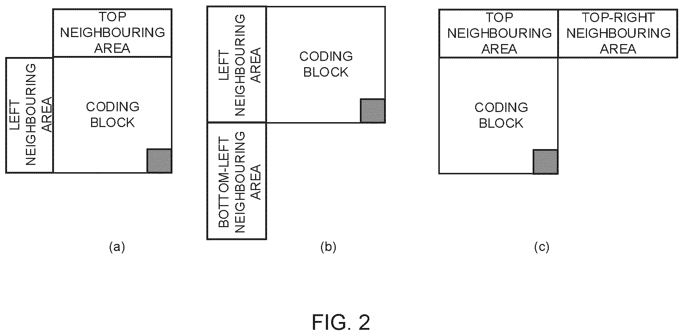

In this way, on the basis of FIG. 1, selection areas for the three prediction modes are illustrated in FIG. 2. In FIG. 2, (a) illustrates the selection area for the INTRA_LT_CCLM mode, which includes the left neighbouring area and the top neighbouring area; (b) illustrates the selection area for the INTRA_L_CCLM mode, which includes the left neighbouring area and the bottom-left neighbouring area; (c) illustrates the selection area for the INTRA_T_CCLM mode, which includes the top neighbouring area and the top-right neighbouring area. As such, after the selection areas for the three prediction modes are determined, a sample for model parameter derivation can be selected from the selection areas. The sample thus selected can be referred to as a reference sample, and the number of reference samples is usually four. In addition, for a coding block with the size of W × H, the position of the reference sample thereof is usually fixed.

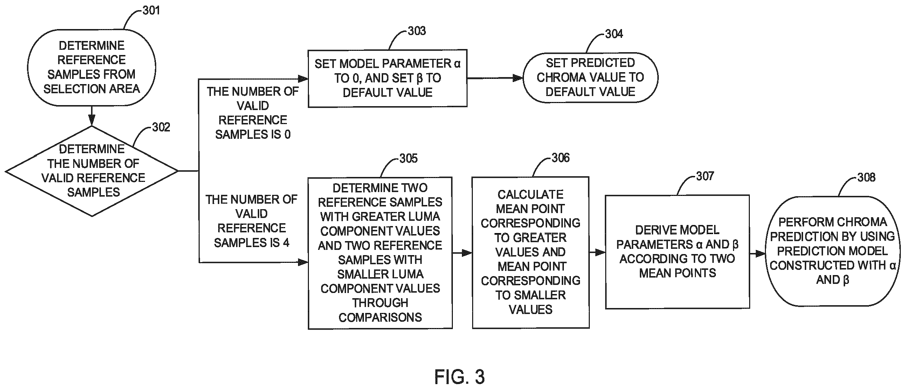

After the preset number of reference samples are determined, at present, chroma prediction is performed according to a schematic flowchart of a model parameter derivation scheme illustrated in FIG. 3. Assuming that the preset number is four, then according to the flows illustrated in FIG. 3, the process can include the following.

S301, reference samples are determined from a selection area.

S302, the number of valid reference samples are determined.

S303, if the number of valid reference samples is 0, model parameter $\alpha$ is set to 0 and model parameter $\beta$ is set to a default value.

S304, a chroma prediction value is set to the default value.

S305, if the number of valid reference samples is four, two reference samples with greater luma component values and two reference samples with smaller luma component values are determined through comparisons.

S306, a mean point corresponding to the greater values and a mean point corresponding to the smaller values are calculated.

S307, the model parameters $\alpha$ and $\beta$ are derived according to the two mean points.

S308, chroma prediction is performed by using a prediction model constructed with $\alpha$ and $\beta$.

It should be noted that, in VVC, the determination that the number of valid reference samples is 0 is made according to validity of the neighbouring area.

It should be further noted that, the prediction model is constructed based on the principle of "two points determine one straight line", where the two points can be referred to as fitting points. In an existing technical solution, after four reference samples are determined, two reference samples with greater luma component values and two reference samples with smaller luma component values are determined through comparisons. Then a mean point (which can be represented by $mean_{max}$) is calculated according to the two reference samples with greater values, and another mean point (which can be represented by $mean_{min}$) is calculated according to the two reference samples with smaller values, so as to obtain the two mean points $mean_{max}$ and $mean_{min}$. Then $mean_{max}$ and $mean_{min}$ are taken as two fitting points, so as to derive the model parameters (represented by $\alpha$ and $\beta$). The prediction model is constructed according to $\alpha$ and $\beta$, and chroma component prediction is implemented with the prediction model.

However, in the related art, for each coding block, a simple linear model $Pred_C(i, j) = \alpha \cdot Rec_L(i,j) + \beta$ is used for chroma component prediction, and a sample at any position in the coding block is predicted with the same model parameters $\alpha$ and $\beta$. This can cause the following disadvantages. On one hand, for coding blocks with different content characteristics, a simple linear model is used for luma-to-chroma mapping so as to implement chroma prediction, but for some coding blocks, a luma-to-chroma mapping function cannot be fitted accurately with the simple linear model, and as a result, prediction effect for some coding blocks is not accurate enough. On the other hand, during prediction, the same model parameters $\alpha$ and $\beta$ are used for samples at different positions in the coding block, and prediction accuracy at different positions in the coding block also has big difference. On the other hand, if the linear model established is not suitable, an inaccurate chroma prediction block obtained will be used as the final chroma prediction block directly, which will affect the subjective and objective quality of a reconstructed block. On the other hand, in CCLM technology, the prediction is implemented with the same linear mapping function for all samples in the coding block to obtain the chroma prediction value, however, the colour components in the same coding block are generally flat and the content characteristics are relatively similar, and in this case, if prediction is performed on all samples in the coding block, the prediction complexity will be increased and the prediction efficiency will be reduced. To summarize, in the existing CCLM technology, for some coding blocks, a deviation between a prediction value and an original value is large, which results in low prediction accuracy and quality degradation.

To this end, embodiments of the disclosure provide an encoding method. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block. First filtering is performed on the first prediction block to determine a second prediction block for the second colour component of the current block, where the second prediction block comprises prediction values of all second-colour-component samples in the current block. A residual value of the second-colour-component sample in the current block is determined according to the second prediction block.

Embodiments of the disclosure further provide a decoding method. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block. First filtering is performed on the first prediction block to determine a second prediction block for the second colour component of the current block, where the second prediction block comprises prediction values of all second-colour-component samples in the current block. A reconstructed value of the second-colour-component sample in the current block is determined according to the second prediction block.

In this way, the weighting factor can be calculated with aid of the reference sample neighbouring the current block and colour component information of the current block, correlation between the current block and neighbouring areas in terms of luma information is fully taken into consideration, and such correlation is used in chroma prediction of the current block, so as to improve accuracy of chroma prediction. Considering that human eyes have low sensitivity to chroma and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, improve coding efficiency, and thus improve coding performance.

Embodiments of the disclosure will be described in detail below with reference to the accompanying drawings.

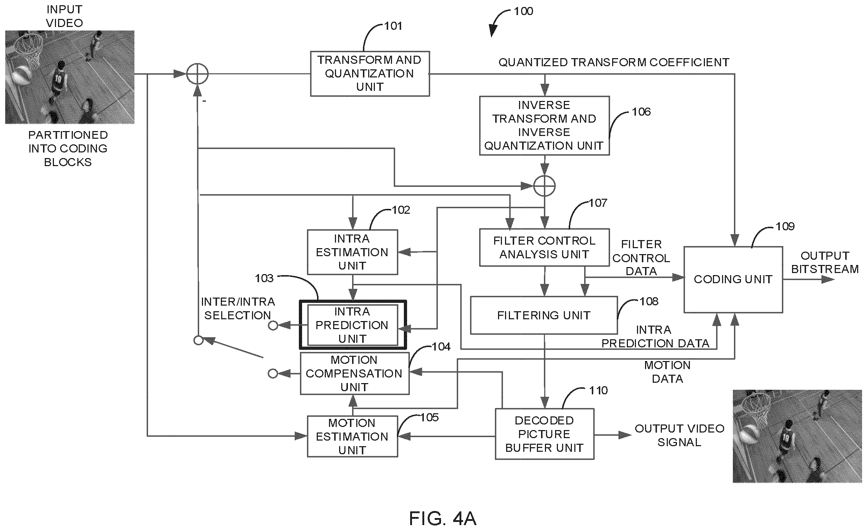

Referring to FIG. 4A, FIG. 4A is a schematic block diagram of an encoder provided in embodiments of the disclosure. As illustrated in FIG. 4A, the encoder (which is specifically a "video encoder") 100 can include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, a coding unit 109, a decoded picture buffer unit 110, and the like. The filtering unit 108 can implement deblocking filtering and sample adaptive offset (SAO) filtering. The coding unit 109 can implement header information encoding and context-based adaptive binary arithmetic coding (CABAC). For an input original video signal, one video coding block can be obtained through partitioning of a coding tree unit (CTU). Then, for residual sample information obtained after intra prediction or inter prediction, the video coding block is transformed by the transform and quantization unit 101, including transforming the residual information from the sample domain to the transform domain, and the obtained transform coefficients are quantized, so as to further reduce bit rate. The intra estimation unit 102 and the intra prediction unit 103 are configured to perform intra prediction on the coding block. Specifically, the intra estimation unit 102 and the intra prediction unit 103 are configured to determine an intra prediction mode to-be-used to encode the video coding block. The motion compensation unit 104 and the motion estimation unit 105 are configured to perform inter prediction encoding on the received video coding block relative to one or more blocks in one or more reference pictures, to provide temporal prediction information. The motion estimation performed by the motion estimation unit 105 is a process of generating a motion vector, where the motion vector can be used to estimate motion of the video coding block. Then the motion compensation unit 104 is configured to perform motion compensation based on the motion vector determined by the motion estimation unit 105. After the intra prediction mode is determined, the intra prediction unit 103 is configured to provide the selected intra prediction data to the coding unit 109, and the motion estimation unit 105 is configured to send the calculated motion vector data to the coding unit 109. In addition, the inverse transform and inverse quantization unit 106 is configured for reconstruction of the configured coding block. A residual block is reconstructed in the sample domain, and blockiness artifacts of the reconstructed residual block are removed by the filter control analysis unit 107 and the filtering unit 108, and then the reconstructed residual block is added to a prediction block of a picture in the decoded picture buffer unit 110, to generate a reconstructed coding block. The coding unit 109 is configured to encode various coding parameters and quantized transform coefficients. In the CABAC-based encoding algorithm, the context can be based on neighbouring coding blocks, and the coding unit 109 can be configured to encode information indicating the determined intra prediction mode and output a bitstream of the video signal. The decoded picture buffer unit 110 is configured to store reconstructed video coding blocks in order for prediction reference. As the video picture encoding progresses, reconstructed video coding blocks will be continuously generated, and these reconstructed video coding blocks will be stored into the decoded picture buffer unit 110.

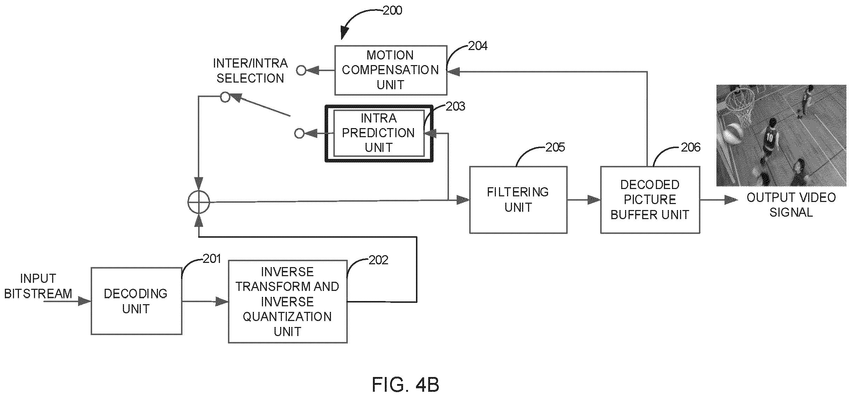

Referring to FIG. 4B, FIG. 4B is a schematic block diagram a decoder provided in embodiments of the disclosure. As illustrated in FIG. 4B, the decoder (which is specifically a "video decoder") 200 includes a decoding unit 201, an inverse transform and inverse quantization unit 202, an intra prediction unit 203, a motion compensation unit 204, a filtering unit 205, a decoded picture buffer unit 206, and the like. The decoding unit 201 can implement header information decoding and CABAC decoding. The filtering unit 205 can implement deblocking filtering and SAO filtering. After the input video signal is encoded (as illustrated in FIG. 4A), the bitstream of the video signal is output. The bitstream is input into the decoder 200. First, decoded transform coefficients are obtained by the decoding unit 201. The decoded transform coefficients are processed by the inverse transform and inverse quantization unit 202, so as to generate a residual block in the sample domain. The intra prediction unit 203 can be configured to generate prediction data of the current video coding block based on the determined intra prediction mode and data from the previous decoded block of the current frame or picture. The motion compensation unit 204 is configured to determine prediction information for the video coding block by analyzing motion vectors and other associated syntax elements, and use the prediction information to generate a prediction block of the video coding block that is being decoded. The decoded video block is formed by summing the residual block from the inverse transform and inverse quantization unit 202 and the corresponding prediction block generated by the intra prediction unit 203 or the motion compensation unit 204. The blockiness artifacts of the decoded video signal are removed by the filtering unit 205, which can improve quality of the video. The decoded video block is then stored into the decoded picture buffer unit 206. The decoded picture buffer unit 206 is configured to store reference pictures used for subsequent intra prediction or motion compensation, and is also configured to output the video signal, that is, the restored original video signal is obtained.

It should be noted that, the method in embodiments of the disclosure is mainly applied to the intra prediction unit 103 illustrated in FIG. 4A and the intra prediction unit 203 illustrated in FIG. 4B. That is, embodiments of the disclosure can be applied to an encoder, a decoder, or even both an encoder and a decoder, but embodiments of the disclosure are not limited in this regard.

It should be further noted that, when applied to the intra prediction unit 103, the "current block" specifically refers to a coding block on which intra prediction is currently to be performed. When applied to the intra prediction unit 203, the "current block" specifically refers to a coding block on which intra prediction is currently to be performed.

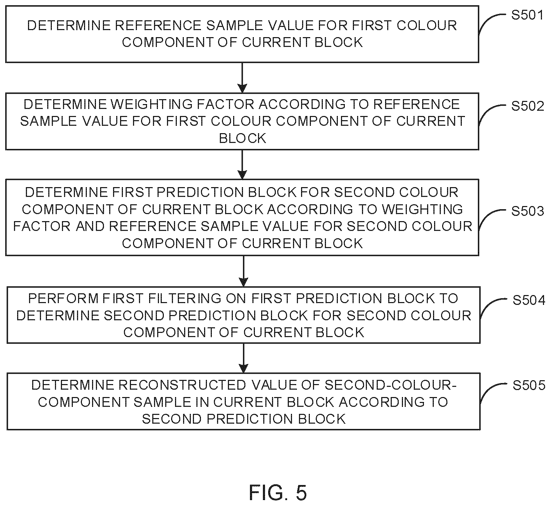

In an embodiment of the disclosure, referring to FIG. 5, FIG. 5 is schematic flowchart I of a decoding method provided in embodiments of the disclosure. As illustrated in FIG. 5, the method can include the following.

S501, a reference sample value for a first colour component of a current block is determined.

It should be noted that, the decoding method in embodiments of the disclosure can be applied to a decoding apparatus, or a decoding device (can also be referred to as a "decoder" for short) integrating the decoding apparatus. In addition, the decoding method in embodiments of the disclosure can specifically refer to an intra prediction method, and more specifically, to a weighted chroma prediction (WCP) based post-processing method.

In embodiments of the disclosure, a video picture can be partitioned into multiple coding blocks, and each coding block can include a first colour component, a second colour component, and a third colour component. The current block herein refers to a coding block on which intra prediction is currently to be performed in the video picture. In addition, assuming that a first colour component of the current block is to be predicted and the first colour component is a luma component, that is, a colour component to-be-predicted is a luma component, the current block can also be called a luma prediction block (also known as predicted luma block). Alternatively, assuming that a second colour component of the current block is to be predicted and the second colour component is a chroma component, that is, the colour component to-be-predicted is a chroma component, the current block can also be called a predicted chroma block.

It should be further noted that, in embodiments of the disclosure, reference information for the current block can include a value of a first-colour-component sample in a neighbouring area of the current block and a value of a second-colour-component sample in the neighbouring area of the current block, and these samples can be determined from decoded samples in the neighbouring area of the current block. In some embodiments, the neighbouring area of the current block can include at least one of: a top neighbouring area, a top-right neighbouring area, a left neighbouring area, or a bottom-left neighbouring area.

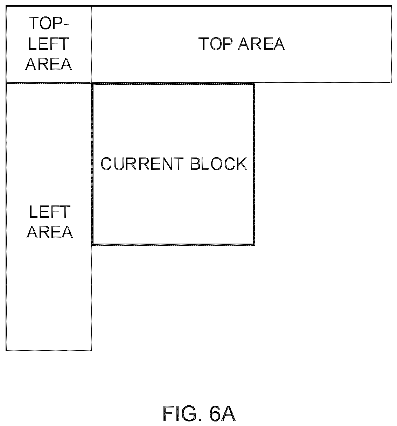

Here, the top neighbouring area and the top-right neighbouring area can be collectively regarded as a top area, and the left neighbouring area and the bottom-left neighbouring area can be collectively regarded as a left area. In addition, the neighbouring area can further include a top-left area, as illustrated in FIG. 6A. When predicting the second colour component of the current block, the top area, the left area, and the top-left area, which are neighbouring areas of the current block, can all be referred to as reference areas for the current block, and all samples in the reference areas are decoded reference samples.

It should be further noted that, in embodiments of the disclosure, the neighbouring area of the current block can be multiple rows or multiple columns neighbouring the current block. For example, the left area can include one or more columns, and the top area can include one or more rows, the number of rows or columns can be increased or decreased, which are not limited in embodiments of the disclosure.

In some embodiments, the reference sample value for the first colour component of the current block can be determined as follows. The reference sample value for the first colour component of the current block is determined according to a value of a first-colour-component sample in the neighbouring area of the current block.

It should be noted that, in embodiments of the disclosure, the reference sample for the current block can refer to a reference sample neighbouring the current block, and can also be referred to as a first-colour-component sample and a second-colour-component sample in the neighbouring area of the current block, which are referred to as "neighbouring sample" or "reference sample". Here, "neighbouring" can be spatially neighbouring, but is not limited thereto. For example, "neighbouring" can also be temporally neighbouring or spatially and temporally neighbouring. Alternatively, the reference sample for the current block can also be a reference sample obtained through some processing on a spatially neighbouring reference sample, a temporally neighbouring reference sample, or a spatially and temporally neighbouring reference sample, etc., and embodiments of the disclosure are not limited in this regard.

It should be further noted that, in embodiments of the disclosure, the first colour component is a luma component, and the second colour component is a chroma component. In this case, the value of the first-colour-component sample in the neighbouring area of the current block refers to reference luma information corresponding to the reference sample for the current block, and a value of the second-colour-component sample in the neighbouring area of the current block refers to reference chroma information corresponding to the reference sample for the current block.

It should be further noted that, in embodiments of the disclosure, the value of the first-colour-component sample is determined from the neighbouring area of the current block. Here, the neighbouring area can include only the top neighbouring area, or can include only the left neighbouring area, or can include the top neighbouring area and the top-right neighbouring area, or can include the left neighbouring area and the bottom-left neighbouring area, or can include the top neighbouring area and the left neighbouring area, or can even include the top neighbouring area, the top-right neighbouring area, and the left neighbouring area, etc., which is not limited in embodiments of the disclosure.

It should be further noted that, in embodiments of the disclosure, the neighbouring area can also be determined according to a prediction mode for the current block. In an embodiment, if the prediction mode for the current block is a horizontal mode, the reference sample is determined from samples in the top neighbouring area and/or the top-right neighbouring area; if the prediction mode for the current block is a vertical mode, the reference sample is determined from samples in the left neighbouring area and/or the bottom-left neighbouring area.

Exemplarily, if the prediction mode for the current block is the horizontal mode, the neighbouring area for chroma component prediction can be only the top neighbouring area and/or the top-right neighbouring area. If the prediction mode for the current block is the vertical mode, the neighbouring area for chroma component prediction can be only the left neighbouring area and/or the bottom-left neighbouring area.

Further, in some embodiments, in terms of determining the value of the first-colour-component sample, the method can further include the following. The value of the first-colour-component sample is determined by selecting from first-colour-component samples in the neighbouring area.

It should be noted that, among the first-colour-component samples in the neighbouring area, there can be some unimportant samples (for example, these samples have poor correlation) or some abnormal samples. To ensure accuracy of prediction, these samples need to be removed, so as to obtain a value of a valid first-colour-component sample. That is, in embodiments of the disclosure, a first sample set is formed from the first-colour-component samples in the neighbouring area of the current block. In this case, the value of the first-colour-component sample can be determined by selecting from the first sample set.

In an embodiment, the value of the first-colour-component sample can be determined by selecting from the first-colour-component samples in the neighbouring area as follows. A sample position to-be-selected is determined according to a position and/or a colour component intensity of the first-colour-component sample in the neighbouring area. The value of the first-colour-component sample is determined from the neighbouring area according to the sample position to-be-selected.

It should be noted that, in embodiments of the disclosure, the colour component intensity can be represented by colour component information, for example, reference luma information and reference chroma information. Here, a greater value of the colour component information represents a higher colour component intensity. In this way, selection from the first-colour-component samples in the neighbouring area can be performed according to the sample position or according to the colour component intensity, so as to determine a valid first-colour-component sample from the sample thus selected, thereby determining the value of the first-colour-component sample.

In some embodiments, the reference sample value for the first colour component of the current block can be further determined as follows. Second filtering is performed on the value of the first-colour-component sample to obtain a filtered neighbouring sample value for the first colour component of the current block. The reference sample value for the first colour component of the current block is determined according to the filtered neighbouring sample value for the first colour component of the current block.

In embodiments of the disclosure, the number of filtered neighbouring sample values for the first colour component of the current block is less than the number of values of the first-colour-component samples.

In embodiments of the disclosure, the second filtering can be down-sampling filtering. The first colour component is a luma component. Here, down-sampling filtering can be performed on the reference luma information in such a manner that the spatial resolution of the filtered reference luma information is the same as the spatial resolution of the reference chroma information. Exemplarily, if the size of the current block is 2M $\times$ 2N, and the amount of reference luma information is 2M + 2N, then the amount of reference luma information can become $M$ + N after down-sampling filtering.

In some embodiments, the reference sample value for the first colour component of the current block can be further determined as follows. The reference sample value for the first colour component of the current block is determined based on a reconstructed value of a first-reference-colour-component sample in the current block.

It should be noted that, in embodiments of the disclosure, the first reference colour component can be a luma component. In this case, the reconstructed value of the first-reference-colour-component sample in the current block is reconstructed luma information of the current block.

Further, in some embodiments, the reference sample value for the first colour component of the current block can be further determined as follows. Third filtering is performed on the reconstructed value of the first-reference-colour-component sample in the current block to obtain a filtered sample value of the first-reference-colour-component sample in the current block. The reference sample value for the first colour component of the current block is determined according to the filtered sample value of the first-reference-colour-component sample in the current block.

In embodiments of the disclosure, the number of filtered sample values of the first-reference-colour-component samples in the current block is greater than the number of reconstructed values of the first-reference-colour-component samples in the current block.

In embodiments of the disclosure, the third filtering can be down-sampling filtering. The first reference colour component is a luma component. Down-sampling filtering can be performed on the reconstructed luma information of the current block. For example, if the amount of reconstructed luma information of the current block is $2M \times 2N$, then the amount of reconstructed luma information of the current block can become $M \times N$ after down-sampling filtering.

It should be noted that, in embodiments of the disclosure, with regard to the filtering of the reference information before weighted prediction, filtering can be performed only on the reference luma information, or can be performed only on the reconstructed luma information, or can be performed on both the reference luma information and the reconstructed luma information, which is not limited herein. Then, with regard to calculating a luma difference, the luma difference can be an absolute value of a difference between the reference luma information and the reconstructed luma information, or can be an absolute value of a difference between the reference luma information subject to filtering and the reconstructed luma information, or can be an absolute value of a difference between the reference luma information and the reconstructed luma information subject to filtering, or can even be an absolute value of a difference between the reference luma information subject to filtering and the reconstructed luma information subject to filtering.

It should be further noted that, in embodiments of the disclosure, the reference sample value for the first colour component of the current block can also be set to luma difference information. Therefore, in a possible implementation, the reference sample value for the first colour component of the current block is set to an absolute value of a difference between the value of the first-colour-component sample and the reconstructed value of the first-reference-colour-component sample.

In another possible implementation, the reference sample value for the first colour component of the current block is set to an absolute value of a difference between the filtered neighbouring sample value for the first colour component and the reconstructed value of the first-reference-colour-component sample.

In another possible implementation, the reference sample value for the first colour component of the current block is set to an absolute value of a difference between the filtered neighbouring sample value for the first colour component and the filtered sample value of the first-reference-colour-component sample.

In another possible implementation, the reference sample value for the first colour component of the current block is set to an absolute value of a difference between the value of the first-colour-component sample and the filtered sample value of the first-reference-colour-component sample.

That is, according to reference information of the current block, such as the reference luma information of the neighbouring area of the current block, the reconstructed luma information of the current block, filtering can be performed before weighted prediction. Specifically, down-sampling filtering can be performed on the reference luma information of the neighbouring area of the current block, or down-sampling filtering can be performed on the reconstructed luma information of the current block, or down-sampling filtering can be performed on both the reference luma information and the reconstructed luma information, or down-sampling filtering is performed on neither the reference luma information nor the reconstructed luma information. Then, the luma difference information can be determined according to different combinations of the above cases, and the luma difference information can be used as the reference sample value for the first colour component of the current block.

S502, a weighting factor is determined according to the reference sample value for the first colour component of the current block.

It should be noted that, in embodiments of the disclosure, the weighting factor can have determined according to the reference sample value for the first colour component of the current block as follows. A value corresponding to the reference sample value for the first colour component in a preset mapping is determined. The weighting factor is set to be equal to the value.

It can be understood that, in embodiments of the disclosure, the reference sample value for the first colour component can be the absolute value of the difference between the filtered neighbouring sample value for the first colour component of the current block and the filtered sample value of the first-reference-colour-component sample in the current block. The first reference colour component is the first colour component, and the first colour component is a colour component different from a second colour component to-be-predicted in embodiments of the disclosure.

Exemplarily, it is assumed that the first colour component is a chroma component and the second colour component is a luma component, and embodiments of the disclosure mainly aims at predicting a chroma component of a sample to-be-predicted in the current block. Firstly, at least one sample to-be-predicted in the current block is selected, and a luma difference (represented by $|\Delta C_k|$) between reconstructed chrominance thereof and reference chrominance of the neighbouring area is calculated. Chroma differences of samples to-be-predicted at different positions relative to the neighbouring area are different. The position of the reference sample with the minimum chroma difference will vary according to the sample to-be-predicted in the current block. Generally, the chroma difference represents the degree of similarity between chrominance. A smaller $|\Delta C_k|$ indicates higher similarity between chroma values, and the corresponding weighting factor (represented by $w_k$) can be given a greater value; on the contrary, a greater $|\Delta C_k|$ indicates lower similarity between chroma values, and $w_k$ can be given a smaller value. That is, $w_k$ and $|\Delta C_k|$ are in approximately inverse proportion. In this way, the preset mapping can be established according to $|\Delta C_k|$, as illustrated below:

$$w_k = f(|\Delta C_k|) \tag{1}$$

Here, taking formula (1) as an example, $|\Delta C_k|$ represents the reference sample value for the first colour component, $f(|\Delta C_k|)$ represents the value corresponding to the reference sample value for the first colour component in the preset mapping, and $w_k$ represents the weighting factor, that is, $w_k$ is set to be equal to $f(|\Delta C_k|)$.

It should be further noted that, in embodiments of the disclosure, if the number of reference sample values for the second colour component is N, the number of weighting factors is N accordingly, where the sum of the N weighting factors is equal to 1, and each of the weighting factors is a value greater than or equal to 0 and less than or equal to 1, i. e. $0 \le w_k \le 1$. However, it should be noted that, "the sum of the N weighting factors is equal to 1" is only a theoretical concept, and in actual implementation of fixed-point, the absolute value of the weighting factor can be greater than 1.

It can be understood that, in the probability theory and related fields, a normalized exponential function, or referred to as a Softmax function, is a generalization of a logic function. It can "convert" an N-dimensional vector z of arbitrary real numbers into another N-dimensional vector $\sigma(z)$, such that the range of each element is within (0, 1), and the sum of all the elements is 1. The Softmax function is often used as a nonlinear activation function for a multi-class classification neural network. The Softmax function is as follows:

$$\text{Softmax}(x_i) = \frac{e^{x_i}}{\sum_j e^{x_j}} \tag{2}$$

However, although the Softmax function can satisfy conditional constraints of $w_k$, its function value increases as the value of the vector element increases, which does not comply with the approximately inverse proportion between $w_k$ and $|\Delta C_k|$. Therefore, in order to adapt to the design of $w_k$ and meet requirements for nonlinearity of $w_k$, the $f$ function of formula (1) can be implemented by a Softmax function with parameter $\gamma$, as illustrated in detail below:

$$f(x_i) = \frac{e^{\gamma x_i}}{\sum_j e^{\gamma x_j}} \tag{3}$$

In order to comply with the approximately inverse proportion between $w_k$ and $|\Delta C_k|$, $\gamma$ can be defined as a negative number. That is, if the first-reference-colour-component parameter is $|\Delta C_k|$, the mapping between $|\Delta C_k|$ and $w_k$ can be expressed as:

$$w_k = f(\gamma, |\Delta C_k|) = \frac{e^{\gamma |\Delta C_k|}}{\sum_j e^{\gamma |\Delta C_j|}} \tag{4}$$

According to formula (4), in some embodiments, the value corresponding to the reference sample value for the first colour component in the preset mapping can be determined as follows. A first factor is determined. A first product value is determined according to the first factor and the reference sample value for the first colour component. A value corresponding to the first product value in the preset mapping is determined.

It should be noted that, in embodiments of the disclosure, the first factor is a constant value less than zero. Taking the Softmax function as an example, in formula (4), $\gamma$ represents the first factor, $|\Delta C_k|$ represents the first-reference-colour-component parameter, $\gamma|\Delta C_k|$ represents the first product value, and $w_k$ represents the weighting factor, where k = 1, 2, ..., N.

In an embodiment, the first factor can be determined as follows. The first factor is a preset constant value.

It should be noted that, in this case, with regard to $\gamma$, a distribution of weighting factors for neighbouring chrominance can be adjusted according to relatively flat characteristics of chrominance, so as to determine a distribution of weighting factors that is suitable for chroma prediction of a natural picture. In order to determine parameter $\gamma$ suitable for chroma prediction of a natural picture, a given set of $\gamma$ is traversed, and whether $\gamma$ is suitable or not is determined according to differences between predicted chrominance and original chrominance with respect to different $\gamma$. Exemplarily, $\gamma$ can be $-2^\varepsilon$, where $\varepsilon \in \{1, 0, -1, -2, -3\}$. It is found from experiments that in this set of $\gamma$, the optimal value of $\gamma$ is $-0.25$. Therefore, in an embodiment, $\gamma$ can be set to $-0.25$, but embodiments of the disclosure are not limited thereto.

In another embodiment, the first factor can be determined as follows. A value of the first factor can be determined according to a size parameter of the current block.

Further, in some embodiments, the method can further include the following. The value of the first factor is determined according to a preset mapping look-up table between the size parameter of the current block and the value of the first factor.

Here, the size parameter of the current block can include at least one of: a width of the current block, or a height of the current block.

It should be noted that, in embodiments of the disclosure, the value of the first factor can be set by means of classification. For example, the size parameter of the current block is classified into three categories, and the value of the first factor corresponding to each category is determined. In this case, in embodiments of the disclosure, the mapping look-up table between the size parameter of the current block and the value of the first factor can also be pre-stored, and then the value of the first factor can be determined according to the look-up table. Exemplarily, Table 1 shows a correspondence between the first factor and the size parameter of the current block provided in embodiments of the disclosure. It should be noted that, Table 1 is merely an exemplary look-up table, and is not intended for limitation.

Table 1

| Size parameter of current block | First factor |
| --- | --- |
| Min(W, H)<=4 | -0.125 |
| Min(W, H)>4&& Min(W, H)<=16 | -0.0833 |
| Min(W, H)>16 | -0.0625 |

In another embodiment, the first factor can be determined as follows. The value of the first factor is determined according to the number of reference samples for the current block.

Further, in some embodiments, the method can further include the following. The value of the first factor is determined according to a preset mapping look-up table between the number of reference samples for the current block and the value of the first factor.

It should be noted that, in embodiments of the disclosure, the number of reference samples can be classified into three categories, and the value of the first factor can also be set by means of classification. For example, the number of reference samples for the current block is classified into three categories, and the value of the first factor corresponding to each category is determined. In this case, in embodiments of the disclosure, the mapping look-up table between the number of reference samples for the current block and the value of the first factor can also be pre-stored, and then the value of the first factor can be determined according to the look-up table. Exemplarily, Table 2 shows a correspondence between the first factor and the number of reference samples for the current block provided in embodiments of the disclosure. It should be noted that, Table 2 is only an exemplary look-up table, and is not intended for limitation.

Table 2

| Number of reference samples | First factor |
| --- | --- |
| 0<R<16 | -0.1113 |
| 16<=R<32 | -0.0773 |
| R>=32 | -0.0507 |

Further, for the first product value, the first product value can be determined according to the first factor and the reference sample value for the first colour component as follows. The first product value is set to be equal to a product of the first factor and the reference sample value for the first colour component. Alternatively, the first product value is set to be equal to a numerical value obtained by right-shifting the reference sample value for the first colour component, where the number of bits right shifted is equal to the first factor. Alternatively, the first product value is set to a value obtained by performing addition and bit shift on the reference sample value for the first colour component according to the first factor.

Exemplarily, assuming that the first factor is equal to 0.25, and the reference sample value for the first colour component is represented by Ref, then the first product value can be equal to $0.25 \times Ref$, and $0.25 \times Ref$ can also be represented by $Ref/4$, that is, $Ref>>2$. In addition, in fixed-point calculation, a floating-point number can be converted into addition and shift operations. That is, there is no limitation on the manner for calculation of the first product value.

It can also be understood that, in embodiments of the disclosure, the first colour component can also be a luma component, and the second colour component is a chroma component. In this case, at least one sample to-be-predicted in the current block is selected, and a luma difference (represented by $|\Delta Y_k|$) between reconstructed luminance thereof and reference luminance of the neighbouring area is calculated. A smaller $|\Delta Y_k|$ indicates higher similarity between luma values, and the corresponding weighting factor (represented by $w_k$) can be given a greater value; on the contrary, a larger $|\Delta Y_k|$ indicates lower similarity between luma values, and $w_k$ can be given a smaller value. That is, when calculating the weighting factor, the reference sample value for the first colour component can also be $|\Delta Y_k|$, and then the weighting factor can be calculated.

It should be noted that, when predicting the chroma component of the sample to-be-predicted in the current block, since a chroma component value of the sample to-be-predicted cannot be directly determined, a chroma difference $|\Delta C_k|$ between the reference sample and the sample to-be-predicted cannot be directly obtained. However, there is strong correlation between components in a local area of the current block. In this case, $|\Delta C_k|$ can be derived according to a luma difference $|\Delta Y_k|$ between the reference sample and the sample to-be-predicted. That is, $|\Delta C_k|$ can be obtained according to a product of $|\Delta Y_k|$ and a second factor. In this way, the first product value is equal to the product of the first factor and $|\Delta Y_k|$.

In other words, in embodiments of the disclosure, the reference sample value for the first colour component can be $|\Delta C_k|$, that is, an absolute value of the chroma difference. Alternatively, the reference sample value for the first colour component can be $|\Delta Y_k|$, that is, an absolute value of the luma difference. Alternatively, the reference sample value for the first colour component can be $|\alpha \Delta Y_k|$, that is, a product of the absolute value of the luma difference and a preset multiplier. Here, the preset multiplier is the second factor described in embodiments of the disclosure.

Further, for the second factor, in an embodiment, the method can include the following. The second factor is determined by performing least squares calculation on a first-colour-component value of the reference sample and a second-colour-component value of the reference sample.

That is, assuming that the number of reference samples is N, the first-colour-component value of the reference sample is the reference luma information for the current block, and the second-colour-component value of the reference sample is the reference chroma information for the current block, then least squares calculation can be performed on chroma component values and luma component values of the N reference samples, so as to obtain the second factor. Exemplarily, the least squares regression calculation is as follows:

$$\alpha = \frac{N \sum_k L_k \cdot C_k - \sum_k C_k \sum_k L_k}{N \sum_k L_k \cdot L_k - \sum_k L_k \sum_k L_k} \qquad (5)$$

$L_k$ represents a luma component value of a $k^{th}$ reference sample. $C_k$ represents a chroma component value of the $k^{th}$ reference sample. N represents the number of reference samples. $\alpha$ represents the second factor, which can be calculated by means of least squares regression. It should be noted that, the second factor can also be a fixed value or a value subject to fine adjustment on a fixed value, which is not specifically limited in embodiments of the disclosure.

In addition, for the preset mapping, the preset mapping can be a preset function relationship. In some embodiments, the preset mapping can be a Softmax function. The Softmax function is normalized exponential function. However, in embodiments of the disclosure, normalization may not be needed, and the value thereof is not limited to the range of [0, 1].

Exemplarily, the reference sample value for the first colour component is $|\Delta Y_k|$, and then a weighting factor $w_k$ corresponding to the $k^{th}$ reference sample can be calculated according to formula (4), or can be replaced by the following formulas:

$$w_k = \frac{e^{-|\Delta Y_k|}}{\sum_j e^{-|\Delta Y_j|}} \qquad (6)$$

$$w_k = \frac{e^{\frac{-|\Delta Y_k|}{S}}}{\sum_j e^{\frac{-|\Delta Y_j|}{S}}} \qquad (7)$$

S represents a control parameter, and a relationship between S and the first factor ($\gamma$) is $\gamma = -\frac{1}{S}$.

Exemplarily, a value of S depends on the size parameter of the current block, where the size parameter of the current block includes the width and the height of the current block. In a possible implementation, if the minimum value between the width and the height is less than or equal to 4, S = 8. If the minimum value between the width and the height is greater than 4 and less than or equal to 16, S = 12. If the minimum value between the width and the height is greater than 16, S = 16. In another possible implementation, if the minimum value between the width and the height is less than or equal to 4, S = 7. If the minimum value between the width and the height is greater than 4 and less than or equal to 16, S = 11. If the minimum value between the width and the height is greater than 16, S = 15. Alternatively, the value of S depends on the number (R) of reference samples for the current block. In a possible implementation, if R < 16, S = 8. If $16 \leq R < 32$, S = 12. If $R \geq 16$, S = 16. Embodiments of the disclosure are not limited in this regard.

It should be further noted that, in addition to the Softmax function, in other embodiments, the preset mapping can be a weighting function that is in inverse proportion with the reference sample value for the first colour component.

Exemplarily, the reference sample value for the first colour component is $|\Delta Y_k|$, and then the Softmax function of formula (4) can also be replaced by the following formulas:

$$w_k = \frac{\frac{1}{\gamma |\Delta Y_k| + \text{offset}}}{\sum_{j=1}^{N}\left(\frac{1}{\gamma |\Delta Y_j| + \text{offset}}\right)} \qquad (8)$$

$$w_k = \frac{\frac{1}{e^{\gamma |\Delta Y_k|} + \text{offset}}}{\sum_{j=1}^{N}\left(\frac{1}{e^{\gamma |\Delta Y_j|} + \text{offset}}\right)} \qquad (9)$$

Where k = 1,2, ... N, and offset = 1 or 2 or 0.5 or 0.25.

In this way, when the preset mapping is the preset function relationship, the preset mapping can be as illustrated in formula (4), or can be as illustrated in formula (6) or formula (7), or can be as illustrated in formula (8) or formula (9), or can even be another function model of the weighting factor that is constructed by fitting the tendency that higher similarity between the reference luma value of the reference sample and the reconstructed luma value of the sample to-be-predicted in the current block leads to higher importance of a reference chroma value of the reference sample to the sample to-be-predicted in the current block. Embodiments of the disclosure are not limited in this regard.

In addition, in some embodiments, the preset mapping can also be in the form of a preset look-up table. That is, in embodiments of the disclosure, operations can also be simplified, for example, some calculations can be eliminated by means of an array element look-up table. For the preset mapping, an array element value can be determined according to a preset mapping look-up tablet between the reference sample value for the first colour component, the first factor, and an array element, then a value corresponding to the array element value in the preset mapping can be determined, and the weighting factor can be set to be equal to the value.

Specifically, the f model for weighting factor calculation can be implemented through simplified operations, for example, by means of a look-up table. A luma difference $|\Delta Y_k|$ of a sample *(i, j)* to-be-predicted can also be represented by $|\Delta Y_{kij}|$. In this way, the weighting factor is calculated with the f model, i. e. $w_{kij} = f(|\Delta Y_{kij}|)$. Here, a numerator in the f model can be stored by taking the independent variable $|\Delta Y_{kij}|$ and the number of categories of S as an array index(es). Subsequent operations that are the same as calculation of the numerator in the f model are implemented by means of the look-up table, so as to eliminate calculations on the numerator and a denominator.

In embodiments of the disclosure, the storage can be full storage or partial storage.

In an embodiment, the full storage means storing all numerators corresponding to the range of $|\Delta Y_{kij}|$ and the number of categories of S, and an array space with a size of the range of $|\Delta Y_{kij}|$ multiplied by the number of categories of S is required for full storage. The size of the array that needs to be stored is the size of the range of $|\Delta Y_{kij}|$, and in this case, the performance remains unchanged.

Exemplarily, taking a 10-bit sample and formula (7) as an example, the range of the variable $|\Delta Y_{kij}|$ is integers within 0~1023, the number of categories of S is 3, and the numerators are fully stored by taking $|\Delta Y_{kij}|$ and the number of categories of S as indexes for a two-dimensional array storMole:

$$\text{flag}_S = \begin{cases} 0, & S = 8 \\ 1, & S = 12 \\ 2, & S = 16 \end{cases} \qquad (10)$$

In this case, the weighting factor calculation of formula (7) can be simplified into:

$$w_{kij} = \frac{\text{storMole}[|\Delta Y_{kij}|][\text{flag}_S]}{\sum_{k=1}^{N} \text{storMole}[|\Delta Y_{kij}|][\text{flag}_S]}, \quad k = 1,2, \dots N \qquad (11)$$

In this way, elements in the two-dimensional array storMole[index 1][index 2] are illustrated in Table 3.

Table 3

| Index 1 ($|\Delta Y_{kij}|$) | Index 2 (flags) | Array element |
|---|---|---|
| 0 | 0 | $e^{\frac{-0}{8}}$ |
| 1 | 0 | $e^{\frac{-1}{8}}$ |
| ... | ... | ... |
| 1023 | 0 | $e^{\frac{-1023}{8}}$ |
| 0 | 1 | $e^{\frac{-0}{12}}$ |
| 1 | 1 | $e^{\frac{-1}{12}}$ |
| ... | ... | ... |
| 1023 | 1 | $e^{\frac{-1023}{12}}$ |
| 0 | 2 | $e^{\frac{-0}{16}}$ |
| 1 | 2 | $e^{\frac{-1}{16}}$ |
| ... | ... | ... |
| 1023 | 2 | $e^{\frac{-1023}{16}}$ |

Further, for full storage, a corresponding array offset can also be set according to the categories of S, and then the numerators are fully stored by taking $|\Delta Y_{kij}|$ plus offset as an index for a one-dimensional array ostorMole, which is specifically as follows:

$$offset_S = \begin{cases} 0, & S = 8 \\ 1024, & S = 12 \\ 2048, & S = 16 \end{cases} \qquad (12)$$

In this case, the weighting factor calculation of formula (7) can be simplified into:

$$w_{kij} = \frac{ostorMole[|\Delta Y_{kij}|+offset_S]}{\sum_{k=1}^{N} ostorMole[|\Delta Y_{kij}|+offset_S]}, \quad k = 1,2,\ldots N \qquad (13)$$

In this way, elements in the one-dimensional array ostorMole [index] are illustrated in Table 4.

Table 4

| Index ($|\Delta Y_{kij}|$ + offsets) | Array element |
|---|---|
| 0 | $e^{\frac{-0}{8}}$ |

(continued)

| Index ($|\Delta Y_{kij}| +$ offsets) | Array element |
|---|---|
| 1 | $e^{\frac{-1}{8}}$ |
| ... | ... |
| 1023 | $e^{\frac{-1023}{8}}$ |
| 0+1024 | $e^{\frac{-0}{12}}$ |
| 1+1024 | $e^{\frac{-1}{12}}$ |
| ... | ... |
| 1023+1024 | $e^{\frac{-1023}{12}}$ |
| 0+2048 | $e^{\frac{-0}{16}}$ |
| 1+2048 | $e^{\frac{-1}{16}}$ |
| ... | ... |
| 1023+2048 | $e^{\frac{-1023}{16}}$ |

In another embodiment, partial storage refers to storing part of numerator values for weighting factor calculation. Numerator values corresponding to part of the range of $|\Delta Y_{kij}|$ and/or part of the categories of S can be stored, the value of the $f$ model which is not chosen for storage can be 0 by default, and the size of the array that needs to be stored is the size of the selected range of $|\Delta Y_{kij}|$ multiplied by the number of the selected categories of S.

Exemplarily, taking a 10-bit sample and formula (7) as an example, assuming that numerator values corresponding to integers within the range of 0~99 for $|\Delta Y_{kij}|$ and three categories of S are selected for partial storage, then the range of $|\Delta Y_{kij}|$ is integers within 0-99, the number of categories of S is 3, and the numerators are stored by taking such $|\Delta Y_{kij}|$ and such number of categories of S as indexes for a two-dimensional array partstorMole:

$$\text{pflag}_S = \begin{cases} 0, & S = 8 \\ 1, & S = 12 \\ 2, & S = 16 \end{cases} \tag{14}$$

In this case, the weighting factor calculation of formula (7) can be simplified into:

$$w_{kij} = \begin{cases} \dfrac{\text{partstorMole}\big[|\Delta Y_{kij}|\big][\text{pflag}_S]}{\sum_{k=1}^{N}\text{partstorMole}\big[|\Delta Y_{kij}|\big][\text{pflag}_S]}, & |\Delta Y_{kij}| \leq 99 \\ 0, & |\Delta Y_{kij}| > 99, \end{cases} \tag{15}$$

In this way, elements in the two-dimensional array partstorMole[index 1] [index 2] are illustrated in Table 5.

Table 5

| Index 1 ($|\Delta Y_{kij}|$) | Index 2 ($\text{pflag}_s$) | Array element |
|---|---|---|
| 0 | 0 | $e^{\frac{-0}{8}}$ |
| 1 | 0 | $e^{\frac{-1}{8}}$ |
| ... | ... | ... |

(continued)

| Index 1 ($|\Delta Y_{kij}|$) | Index 2 ($pflag_s$) | Array element |
|---|---|---|
| 99 | 0 | $e^{\frac{-99}{8}}$ |
| 0 | 1 | $e^{\frac{-0}{12}}$ |
| 1 | 1 | $e^{\frac{-1}{12}}$ |
| ... | ... | ... |
| 99 | 1 | $e^{\frac{-99}{12}}$ |
| 0 | 2 | $e^{\frac{-0}{16}}$ |
| 1 | 2 | $e^{\frac{-1}{16}}$ |
| ... | ... | ... |
| 99 | 2 | $e^{\frac{-99}{16}}$ |

That is, the storage range of partial storage can be determined according to actual needs, and is not limited to integers within 100 for $|\Delta Y_{kij}|$ and 3 categories of $S$ in the example. Likewise, for partial storage, a corresponding offset can also be set for the selected categories of S, so as to open up a one-dimensional storage space for storage, and embodiments of the disclosure are not limited in this regard. In addition, for Table 3~Table 5, in order to perform fixed-point calculation, an integer value scaled up can also be stored. In this case, corresponding scale-down operation needs to be performed after the prediction value is determined.

In this way, the weighting factor can be determined according to the reference sample value (such as $|\Delta Y_{kij}|$) for the first colour component, and the weighting factor can specifically include N weighting factors, namely $w_1$, $w_2$, ..., $w_N$, where N indicates the number of reference sample values for the second colour component. Here, theoretically, the sum of the $N$ weighting factors is equal to 1, and each of the weighting factors is a value greater than or equal to 0 and less than or equal to 1. However, it should be noted that, "the sum of the N weighting factors is equal to 1" is only a theoretical concept, and in actual implementation of fixed-point, the absolute value of the weighting factor can be greater than 1.

S503, a first prediction block for the second colour component of the current block is determined according to the weighting factor and a reference sample value for the second colour component of the current block.

It should be noted that, in embodiments of the disclosure, that is, the first prediction block comprises the prediction values of at least part of the second-colour-component samples in the current block.

It should be further noted that, in embodiments of the disclosure, in terms of determining the reference sample value for the second colour component of the current block, the method can further include the following. The reference sample value for the second colour component of the current block is determined according to a value of a second-colour-component sample in the neighbouring area of the current block.

Here, the neighbouring area can include at least one of: a top neighbouring area, a top-right neighbouring area, a left neighbouring area, or a bottom-left neighbouring area.

In an embodiment, the method can further include the following. Fourth filtering is performed on the value of the second-colour-component sample in the neighbouring area of the current block, to obtain a filtered neighbouring sample value for the second colour component of the current block. The reference sample value for the second colour component of the current block is determined according to the filtered neighbouring sample value for the second colour component of the current block.

In embodiments of the disclosure, the number of filtered neighbouring sample values for the second colour component of the current block is greater than the number of values of the second-colour-component samples in the neighbouring area of the current block.

In embodiments of the disclosure, the fourth filtering can be up-sampling filtering, and an up-sampling rate is a positive integer multiple of 2.

That is, the first colour component is a luma component, and the second colour component is a chroma component, and up-sampling filtering can be performed on the reference chroma component in embodiments of the disclosure, such that the spatial resolution of the filtered reference chroma information is the same as the spatial resolution of the reference luma information. Exemplary, if there are 2M+2N pieces of reference luma information and M+N pieces of reference chroma information, after up-sampling filtering on the reference chroma information, there will be 2M+2N pieces of reference chroma information.

It should be further noted that, in embodiments of the disclosure, no matter whether it is the second filtering performed on the value of the first-colour-component sample in the neighbouring area, or the third filtering performed on the reconstructed value of the first-reference-colour-component sample in the current block, the two types of filtering can be down-sampling filtering. The second filtering can be performed by using a first filter, the third filtering can be performed by using a second filter. The first filter and the second filter can be down-sampling filters. Due to different data to-be-processed, down-sampling rates of these filters can also be different. Therefore, the first filter can be the same as or different from the second filter. The fourth filtering can be performed on the value of the second-colour-component sample in the neighbouring area. The fourth filtering can be performed by using a third filter. If the fourth filtering is up-sampling filtering, the third filter can be an up-sampling filter. In addition, the first filter, the second filter, and the third filter can all be neural-network filters, which are not limited in this regard.

It can be understood that, assuming that the first colour component is a luma component and the second colour component is a chroma component, since the spatial resolution of the value (namely, reference luma information) of the first-colour-component sample in the neighbouring area, the spatial resolution of the value (namely, reference chroma information) of the second-colour-component sample in the neighbouring area, and even the spatial resolution of the reconstructed value (namely, reconstructed luma information) of the first-reference-colour-component sample in the current block will be affected by colour format information, the second filtering, the third filtering, or the fourth filtering can also be performed according to the current colour format information. Taking the fourth filtering as an example below, in some embodiments, the method can further include the following. Based on the colour format information, the fourth filtering is performed on the value of the second-colour-component sample in the neighbouring area of the current block, to obtain the filtered neighbouring sample value for the second colour component of the current block.

In an embodiment, for the fourth filtering, the method can further include the following. If the colour format information indicates 4:2:0 sampling, up-sampling filtering is performed on the value of the second-colour-component sample in the neighbouring area of the current block, where an up-sampling rate is a positive integer multiple of 2.

It should be noted that, in embodiments of the disclosure, the colour format information can include 4:4:4 sampling, 4:2:2 sampling, 4:1:1 sampling, 4:2:0 sampling, and the like. If the colour format information indicates a video with 4:4:4 sampling (also represented by YUV444), that is, the spatial resolution of the luminance is equal to the spatial resolution of the chrominance, no operation needs to be performed on the reference chroma information. If the colour format information indicates a video with chroma subsampling characteristics such as 4:2:2 sampling (also represented by YUV422), or 4:1:1 sampling (also represented by YUV411), or 4:2:0 sampling (also represented by YUV420), that is, the spatial resolution of the luminance is inconsistent with the spatial resolution of the chrominance, and the spatial resolution of the chroma component is lower than the spatial resolution of the luma component, then up-sampling filtering needs to be performed on the reference chroma information obtained from the neighbouring area.

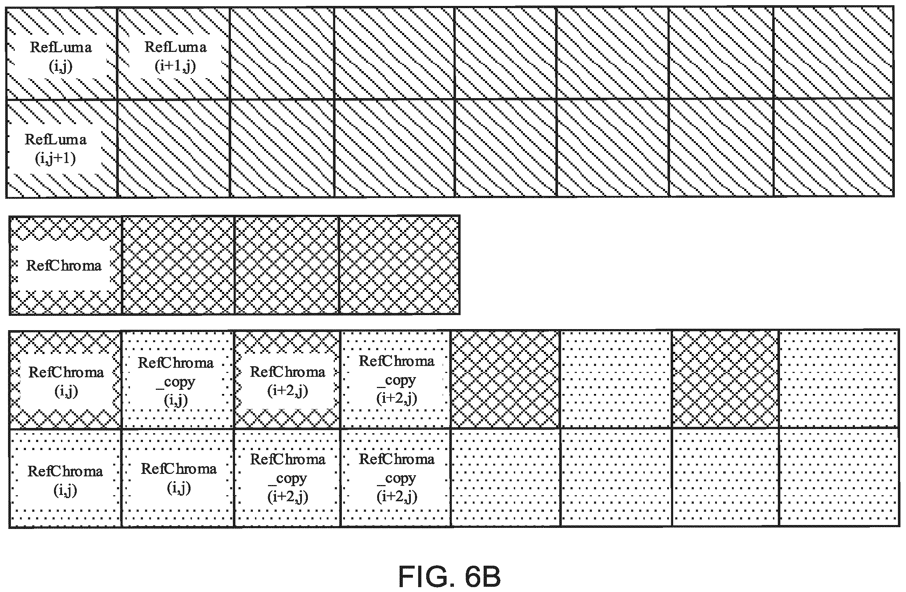

In this way, with regard to up-sampling filtering performed on the reference chroma information, the manner for the up-sampling filtering can be any one of linear interpolation methods, such as nearest neighbour interpolation, bilinear interpolation, bicubic interpolation, mean interpolation, median interpolation, copy interpolation, etc. Alternatively, the manner for up-sampling filtering can be any one of nonlinear interpolation methods, such as a wavelet transform-based interpolation algorithm or an edge information-based interpolation algorithm. Alternatively, up-sampling filtering can also be performed based on a convolutional neural network (CNN). Embodiments of the disclosure are not limited in this regard. Exemplarily, referring to FIG. 6B, a YUV420 video format and copy interpolation are taken as an example for illustration, and an example of $4\times1$ reference chroma information and $8\times2$ reference luma information is illustrated herein. A $8\times2$ diagonal-filled block represents reference luma information, a $4\times1$ grid-filled block represents collocated reference chroma information, and each sample in the $4\times1$ grid-filled block is equivalent to a top-left sample in each $2\times2$ sub-block in the $8\times2$ chroma block subject to up-sampling filtering, i. e. the sample value of each chroma sample in the $2\times2$ sub-block subject to copy interpolation is the same. Specifically, for each $2\times2$ sub-block, the other three chroma samples (dot-filled blocks) are all copied from the top-left sample (grid-filled block).

Further, after the reference sample value for the second colour component of the current block is determined, in some embodiments, for S503, the first prediction block for the second colour component of the current block can be determined according to the weighting factor and the reference sample value for the second colour component of the current block as follows. A weighted value obtained by multiplying the reference sample value for the second colour component by a corresponding weighting factor is determined. A prediction value of a second-colour-component sample in the first prediction block is set to be equal to a sum of $N$ weighted values, where $N$ represents the number of reference sample values for the second colour component, and $N$ is a positive integer.

That is, if the number of the reference sample values for the second colour component is $N$, a weighted value (namely $w_k C_k$) obtained by multiplying each reference sample value for the second colour component by a corresponding weighting factor is firstly determined, and then the sum of the N weighted values is used as the prediction value of the second-colour-component sample in the prediction block. Specifically, the formula for calculation is as follows:

$$C_{i,j}^{pred} = \sum_{k=1}^{N} w_k C_k = w_1 C_1 + w_2 C_2 + \cdots + w_N C_N \qquad (16)$$

Exemplarily, an absolute luma difference is firstly calculated according to reconstructed luma information at position (i, j) in the current block and reference luma information of the neighbouring area, and then the weighting factor is calculated according to the Softmax function, so as to obtain a prediction value of a chroma component at position (i, j) in the prediction block according to formula (16). In particular, it should be noted that, in this way, it is conducive to parallel processing and higher calculation speed.

In embodiments of the disclosure, it is assumed that the width of the first prediction block is *predSizeW,* the height of the first prediction block is *predSizeH,* the width of the current block is *nTbW,* and the height of the current block is *nTbH,* then *predSizeH* is less than or equal to *nTbH,* or *predSizeW* is less than or equal to *nTbW.* That is, the first prediction block includes predictions values of at least part of the second-colour-component samples in the current block.

S504, first filtering is performed on the first prediction block to determine a second prediction block for the second colour component of the current block.

S505, a reconstructed value of a second-colour-component sample in the current block is determined according to the second prediction block.

It should be noted that, in embodiments of the disclosure, if the first prediction block comprises prediction values of some of the second-colour-component samples in the current block, then up-sampling filtering is required for the first prediction block, to obtain the final second prediction block. Therefore, in some embodiments, "first filtering is performed on the first prediction block to determine the second prediction block for the second colour component of the current block" can include the following: up-sampling filtering is performed on the first prediction block to determine the second prediction block for the second colour component of the current block.

It should be noted that, in embodiments of the disclosure, if the number of prediction values of the second colour component in the second prediction block is the same as the second-colour-component samples in the current block, but the second prediction block does not include the prediction values of the second-colour-component samples in the current block, filtering enhancement needs to be performed on the prediction value to obtain the final second prediction block. Therefore, in some embodiments, "first filtering is performed on the first prediction block to determine the second prediction block for the second colour component of the current block" can include the following: filtering enhancement is performed on the first prediction block, to determine the second prediction block for the second colour component of the current block.

It should be noted that, in embodiments of the disclosure, if the first prediction block includes the prediction values of all the second-colour-component samples in the current block, no processing is required for the first prediction block, and the first prediction block can be used as the final second prediction block directly.

It should be noted that, in embodiments of the disclosure, the first filtering can be up-sampling filtering or can be filtering enhancement, which is not limited herein. For the second prediction block subject to the first filtering, the second prediction block includes the prediction values of all the second-colour-component samples in the current block.

Here, when the first filtering is up-sampling filtering, the up-sampling filtering can be performed on the first prediction block with a fourth filter. The fourth filter can be an up-sampling filter and can be the same as or different from the third filter. The fourth filter can be a neural network filter, which is not limited herein.

In some embodiments, the first filtering can be performed on the first prediction block to determine the second prediction block for the second colour component of the current block as follows. The first filtering includes up-sampling filtering, where an input of the up-sampling filtering is a first up-sampling input block, and an output of the up-sampling filtering is a first up-sampling output block.

Further, in some embodiments, the up-sampling filtering can be performed as follows. An up-sampling factor is determined, where the up-sampling factor includes at least one of a horizontal up-sampling factor or a vertical up-sampling factor. Up-sampling filtering is performed on the first up-sampling input block according to the up-sampling factor, to obtain the first up-sampling output block.

In a possible implementation, up-sampling filtering can be performed on the first up-sampling input block according to the up-sampling factor to obtain the first up-sampling output block as follows. If the horizontal up-sampling factor is greater than 1 or the vertical up-sampling factor is greater than 1, up-sampling filtering is performed on the first up-sampling input block to obtain the first up-sampling output block.

In embodiments of the disclosure, performing up-sampling filtering on the first up-sampling input block includes at least one of: performing up-sampling filtering on the first up-sampling input block in a horizontal direction; performing up-sampling filtering on the first up-sampling input block in a vertical direction; performing up-sampling filtering on the first up-sampling input block in a horizontal direction and then in a vertical direction; or performing up-sampling filtering on the first up-sampling input block in a vertical direction and then in a horizontal direction.

Here, the horizontal up-sampling factor can be calculated according to the width of the first up-sampling input block and the width of the first up-sampling output block, and the vertical up-sampling factor can be calculated according to the height of the first up-sampling input block and the height of the first up-sampling output block. Then up-sampling filtering is performed on the first up-sampling input block according to the horizontal up-sampling factor and the vertical up-sampling factor. Specifically, if the horizontal up-sampling factor is greater than 1 and the vertical up-sampling factor is equal to 1, only horizontal up-sampling needs to be performed on the first up-sampling input block. If the horizontal up-sampling factor is equal to 1 and the vertical up-sampling factor is greater than 1, only vertical up-sampling needs to be performed on the first up-sampling input block. If the horizontal up-sampling factor is greater than 1 and the vertical up-sampling factor is greater than 1, both horizontal up-sampling and vertical up-sampling need to be performed on the first up-sampling input block. Firstly, horizontal up-sampling and then vertical up-sampling can be performed, or firstly vertical up-sampling and then horizontal up-sampling can be performed, or the up-sampling filtering operation herein can even be replaced by a convolution operation in a neural network structure, which is not limited in embodiments of the disclosure.

In another possible implementation, up-sampling filtering is performed on the first prediction block to determine the second prediction block. In this case, the method can further include the following. The first prediction block is taken as the first up-sampling input block, and the first up-sampling output block is taken as the second prediction block for the second colour component of the current block.

In another possible implementation, firstly enhancement filtering and then up-sampling filtering are performed on the first prediction block to determine the second prediction block. In this case, the method can further include the following. Filtering enhancement is performed on the first prediction block to determine a first enhanced prediction block. The first enhanced prediction block is taken as the first up-sampling input block, and the first up-sampling output block is taken as the second prediction block for the second colour component of the current block.

In another possible implementation, firstly up-sampling filtering and then enhancement filtering are performed on the first prediction block to determine the second prediction block. In this case, the method can further include the following. The first prediction block is taken as the first up-sampling input block, and the first up-sampling output block is taken as a first up-sampling-filtered prediction block. Filtering enhancement is performed on the first up-sampling-filtered prediction block, to determine the second prediction block for the second colour component of the current block.

In another possible implementation, firstly enhancement filtering, then up-sampling filtering, and then enhancement filtering is performed on the first prediction block, to determine the second prediction block. In this case, the method can further include the following. First filtering enhancement is performed on the first prediction block to determine a second enhanced prediction block. The second enhanced prediction block is taken as the first up-sampling input block, and the first up-sampling output block is taken as a second up-sampling-filtered prediction block. Second filtering enhancement is performed on the second up-sampling-filtered prediction block, to determine the second prediction block for the second colour component of the current block.

It should be noted that, when the first filtering is up-sampling filtering, the up-sampling filtering can be performed on the first prediction block with a horizontal up-sampling factor and a vertical up-sampling factor. In some embodiments, the up-sampling filtering is performed on the first prediction block to determine the second prediction block for the second colour component of the current block as follows: a horizontal up-sampling factor and a vertical up-sampling factor are determined; the up-sampling filtering is performed on the first prediction block with the horizontal up-sampling factor and the vertical up-sampling factor, to obtain the second prediction block for the second colour component of the current block.

In some embodiments, the up-sampling filtering is performed on the first prediction block with the horizontal up-sampling factor and the vertical up-sampling factor, to obtain the second prediction block for the second colour component of the current block, as follows: if the horizontal up-sampling factor is greater than 1, or the vertical up-sampling factor is greater than 1, the up-sampling filtering is performed on the first prediction block, to obtain the second prediction block.

In embodiments of the disclosure, performing up-sampling filtering on the first up-sampling input block includes at least one of: performing up-sampling filtering on the first up-sampling input block in a horizontal direction; performing up-sampling filtering on the first up-sampling input block in a vertical direction; performing up-sampling filtering on the first up-sampling input block in a horizontal direction and then in a vertical direction; or performing up-sampling filtering on the first up-sampling input block in a vertical direction and then in a horizontal direction.

Here, the horizontal up-sampling factor can be calculated according to the width of the first prediction block and the width of the current block, and the vertical up-sampling factor can be calculated according to the height of the first prediction block and the height of the current block. Then, up-sampling filtering is performed on the first prediction block according to the horizontal up-sampling factor and the vertical up-sampling factor. Specifically, if the horizontal up-sampling factor is greater than 1 and the vertical up-sampling factor is equal to 1, only horizontal up-sampling needs to be performed on the first prediction block. If the horizontal up-sampling factor is equal to 1 and the vertical up-sampling factor is greater than 1, only vertical up-sampling needs to be performed on the first prediction block. If the horizontal up-sampling factor is greater than 1 and the vertical up-sampling factor is greater than 1, both horizontal up-sampling and vertical up-sampling need to be performed on the first prediction block. Firstly, horizontal up-sampling and then vertical up-sampling can be performed, or firstly vertical up-sampling and then horizontal up-sampling can be performed, or the up-sampling operation herein can even be replaced by a convolution operation in a neural network structure, which is not limited in embodiments of the disclosure.

In some embodiments, the up-sampling filtering is implemented by one of: linear interpolation, or convolution operation based on a preset neural network. That is, the up-sampling filtering can be implemented with different filters, such as a two-dimensional filter, a one-dimensional filter, etc. For the one-dimensional filter, the filtering order thereof can be "firstly in a vertical direction and then in a horizontal direction", or "firstly in a horizontal direction and then in a vertical direction". The above two orders can be fixed filtering order, or can be a flexible filtering order determined according some parameters (for example, a filtering order directly indicated by identifier information, an implicit order related to prediction mode or block size, etc.), and embodiments of the disclosure are not limited in this regard.

In another possible implementation, when the first filtering is filtering enhancement, the filtering enhancement can be implemented through bilateral filtering. Specifically, performing the first filtering on the first prediction block to determine the second prediction block for the second colour component of the current block includes: determining a first weight value for the first prediction block in a bilateral filtering mode, performing bilateral filtering on the first prediction block according to the first weight value, to obtain the second prediction block.

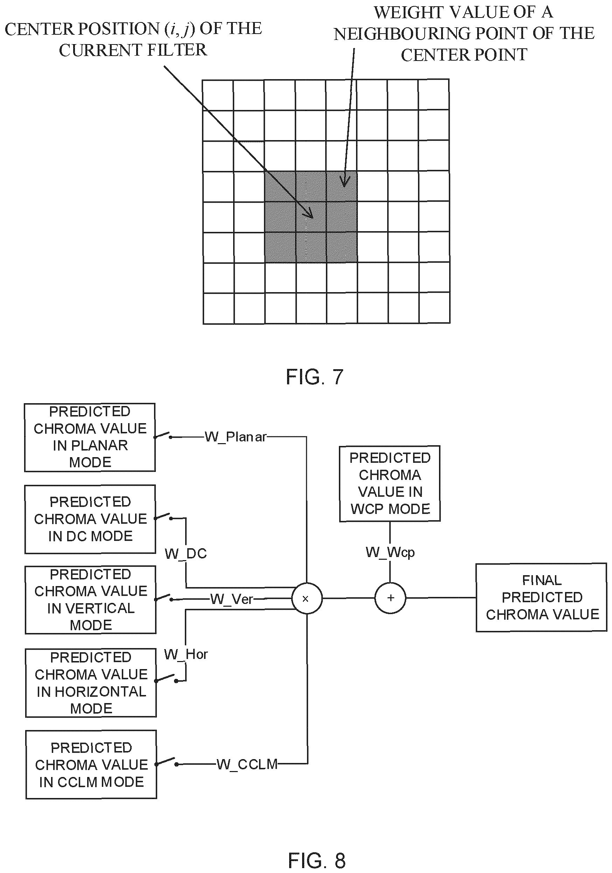

It should be noted that, bilateral filtering is a non-linear filtering technique that can achieve edge preserving and denoising, it considers both spatial neighboring information and colour similarity information, which can preserve picture edges while denoising and smoothing pictures. The bilateral filtering adopts two Gaussian filters. One Gaussian filter is for calculating a weight value of spatial proximity, which is the common Gaussian filter principle, and the other Gaussian filter is for calculating a weight value of sample value similarity. The bilateral filtering is achieved with the two Gaussian filters. In bilateral filtering, the optimized weight value is then convolved with the picture to achieve the effect of edge preservings and denoising. Refer to FIG. 7, which is a schematic diagram illustrating filter positions of the disclosure. The center positon of the current filter is *(i, j)* and a neighbouring point of the center point is *(k, l)*, the weight values thereof are filled in gray. For the two Gaussian filter, the weight value is calculated as follows:

$$ \text{ws} = e^{\left(-\frac{(i-k)^2+(j-l)^2}{2\sigma_d{}^2}\right)} \tag{17} $$

$$ \text{wr} = e^{\left(-\frac{\|I(i,j)-I(k,l)\|^2}{2\sigma_r{}^2}\right)} \tag{18} $$

$$ \text{w}(i,j,k,l) = \text{ws} \times \text{wr} = e^{-\left(\frac{(i-k)^2+(j-l)^2}{2\sigma_d{}^2}+\frac{\|I(i,j)-I(k,l)\|^2}{2\sigma_r{}^2}\right)} \tag{19} $$

ws is a spatial proximity Gaussian filtering function, *wr* is a sample value similarity Gaussian filtering function, w(*i, j, k, l*) is the product of two Gaussian filtering functions, that is, the weight value for the neighbouring points around the center point of the filter. In formula (19), *(i - k)²+ (j - l)²* is used to measure a spatial distance, and $\sigma_d$ is determined by the size of the current block; $\|I(i, j) - I(k, l)\|^2$ is used to measure a sample intensity difference, and $\sigma_r$ is determined by quantizer parameter (QP).

Further, the optimized weight value is then convolved with the picture, to obtain the filtered prediction value as follows:

$$ predSamples(i,j) = \frac{\sum_{k,l} predWcp(k,l) \times w(i,j,k,l)}{\sum_{k,l} w(i,j,k,l)}, i = 0,1,\dots,\text{nTbW}, j = 0,1,\dots,\text{nTbH} \tag{20} $$

It should be noted that, in addition to bilateral filtering, the filtering enhancement can also be median filtering, Gaussian filtering, normalized filtering. In other words, the filtering enhancement can include at least of one of the following: bilateral filtering, median filtering, Gaussian filtering, normalized filtering, neural network filtering, which is not limited herein.

In some embodiments, the method further includes: before performing up-sampling filtering on the first prediction block, performing filtering enhancement on the first prediction block, and using the enhanced first prediction block as the first prediction block.

In some embodiments, the method further includes: after performing up-sampling filtering on the first prediction block, performing filtering enhancement on the first prediction block obtained after up-sampling filtering, to obtain the second prediction block for the second colour component of the current block.

That is to say, in embodiments of the disclosure, the first filtering can be up-sampling filtering or filtering enhancement, or may include both the up-sampling filtering and the filtering enhancement. The up-sampling filtering can be performed on the first prediction block first and then the filtering enhancement is performed, or the filtering enhancement can be performed on the first prediction block first and then the up-sampling filtering is performed, which is not limited herein.

As such, for *predSamples*(*i, j*) obtained in formula (20), it is not necessarily the final prediction value, but is the prediction value obtained after filtering enhancement but before up-sampling (here, *predSamples(i,j)* is not the final prediction value), or can be the prediction value obtained after up-sampling filtering and filtering enhancement, or can be the prediction value obtained after filtering enhancement without up-sampling filtering.

For filtering enhancement, in some embodiments, the method further includes: determining a compensation value of a second-colour-component sample of the first prediction block, according to a reference sample value in a neighbouring area of the current block, refining a prediction value of the second-colour-component sample of the first prediction block according to the compensation value, to determine the second prediction block.

It should be noted that, in order to further improve prediction accuracy of the WCP mode, position-related refinement can be performed on the first prediction block. For example, a chroma compensation value for each second-colour-component sample to-be-predicted is calculated by using a reference sample that is near in spatial position, the second-colour-component sample in the second prediction block is refined by using the chroma compensation value, and a final prediction value (*predSamples*) of the second-colour-component sample is determined according to the refined prediction value, thereby obtaining the final second prediction block.

For filtering enhancement, the method further includes: prediction is performed on the second-colour-component sample in the first prediction block according to at least one prediction mode, to determine at least one initial prediction value of the second-colour-component sample in the second prediction block. Weighted average calculation is performed on the at least one initial prediction value and the prediction value of the second-colour-component sample in the first prediction block to determine the second prediction block.

It should be noted that, in order to further improve prediction accuracy of the WCP mode, weighted average calculation can also be performed on a chroma prediction value(s) calculated in another prediction mode(s) and a chroma prediction value calculated in the WCP mode, and a final predicted chroma value is determined according to the weighted result. Exemplarily, as illustrated in FIG. 8, other prediction modes can include a Planar mode, a direct current (DC) mode, a vertical mode, a horizontal mode, and a cross-component linear model (CCLM) mode. Each prediction mode corresponds to one switch, and the switch is used to control whether a chroma prediction value in the prediction mode is to participate in weighted average calculation. It is assumed that a weight value corresponding to the Planar mode is *W_Planar,* a weight value corresponding to the DC mode is *W_DC,* a weight value corresponding to the vertical mode is *W_Ver,* a weight value corresponding to the horizontal mode is *W_Hor,* a weight value corresponding to the CCLM mode is *W_CCLM,* and a weight value corresponding to the WCP mode is *W_Wcp.* Then, for a chroma prediction value in the Planar mode, a chroma prediction value in the DC mode, a chroma prediction value in the vertical mode, a chroma prediction value in the horizontal mode, and a chroma prediction value in the CCLM mode, if only a switch corresponding to the CCLM mode is in an on-state, weighted average calculation can be performed on the chroma prediction value in the CCLM mode and the chroma prediction value in the WCP mode according to *W_CCLM* and *W_Wcp,* and whether weighted average calculation with equal weights or unequal weights is to be performed can be determined according to the values of *W_CCLM* and *W_Wcp.* The weighted result is a final chroma prediction value of the second-colour-component sample, thereby obtaining the final second prediction block.

In some embodiments, after the second prediction block is determined, the reconstructed value of the second-colour-component sample in the current block can be determined according to the second prediction block as follows. A residual value of the second-colour-component sample in the current block is determined. A prediction value of the second-colour-component sample in the current block is determined according to the second prediction block. The reconstructed value of the second-colour-component sample in the current block is determined according to the residual value of the second-colour-component sample in the current block and the prediction value of the second-colour-component sample in the current block.

It should be noted that, in embodiments of the disclosure, in terms of determining the residual value of the second-colour-component sample in the current block, the residual value of the second-colour-component sample in the current block can be determined by parsing a bitstream.

It should be further noted that, in embodiments of the disclosure, in terms of determining the prediction value of the second-colour-component sample in the current block according to the second prediction block, the prediction value of the second-colour-component sample in the current block can be set to be equal to a value of the second prediction block; alternatively, up-sampling filtering can be performed on the value of the second prediction block, and the prediction value of the second-colour-component sample in the current block can be set to be equal to an output value after up-sampling filtering.

In this way, taking the chroma component as an example, a chroma residual value of the current block is determined by parsing the bitstream, and then a chroma prediction value of the current block can be determined according to the second prediction block. Then, the chroma prediction value and the chroma residual value are summed to obtain a reconstructed chroma value of the current block.

It can be understood that, in embodiments of the disclosure, during prediction in the WCP mode, post-processing after the WCP prediction will be detailed below in four aspects. First, luma information of a reference sample and luma information of the current block are fully utilized, so as to realize calculation of a weighting factor of chrominance of the reference sample. Second, utilize the low sensitivity of human eyes to chromaticity and in order to reduce the complexity in calculation of the weighting factor of chrominance, core parameters of WCP mode is fully considered, that is, when *predSizeW×predSizeH* is less than or equal to *nTbW×nTbH,* up-sampling is performed on the chroma predication block. Third, when performing up-sampling, reference chroma information is fully utilized, and characteristics in different directions is considered; during linear interpolation, different weight values are assigned to different points to-be-interpolated between existing neighbouring points, as such, spatial correlation between the points to-be-interpolated and existing points are fully considered, which can improve the accuracy of up-sampling filtering. Fourth, consider the possibility of unstable and inaccurate prediction values caused by the chroma prediction block output by WCP prediction as well as inaccurate prediction values caused by up-sampling filtering, for the chroma prediction blocks in those cases, filtering enhancement is performed with bilateral filtering which can achieve edge preserving and denoising, so as to further improve the accuracy and subjective/objective quality of the chroma prediction block. It should be noted that, the above four aspects are not in any particular order, and can be used individually or in combination.

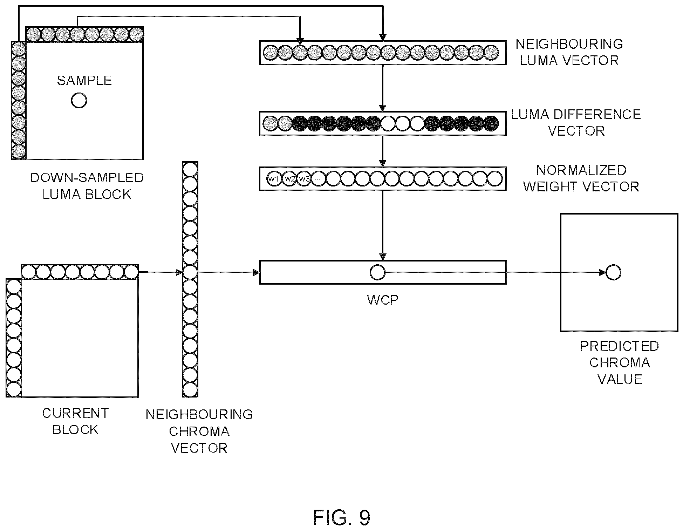

To summarize, embodiments of the disclosure further provide a WCP framework. As illustrated in FIG. 9, for reconstructed luma information *recY[i][j]* of each sample in the down-sampled current block (namely, a down-sampled luma block), a luma difference vector *diffY[i][j]* is obtained according to an absolute value of a difference between *recY[i][j]* and a neighbouring luma vector *refY[k],* and a normalized weight vector *cWeight[i][j]* is derived according to a nonlinear mapping model related to *diffY[i][j].* Then, a chroma prediction value $C_{i,j}^{pred}$ **can** be obtained by performing vector multiplication based on the weight vector and the neighbouring chroma vector for the current block by using the weight vector.

Embodiments of the disclosure provide a decoding method. The reference sample value for the first colour component of the current block is determined. The weighting factor is determined according to the reference sample value for the first colour component of the current block. The first prediction block for the second colour component of the current block is determined according to the weighting factor and the reference sample value for the second colour component of the current block. First filtering is performed on the first prediction block to determine the second prediction block for the second colour component of the current block, where the second prediction block comprises prediction values of all second-colour-component samples in the current block. The reconstructed value of the second-colour-component sample in the current block is determined according to the second prediction block. As such, the weighting factor can be calculated with aid of the reference sample neighbouring the current block and colour component information of the current block, correlation between the current block and neighbouring areas in terms of luma information is fully taken into consideration, and such correlation is used in chroma prediction of the current block, so as to improve accuracy of chroma prediction. Considering that human eyes have low sensitivity to chroma information and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, improve coding efficiency, and thus improve coding performance.

In another embodiment of the disclosure, based on the decoding method described in the foregoing embodiment, taking chroma prediction of the current block as an example, in embodiments of the disclosure, reconstructed luma information of the current block and reference luma information and reference chroma information of the neighbouring area are all decoded reference information. Therefore, an embodiment of the disclosure provides a WCP technology based on the foregoing information, and based on this, post-processing is performed on the chroma prediction block obtained by WCP, to further improve accuracy of chroma prediction. Here, the detailed steps of the chroma prediction process in the WCP mode are as follows.

Input of the WCP mode: a position (*xTbCmp, yTbCmp*) of the current block, a width *nTbW of* the current block, and a height *nTbH* of the current block.

Output of the WCP mode: a prediction value *predSamples[x][y]* of the current block, where the top-left position in the current block is taken as a coordinate origin, *x*=0, ..., *nTbW* - 1, and *y*=0, ..., *nTbH*-1.

The prediction process in the WCP mode can include determination of a core parameter, acquisition of target information, WCP, and post-processing. After these steps, a chroma prediction value of the current block can be obtained.

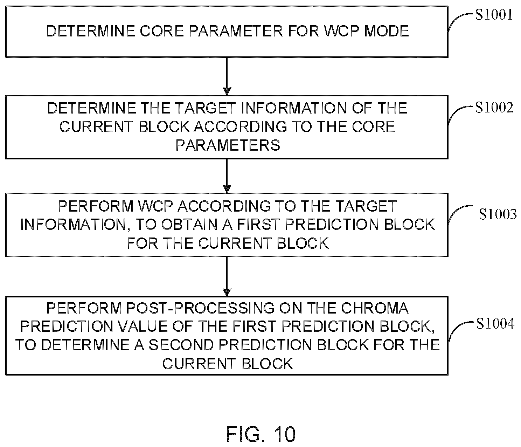

In an embodiment, referring to FIG. 10, FIG. 10 is schematic flowchart II of a decoding method provided in embodiments of the disclosure. As illustrated in FIG. 9, the method can include the following.

S1001, determine a core parameter(s) for a WCP mode.

It should be noted that, in terms of determining the core parameter for the WCP mode in S1001, the core parameter for the WCP mode can be obtained or derived through configuration or in some means, for example, the core parameter is obtained from a bitstream at a decoding end.

Here, the core parameter for the WCP mode includes, but is not limited to, a control parameter (*S*), the number (*inSize*) of inputs of WCP (hereinafter, "WCP inputs" for short), and the number of outputs of WCP (hereinafter, "WCP outputs" for short) (arranged into *predSizeW×predSizeH*). The first prediction block output based on WCP can be represented by *predWcp*. Here, the number of WCP outputs can be set to the same value (for example, *predSizeW = predSizeH = T*/4) or depend on the size parameter of the current block (for example, *predSizeW = nTbW,* and *predSizeH = nTbH*). The control parameter (S) can be used to adjust a nonlinear function in subsequent operations or adjust data involved in subsequent operations.

In some cases, the determination of the core parameter depends on a block size, a block content, or the number of samples in the block. For example, if there are various block sizes to which the WCP mode can be applied, or the difference between the block size is significant, or the difference between the block content is significant, or the difference between the number of samples in the block is significant, the current block can be classified according to the block size, the block content, or the number of samples in the block, and the same or different core parameters can be determined with regard to different categories. That is, the control parameter (S), or the number *inSize* of WCP inputs, or the number of WCP outputs (arranged into *predSizeW×predSizeH*) corresponding to different categories can be the same or different. It should be noted that, *predSizeW* can also be the same as or different from *predSizeH*.

In order to better illustrate the determination of the core parameter, two classifications are taken as examples for illustration below.

Classification example 1: in the WCP mode, the current block can be classified according to the width and height of the current block, and the category of the block is represented by *wcpSizeld.* The control parameter (S), the number *inSize* of WCP inputs, and the number of WCP outputs (arranged into *predSizeW×predSizeH*) corresponding to different categories of blocks can be the same or different. Here, an example of classification into three categories will be illustrated below.

The current block is classified into three categories according to the width and height of the current block. The control parameter (S) corresponding to different categories can be set to be different, and *inSize* and the number of WCP outputs (arranged into *predSizeW×predSizeH*) corresponding to different categories can be set to be the same. *nTbW* represents the width of the current block, *nTbH* represents the height of the current block, and the category *wcpSizeld* of the block is defined as follows.

*wcpSizeld=0:* represents a current block with min(nTbW, nTbH)<=4, where the control parameter (S) is 8, *inSize* is ($2{\times}nTbH+2{\times}nTbW$), and the number of chroma prediction values is the number of WCP outputs $nTbH{\times}nTbW$.

*wcpSizeld=1:* represents a current block with 4<min(nTbW, nTbH)<=16, where the control parameter (S) is 12, inSize is ($2{\times}nTbH+2{\times}nTbW$), and the number of chroma prediction values is the number of WCP outputs $nTbH{\times}nTbW$.

*wcpSizeld=2:* represents a current block with min(nTbW, nTbH)>16, where the control parameter (S) is 16, *inSize* is ($2{\times}nTbH+2{\times}nTbW$), and the number of chroma prediction values is the number of WCP outputs $nTbH{\times}nTbW$.

The numerical relationship between the above core parameters is represented in the form of a table, as illustrated in Table 6.

Table 6

| wcpSizeld | S | inSize | predSizeH | predSizeW |
|---|---|---|---|---|
| 0 | 8 | 2×nTbH+2×nTb-W | nTbH | nTbW |
| 1 | 12 | 2×nTbH+2×nTb-W | nTbH | nTbW |
| 2 | 16 | 2×nTbH+2×nTb-W | nTbH | nTbW |

Another example of classification into three categories is described below.

The current block is classified into three categories according to the width and height of the current block. The control parameter (*S*) corresponding to different categories can be set to be different, and *inSize* and the number of WCP outputs (arranged into *predSizeW×predSizeH*) corresponding to different categories can be set to be the same. *nTbW* represents the width of the current block, *nTbH* represents the height of the current block, and the category *wcpSizeld* of the block is defined as follows.

*wcpSizeld=0:* represents a current block with min(nTbW, nTbH)<=4, where the control parameter (*S*) is 8, *inSize* is ($2{\times}nTbH+2{\times}nTbW$), and the number of chroma prediction values is the number of WCP outputs $nTbH{\times}nTbW$.

*wcpSizeId=1:* represents a current block with 4<min(nTbW, nTbH)<=16, where the control parameter (*S*) is 12, *inSize* is (1.5×*nTbH*+1.5×*nTbW*), and the number of chroma prediction values is the number of WCP outputs *nTbH/2×nTbW/2.*

*wcpSizeId=2:* represents a current block with min(nTbW, nTbH)>16, where the control parameter (*S*) of WCP is 16, *inSize* is (*nTbH*+*nTbW*), and the number of chroma prediction values is the number of WCP outputs *nTbH/4ˣnTbW/4.*

The numerical relationship between the above core parameters is represented in the form of a table, as illustrated in Table 7.

Table 7

| wcpSizeId | S | inSize | predSizeH | predSizeW |
|-----------|----|--------------------|-----------|-----------|
| 0 | 8 | 2×nTbH+2×nTbW | nTbH | nTbW |
| 1 | 12 | 1.5×nTbH+1.5×nTb-W | nTbH/2 | nTbW/2 |
| 2 | 16 | nTbH+nTbW | nTbH/4 | nTbW/4 |

Classification example 2: in the WCP mode, the current block can be classified according to the width and height of the current block, and the category of the block is represented by *wcpSizeId.* The control parameter (*S*), the number *inSize* of WCP inputs, and the number of WCP outputs (arranged into *predSizeW×predSizeH*) corresponding to different categories of blocks can be the same or different. Here, an example of classification into three categories will be illustrated below.

The current block is classified into three categories according to the width and height of the current block. The control parameter (*S*) corresponding to different categories can be set to be different, and *inSize* and the number of WCP outputs (arranged into *predSizeW×predSizeH*) corresponding to different categories can be set to be the same. *nTbW* represents the width of the current block, *nTbH* represents the height of the current block, *nTbW×nTbH* represents the number of samples in the current block, and the category *wcpSizeId* of the block is defined as follows.

*wcpSizeId=0:* represents a current block with (*nTbW×nTbH*)<128, where the control parameter (*S*) is 10, *inSize* is (2×*nTbH*+2×*nTbW*), and the number of chroma prediction values is the number of WCP outputs *nTbH×nTbW.*

*wcpSizeId=1:* represents a current block with 128<=(*nTbW×nTbH*)<=256, where the control parameter (*S*) is 8, *inSize* is (2×*nTbH*+2×*nTbW*), and the number of chroma prediction values is the number of WCP outputs *nTbH×nTbW.*

*wcpSizeId=2:* represents a current block with (*nTbW×nTbH*)>256, where the control parameter (*S*) is 1, *inSize* is (2×*nTbH*+2×*nTbW*), and the number of chroma prediction values is the number of WCP outputs *nTbH×nTbW.*

The numerical relationship between the above core parameters is represented in the form of a table, as illustrated in Table 8.

Table 8

| wcpSizeId | S | inSize | predSizeH | predSizeW |
|-----------|----|-----------------|-----------|-----------|
| 0 | 10 | 2×nTbH+2×nTb-W | nTbH | nTbW |
| 1 | 8 | 2×nTbH+2×nTb-W | nTbH | nTbW |
| 2 | 1 | 2×nTbH+2×nTb-W | nTbH | nTbW |

Another example of classification into three categories is described below.

The current block is classified into three categories according to the width and height of the current block. The control parameter (*S*) corresponding to different categories can be set to be different, and *inSize* and the number of WCP outputs (arranged into *predSizeW×predSizeH*) corresponding to different categories can be set to be the same. *nTbW* represents the width of the current block, *nTbH* represents the height of the current block, *nTbW×nTbH* represents the number of samples in the current block, and the category *wcpSizeId* of the block is defined as follows.

*wcpSizeId=0:* represents a current block with (*nTbW×nTbH*)<64, where the control parameter (*S*) is 16, *inSize* is (2×*nTbH*+2×*nTbW*), and the number of chroma prediction values is the number of WCP outputs *nTbH×nTbW.*

*wcpSizeId=1:* represents a current block with 64<=(*nTbW×nTbH*)<=512, where the control parameter (*S*) is 4, *inSize* is (1.5×*nTbH*+1.5×*nTbW*), and the number of chroma prediction values is the number of WCP outputs

nTbH/2×nTbW/2.

*wcpSizeId=2:* represents a current block with (*nTbW×nTbH*)>512*, where the control parameter (*S*) is 1, *inSize* is (*nTbH+nTbW*), and the number of chroma prediction values is the number of WCP outputs *nTbH/4×nTbW/4*.

The numerical relationship between the above core parameters is represented in the form of a table, as illustrated in Table 9.

Table 9

| wcpSizeId | S | inSize | predSizeH | predSizeW |
|---|---|---|---|---|
| 0 | 16 | 2×nTbH+2×nTbW | nTbH | nTbW |
| 1 | 4 | 1.5×nTbH+1.5×nTbW | nTbH/2 | nTbW/2 |
| 2 | 1 | nTbH+nTbW | nTbH/4 | nTbW/4 |

S1002, determine the target information of the current block according to the core parameters.

It should be noted that, for S1002, when predicting the current block, the top area, the top-left area, and the left area of the current block are used as the neighbouring areas (can also be referred to as "reference areas") of the current block. As illustrated in the foregoing FIG. 6A, all samples in the neighbouring areas are decoded reference samples.

Here, the reference chroma information *refC* and the reference luma information *refY* can be obtained from the neighbouring area.

The reference chroma information obtained includes, but is not limited to, a reference reconstructed chroma value selected from the top area of the current block, and/or a reference reconstructed chroma value selected from the left area of the current block. The reference luma information obtained includes but not limited to: corresponding reference luma information obtained according to the position of the reference chroma information.

The reconstructed luma information *recY* of the current prediction block is obtained as follows, for example, the corresponding reconstructed luma information obtained according to the position of the luma information in the current block is obtained as the reconstructed luma information of the current block.

It should be further noted that, in embodiments of the disclosure, in some case, *refC, refY,* or *recY* can be pre-processed and then taken as the target information of WCP input.

It should be noted that, in order to reduce the complexity in calculation of WCP prediction, extracting or down-sampling filtering can be performed on *refC* or *refY* or *recY.*

Exemplarily, different filtering operations can be performed on *refC, refY,* or *recY* for current blocks of different sizes.

Exemplarily, if the spatial resolution of the chroma component and the spatial resolution of luma component of video are inconsistent, up-sampling filtering and down-sampling filtering can be performed on *refC, refY,* or *recY* to facilitate subsequent chroma prediction calculations.

Exemplarily, if the spatial resolution of the chroma component and the spatial resolution of luma component of video are consistent, multiple lines or columns of reference samples can be used, and up-sampling filtering and down-sampling filtering can be performed on *refC, refY,* or *recY* to facilitate subsequent chroma prediction calculations.

Exemplarily, if the number of *refC* or *recY* is different from the number of inSize in the core parameters, extracting or up-sampling/down-sampling filtering can be performed on *refC* or *recY.*

That is to say, obtaining the target information may include: *inSize* pieces of reference chroma information (*refC*) are obtained (if pre-processing is required, *refC* is information obtained after pre-processing); *inSize* pieces of reference luma information *refY* are obtained (if pre-processing is required, *refY* is information obtained after pre-processing).

S1003, perform WCP according to the target information, to obtain a first prediction block for the current block.

It can be understood that, for S1004, the chroma prediction values within the size defined by the core parameter are represented by $C^{pred}[i][f]$ and are obtained one by one, where *i*=0, *..., predSizeW*-1, and *j*=0, *..., predSizeH* - 1. It should be noted that, *predSizeH* and *predSizeW* are core parameters, and in embodiments of the disclosure, *predSizeH* is greater than or equal to (the same as or different from) the height *nTbH* of the current block, or *predSizeW* is greater than or equal to the width *nTbW* of the current block. In this way, under certain conditions, the following calculations can also be performed only on some of the samples to be predicted in the current block.

It can be understood that, the WCP includes the following. A weight is obtained. Weighted prediction is performed according to the weight to obtain a WCP value. The process of obtaining the weight includes construction of a luma difference vector and calculation of the weight, and the detailed calculation process is as follows.

For *i*=0, *..., predSizeW* - 1, *j*=0, *..., predSizeH* - 1, and for *k*=0, 1 *..., inSize* - 1, each element *diffY[i][j][k]* in the luma difference vector is constructed, each element *cWeight[i][j][k]* (or *cWeightFloat[i][j][k]*) in the weight vector is calculated, and then the chroma prediction value $C^{Pred}[i][f]$ is calculated according to *cWeight[i][j]* (or *cWeightFloat[i][j][k]*) and *refC.*

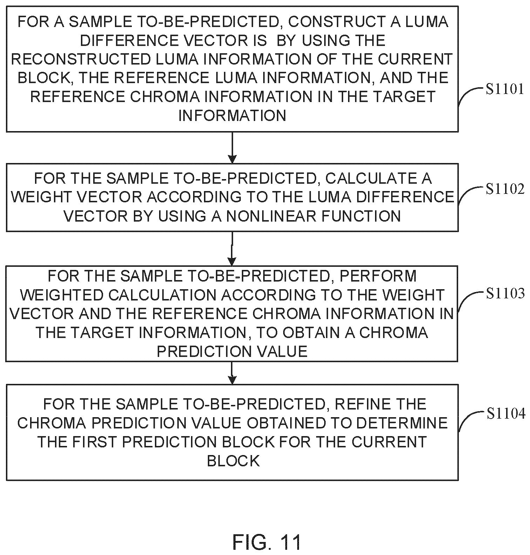

In an embodiment, after obtaining the target information, as illustrated in FIG. 11, the method can include the following.

S1101, for a sample to-be-predicted, a luma difference vector is constructed by using the reconstructed luma information of the current block, the reference luma information, and the reference chroma information in the target information.

It should be noted that, for each sample to-be-predicted C^pred[i][j] within the size defined by the core parameter, an absolute value(s) of a difference(s) between reconstructed luma information *recY[i][j]* corresponding to the sample to-be-predicted and *inSize* pieces of reference luma information *refY* is calculated to obtain a luma difference vector *diffY[i][j] [k]*. The formula for calculation is as follows:

$$\mathrm{diffY[i][j][k]} = \mathrm{abs(refY[k] - recY[i][j])} \qquad (21)$$

where $\mathrm{abs}(\,x\,) = \begin{cases} x & ; & x >= 0 \\ -x & ; & x < 0 \end{cases}$ , and abs( $x$ ) represents an absolute value of $x$.

It should be further noted that, in some case, linear or nonlinear numerical processing can be performed on the luma difference vector for the sample to-be-predicted. For example, the value of the luma difference vector for the sample to-be-predicted can be scaled according to the control parameter $S$ in the core parameter.

S1102, for the sample to-be-predicted, a weight vector is calculated according to the luma difference vector by using a nonlinear function.

It should be noted that, in embodiments of the disclosure, the luma difference vector diffY[i][j] corresponding to each sample to-be-predicted C^pred[i][j] is processed by using a weight model, to obtain a corresponding floating-point weight vector cWeightFloat[i][j]. The weight model herein includes, but is not limited to, a nonlinear normalized function, a nonlinear normalized exponential function, and other nonlinear functions, which is not limited herein.

Exemplarily, a nonlinear Softmax function can be used as a weight model, a luma difference vector *diffY[ij][j]* corresponding to each sample to-be-predicted is used as an input of the weight model, and the floating-point weight vector cWeightFloat [i][j] corresponding to each sample to-be-predicted is output with the weight model. The formula for calculation is as follows:

$$\mathrm{cWeightFloat[i][j][k]} = \frac{\mathrm{e}^{-\mathrm{diffY[i][j][k]}}}{\sum_{\mathrm{n}=0}^{\mathrm{inSize}-1} \mathrm{e}^{-\mathrm{diffY[i][j][n]}}} \qquad (22)$$

In some case, the weight model can also be adjusted according to the control parameter ($S$) in the core parameter. Exemplarily, if the current block is flexible in size, the weight model can be adjusted according to the control parameter ($S$). Taking a nonlinear Softmax function as an example, different control parameters can be selected to adjust the function according to different block categories of the current block. In this case, a formula for calculating the weight vector corresponding to each sample to-be-predicted is as follows:

$$\mathrm{cWeightFloat[i][j][k]} = \frac{\mathrm{e}^{\frac{-\mathrm{diffY[i][j][k]}}{S}}}{\sum_{\mathrm{n}=0}^{\mathrm{inSize}-1} \mathrm{e}^{\frac{-\mathrm{diffY[i][j][n]}}{S}}} \qquad (23)$$

In embodiments of the disclosure, fixed-point calculation can also be performed on the weighting factor. Therefore, in some embodiments, the method further includes the following. If the weighting factor is a floating-point weighting factor, fixed-point calculation is performed on the floating-point weighting factor to obtain a fixed-point weighting factor.

In this way, after calculation according to the above formula (22) or formula (23) is completed, fixed-point calculation can be performed on *cWeightFloat,* as illustrated below:

$$\mathrm{cWeight[i][j][k]} = \mathrm{round}\big(\mathrm{cWeightFloat[i][j][k]} \times 2^{\mathrm{Shift}}\big) \qquad (24)$$

Where round( $x$ )=Sign( $x$ )×Floor( abs($x$)+0.5 ). Here, Floor( $x$ ) represents the greatest integer less than or equal

$\mathrm{Sign}(\,x\,) = \begin{cases} 1 & ; & x > 0 \\ 0 & ; & x == 0 \\ -1 & ; & x < 0 \end{cases}$

to x. . abs(x) represents an absolute value of x. In addition, *Shift* is a shift amount which is set for the fixed-point operation in order to improve accuracy.

S1103, for the sample to-be-predicted, weighted calculation is performed according to the weight vector and the reference chroma information in the target information, to obtain a chroma prediction value.

It should be noted that, the chroma prediction value of each sample to-be-predicted is calculated according to the weight vector *cWeight[i][j]* (or cWeightFloat[i][j]) and the reference chroma information *refC* corresponding to the sample to-be-predicted. Specifically, for each sample to-be-predicted $c^{pred}[i][j]$, the reference chroma information *refC* for the sample to-be-predicted is multiplied by the weight vector elements corresponding to the sample to-be-predicted one by one to obtain *subC[i][j]* (or *subCFloat[i][j]*), and the multiplication results are summed to obtain the chroma prediction value $C^{pred}[i][j]$ of the sample to-be-predicted, thereby realizing weighted prediction on the chroma component.

In a possible implementation, the method can include the following. Weighted calculation is performed according to a floating-point weighting factor and the reference chroma information, to obtain an initial prediction value of a sample to-be-predicted. Fixed-point calculation is performed on the initial prediction value, to obtain a target prediction value of the sample to-be-predicted.

Exemplarily, the formula for calculation is as follows:

For *k*=0, 1, ..., *inSize*-1,

$$\text{subCFloat[i][j][k]} = (\text{cWeightFloat[i][j][k]} \times \text{refC[k]}) \qquad (25)$$

After the calculation is completed, fixed-point calculation can also be performed on subCFloat[i][j][k]. During fixed-point calculation, in order to maintain a certain calculation precision, a coefficient can be multiplied herein, which is as follows:

$$\text{subC[i][j][k]} = \text{round}(\text{subCFloat[i][j][k]} \times 2^{\text{Shift}}) \qquad (26)$$

Alternatively, for *i*=0, ..., *predSizeW*-1, and *j*=0, ..., *predSizeH* - 1,

$$\text{C}^{\text{pred}}\text{Float[i][j]} = \sum_{k=0}^{\text{inSize}-1} \text{subCFloat[i][j][k]} \qquad (27)$$

After the calculation, fixed-point calculation is performed on $C^{pred}Float[i][j]$, such as:

$$\text{C}^{\text{pred}}\text{[i][j]} = \text{round}(\text{C}^{\text{pred}}\text{Float[i][j]}) \qquad (28)$$

In another possible implementation, weighted calculation can be performed according to a fixed-point weighting factor and the reference chroma information, to obtain an initial prediction value of a sample to-be-predicted. Fixed-point compensation is performed on the initial prediction value, to obtain a target prediction value of the sample to-be-predicted.

Exemplarily, the formula for calculation is as follows:

For *k*=0, 1, ..., *inSize*-1,

$$\text{subC[i][j][k]} = (\text{cWeight[i][j][k]} \times \text{refC[k]}) \qquad (29)$$

Then, calculation is performed on the *subC[i][j][k]* subject to fixed-point calculation, which is as follows:

For i=0, ..., predSizeW - 1, j=0, ..., predSizeH - 1,

$$\text{C}^{\text{pred}}\text{[i][j]} = \left(\sum_{k=0}^{\text{inSize}-1} \text{subC[i][j][k]} + \text{Offset}\right) \gg \text{Shift}_1 \qquad (30)$$

where Offset = 1 « (Shift$_1$ - 1). *Shift$_1$* can be a shift amount required in fixed-point calculation to improve accuracy in calculating *cWeight[i][j][k]* or subC[i][j][k](*shift$_1$*= *Shift*) or in other operations.

S1104, for the sample to-be-predicted, the chroma prediction value obtained is refined to determine the first prediction block for the current block.

It should be noted that, the chroma prediction value should be restricted to a preset range. If the chroma prediction value exceeds the preset range, a corresponding refinement operation needs to be performed. Exemplarily, in a possible implementation, the chroma prediction value $C^{pred}[i][j]$ can be clipped as follows. When $C^{pred}[i][j]$ < 0, $C^{pred}[i][f]$ is set to 0. When $C^{pred}[i][j]$ > (1<<*BitDepth*) - 1, $C^{pred}[i][f]$ is set to (1<<*BitDepth*)-1.

*BitDepth* is a bit depth required for chroma sample values to ensure that all chroma prediction values of the prediction block are within 0 ~ (1<<*BitDepth*) - 1. That is,

$$C^{pred}[i][j] = Clip3(0, (1 \ll BitDepth) - 1, C^{pred}[i][j]) \qquad (31)$$

where

$$Clip3(x, y, z) = \begin{cases} x \; ; z < x \\ y \; ; z > y \\ z \; ; otherwise \end{cases} \qquad (32)$$

Alternatively, formula (31) and formula (32) are combined to obtain the following formula:

$$C^{pred}[i][j] = Clip3\left(0, (1 \ll BitDepth) - 1\right), \left(\sum_{k=0}^{inSize-1} subC[i][j][k] + Offset\right)) \gg Shift_1 \qquad (33)$$

S1004, perform post-processing on the chroma prediction value of the first prediction block, to determine a second prediction block for the current block.

It should be noted that, for S1004, after the chroma prediction value is obtained through weight derivation according to reconstructed chroma information, post-processing is performed on the chroma prediction value obtained, so as to further improve the accuracy in chroma prediction.

Due to the insensitivity of human eyes to partial removal of chroma information, in embodiments of the disclosure, chroma prediction can be performed on only some points in the current block, as such, the size of the first prediction block $predSizeW \times predSizeH$ is less than or equal to the size of the current block (that is, the original chroma block) $nTbW \times nTbH$. In embodiments of the disclosure, according to the output size of the first prediction block obtained after WCP prediction, determine whether up-sampling filtering is to be performed on chroma and whether filtering enhancement is to be performed on the chroma prediction value.

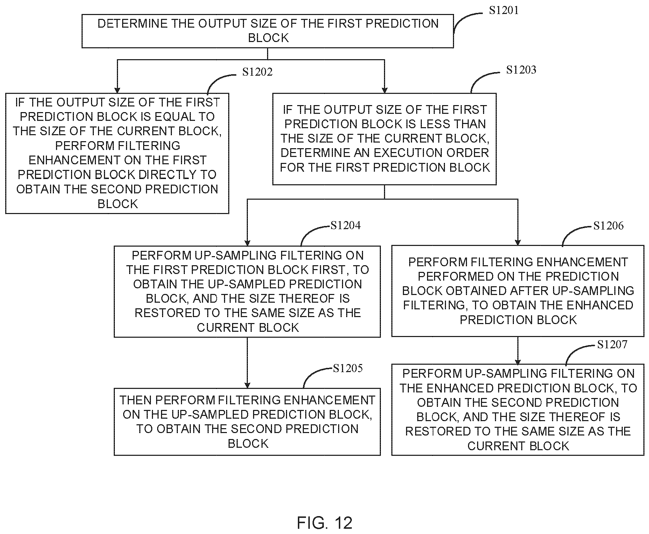

In an embodiment, for the post-processing performed on the chroma prediction value of the first prediction block, as illustrated in FIG. 12, the method includes the following.

S1201, determine the output size of the first prediction block.

S1202, if the output size of the first prediction block is equal to the size of the current block, perform filtering enhancement on the first prediction block directly to obtain the second prediction block.

S1203, if the output size of the first prediction block is less than the size of the current block, determine an execution order for the first prediction block.

S1204, perform up-sampling filtering on the first prediction block first, to obtain the up-sampled prediction block, and the size thereof is restored to the same size as the current block.

S1205, then perform filtering enhancement on the up-sampled prediction block, to obtain the second prediction block.

S1206, perform filtering enhancement performed on the prediction block obtained after up-sampling filtering, to obtain the enhanced prediction block.

S1207, perform up-sampling filtering on the enhanced prediction block, to obtain the second prediction block, and the size thereof is restored to the same size as the current block.

It should be noted that, the execution order for the first prediction block can include a first execution order and a second execution order. The first execution order is: first perform up-sampling filtering on the first prediction block, and then perform filtering enhancement on the up-sampled prediction block. The second execution order is: first perform filtering enhancement on the first prediction block, and then perform up-sampling filtering on the enhanced prediction block.

Here, assume that the execution order for the first prediction block is the first execution order, that is, first perform up-sampling filtering on the first prediction block, and then perform filtering enhancement on the up-sampled prediction block.

In actual coding, chroma sub-sampling utilizes the lower sensitivity of human eyes to chroma signals compared to luma signals to remove some colour information from the picture without being perceived by humans. This means that a lower spatial sampling rate can be given to chroma signals. Furthermore, the chroma components in the same block are relatively flat and have similar content characteristics. In video content with these two characteristics, if all points in the same block of the picture are predicted point by point, it will introduce higher complexity in the calculation of weight vectors and the weighting of chroma prediction values, greatly reducing prediction efficiency. Based on the above two characteristics of the video and the high complexity in calculating the chroma prediction values for all points, it is possible to consider predicting only a portion of the points in the current block, that is, in the core parameters of WCP mode, if $predSizeW$ is less than the width $nTbW$ of the current block or $predSizeH$ is less than the height $nTbH$ of the current block, up-sampling filtering needs to be performed on $predWcp$ to obtain the final predicted chroma value $predSamples$.

In embodiments of the disclosure, a horizontal up-sampling factor *upHor* is calculated according to the width *predSizeW* of the first prediction block output and the width *nTbW of* the current block. Likewise, a vertical up-sampling factor *upVer* is calculated according to the height *predSizeH* of the first prediction block output and the height *nTbH* of the current block. The method for calculation is illustrated as follows:

$$upHor = nTbW/predSizeW \qquad (34)$$

$$upVer = nTbH/predSizeH \qquad (35)$$

The first prediction block *predWcp* is filled into the current second prediction block *predSamples:*

$$predSamples[(x + 1) \times upHor\text{-}1][(y + 1) \times upVer\text{-}1]=predWcp[x][y] \qquad (36)$$

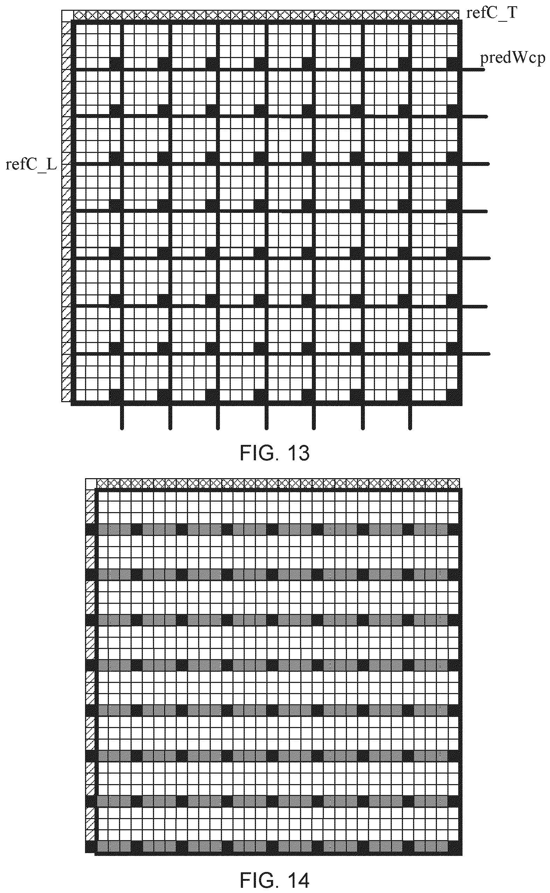

Specifically, the up reference reconstructed chroma sample *refC_T* is filled into an upper row *predSamples[x][-1]* of the second prediction block, and the left reference reconstructed chroma sample *refC_L* is filled into is filled into the left column *predSamples[-1][y]* of the second prediction block. *x = 0, ..., nTbW-1, y = 0, ..., nTbH-1.*
According to formula (36), *predWcp* is filled into a corresponding position ((x + 1) × upHor-1, (y + 1)× upVer-1) in the second prediction block *predSamples.* It can be considered that the second prediction block is divided into *predSizeW×predSizeH* sub-blocks equally, and the filled position is the bottom right corner of each sub-block. As illustrated in FIG. 13, take a 32×32 block for example. The points filled with grid are up reference reconstructed chroma sample *refC_T,* the points filled with diagonal lines are left reference reconstructed chroma sample *refC_L,* and the points filled with black are positions at which chroma prediction samples *predWcp* are filled.
When horizontal up-sampling factor *upHor* is greater than 1, horizontal up-sampling filtering is performed. Up-sampling is illustrated as the following formulas:

$$sum =(upHor\text{-}dX) \times predSamples[xHor][yHor] + dX \times predSamples[xHor + upHor][yHor]$$
$$(37)$$

$$predSamples[xHor + dX][yHor] =(sum + upHor/2)/upHor \qquad (38)$$

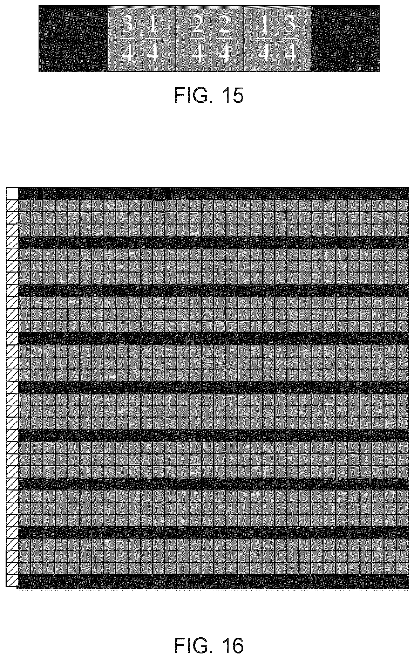

where (xHor, yHor) = (m × upHor-1, n × upVer-1), m=0, ..., predSizeW-1 , n=1, ..., predSizeW, dX=1, ..., upHor-1.
The process is illustrated in FIG. 14. Take a 32×32 block for example, points in the left reference chroma sample *refC_L* that correspond to horizontal positions at which *predWcp* is filled during horizontal up-sampling will also be sued as up-sampling reference points, and are filled with black. As such, all points filled with black are up-sampling reference points, and a prediction block between each two black filled points in the horizontal direction and obtained through linear interpolation is filled with gray.
Up-sampling adopts linear interpolation, that is, the value of each interpolated point (filled with gray) between two up-sampling chroma reference points (filled with black) is a weighted average of two up-sampling reference chroma points. According to formulas (37) and (38), the weight of the left up-sampling reference chroma point is *(upHor-dX)lupHor,* and the weight of the right reference chroma point is *dX/upHor,* where *dX=1,..., upHor-1* (that is, the distance between the current interpolation point and the left reference point). That is, during horizontal interpolation, the weight is only related to the horizontal up-sampling factor *upHor.* FIG. 15 illustrates an example of weights. In this example, *upHor=4.* For the first interpolation point in FIG. 15, the left up-sampling reference chroma point has a weight of 3/4, the right up-sampling reference chroma point has a weight of 1/4. For the second interpolation point in FIG. 15, the left up-sampling reference chroma point has a weight of 2/4, the right up-sampling reference chroma point has a weight of 2/4. For the third interpolation point in FIG. 15, the left up-sampling reference chroma point has a weight of 1/4, the right up-sampling reference chroma point has a weight of 3/4.
When the vertical up-sampling factor *upVer* is greater than 1, vertical up-sampling filtering is needed, the process of which is similar to the up-sampling, as detailed in the following formulas.

$$sum =(upVer\text{-}dY) \times predSamples[xVer][yVer] + dY \times predSamples[xVer] [yVer + upVer]$$
$$(39)$$

$$predSamples[xVer][yVer + dY] =(sum + upVer/2)/upVer \qquad (40)$$

where $(xVer, yVer ) =( m, n \times upVer-1)$, m=0, ..., predSizeH-1, n=0, ..., predSizeH-1, dY =1, ..., upVer-1.

This process is illustrated in FIG. 16. Take a 32×32 block as an example, after the horizontal up-sampling filtering illustrated in FIG. 14 is completed, upper reference chroma sample *refC_T* and all known points in the second prediction block are used as vertical up-sampling reference points, which are filled with black. Here, the points filled with black are up-sampling reference points, and prediction points between each two points filled with black in the vertical direction and obtained through linear interpolation are filled with gray.

The up-sampling adopts linear interpolation. According to formulas (39) and (40), the upper up-sampling reference point has a weight of *(upVer-dY)/upVer,* and a lower reference point has a weight of *dY/upVer,* where *dY=1, ..., upVer-1* (that is, a distance between the current interpolation point and the upper reference point). That is, when performing vertical interpolation, the weight relates to only the vertical up-sampling factor *upVer.*

As such, with the above process, *predSamples* obtained through interpolation is the prediction value of the final chroma prediction block of the WCP technology.

Further, in order to compensate for the instability caused by the inaccurate non-linear weight mapping model of WCP technology and the independent point-by-point prediction of each point, the embodiments of the disclosure can also consider filtering enhancement on the output prediction block. The prediction block to be filtering-enhanced may include the first prediction block before the up-sampling filtering, may include the second prediction block after the up-sampling filtering, or may include the first prediction block which does not need up-sampling filtering (when *upHor=upVer=1).*

Here, the enhancement filtering is bilateral filtering. The bilateral filtering is a non-linear filtering technique that can achieve edge preserving and denoising, it considers both spatial neighboring information and colour similarity information, which can preserve picture edges while denoising and smoothing pictures.

The bilateral filtering adopts two Gaussian filters. One Gaussian filter is for calculating a weight value of spatial proximity, which is the common Gaussian filter principle, and the other Gaussian filter is for calculating a weight value of sample value similarity. The bilateral filtering is achieved with the two Gaussian filters. In bilateral filtering, the optimized weight value is then convolved with the picture to achieve the effect of edge preservings and denoising. The weight value of the two Gaussian filters is obtained through formula (17) to formula (19). The optimized weight value w(*i, j, k, l*) is then convolved with the picture, to obtain the filtered prediction value illustrated in formula (20). It should be noted that, *predSamples*(*i,j*) is the filtered weight value, but *predSamples*(*i,j*) does not necessarily the final prediction value, but may be a filtered prediction value before up-sampling (here, *predSamples*(*i,j*) is not the final prediction value), may be a filtered prediction value after up-sampling, or may be a filtered chroma prediction value that does not need up-sampling.

It can be understood that in the embodiments of the disclosure, in addition to using bilateral filters as filtering methods, median filters can also be used to replace each sample of the picture with the median of neighboring (square area centered on the current sample) samples; Gaussian filters, Normalized block filters, etc. can also be used, which is not limited herein. Exemplary, for the normalization filter, the output sample value is an average vale of sample values (all samples have the same weighting factor) in a core window. The core is as follows:

$$K = \frac{1}{K_{width} \times K_{height}} \begin{bmatrix} 1 & 1 & 1 & \cdots & 1 \\ 1 & 1 & 1 & \cdots & 1 \\ \vdots & \vdots & \vdots & \cdots & 1 \\ \vdots & \vdots & \vdots & \cdots & 1 \\ 1 & 1 & 1 & \cdots & 1 \end{bmatrix} \qquad (41)$$

In order to improve WCP prediction performance, in addition to traditional filtering algorithms, a neural network can also be used to perform filtering enhancement on the WCP prediction output *predWcp.*

It can also be understood that in the embodiments of the disclosure, the traditional refining method for post-processing enhancement on the first prediction block outputted may also include the following.

(I) In order to further improve accuracy of a WCP prediction value, position-related refinement can be performed on *predWcp.* For example, a chroma compensation value for each sample to-be-predicted is calculated by using a reference sample that is near in spatial position, *predWcp* is refined by using the chroma compensation value, and the refined prediction value is used as the final chroma prediction value *predSamples.*

(2) Weighted average calculation can be performed on a chroma prediction value calculated in one or more other chroma prediction technologies and a chroma prediction value *predWcp* calculated in the WCP, and the weighted result is used as the final chroma prediction value *predSamples.* For the weighted average calculation, reference can be made to foregoing FIG. 8.

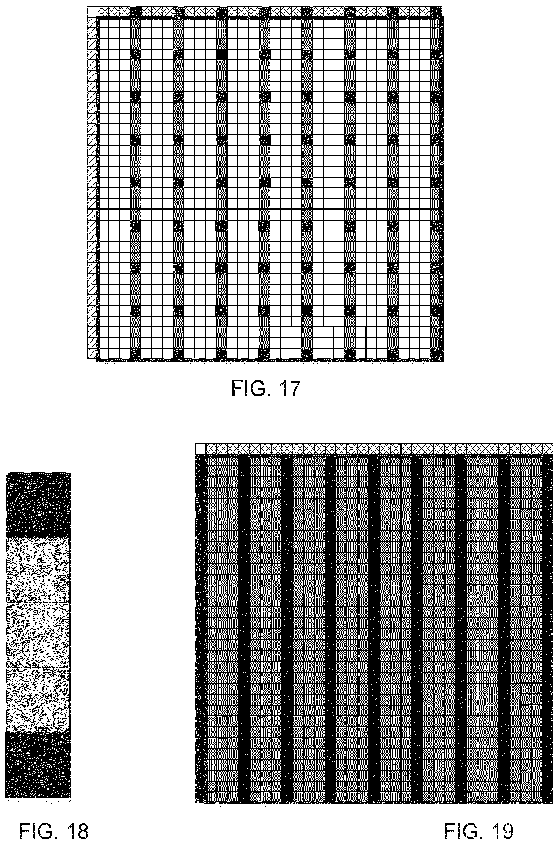

It can also be understood that in embodiments of the disclosure, for the up-sampling filtering, in addition to an up-sampling method of "first in the horizontal direction and then in the vertical direction", an up-sampling method of "first in the vertical direction and then in the horizontal direction" can also be used. Exemplary, in FIG. 17, take the 32×32 block as an example, the points filled with grid are upper reference reconstructed chroma sample *refC_T,* and the points filled with diagonal lines are left reference reconstructed chroma sample *refC_L.*

When the vertical up-sampling factor *upVer* is greater than 1, vertical up-sampling is performed first as follows:

$$\text{sum} = (\text{upVer-dY}) \times \text{predSamples}[\text{xVer}][\text{yVer}] + \text{dY} \times \text{predSamples}[\text{xVer}][\text{yVer} + \text{upVer}] \quad (42)$$

$$\text{predSamples}[\text{xVer}][\text{yVer} + \text{dY}] = (\text{sum} + \text{upVer}/2)/\text{upVer} \quad (43)$$

where (xVer, yVer) =(m, n×upVer-1), m=0, ..., predSizeH-1, n=0, ..., predSizeH-1, dY=1, ..., upVer-1.

This process is illustrated in FIG. 17. Take a 32×32 block as an example, points in the upper reference chroma sample *refC_T* that correspond to vertical positions at which *predWcp* is filled during vertical up-sampling will also be sued as up-sampling reference points, and are filled with black. As such, all points filled with black are up-sampling reference points, and a prediction block between each two black filled points in the vertical direction and is obtained through linear interpolation is filled with gray.

Up-sampling adopts linear interpolation. According to formulas (42) and (43), an upper up-sampling reference point has a weight of *(upVer-dY)/upVer,* and a lower reference point has a weight of *dY/upVer,* where *dY=1, ..., upVer-1* (that is, a distance between the current interpolation point and the upper reference point). That is, in vertical interpolation, the weight relates to only the vertical up-sampling factor *upVer.* FIG. 18 illustrates an example of weights. In this example, *upVer=4.* For the first interpolation point in FIG. 18, the upper up-sampling reference chroma point has a weight of 5/8, the lower up-sampling reference chroma point has a weight of 3/8. For the second interpolation point in FIG. 18, the upper up-sampling reference chroma point has a weight of 4/8, the lower up-sampling reference chroma point has a weight of 4/8. For the third interpolation point in FIG. 18, the upper up-sampling reference chroma point has a weight of 3/8, the lower up-sampling reference chroma point has a weight of 5/8.

When the horizontal up-sampling factor *upHor* is greater than 1, horizontal up-sampling is needed, which is similar to the vertical up-sampling, as detailed in the following formulas:

$$\text{sum} = (\text{upHor-dX}) \times \text{predSamples}[\text{xHor}][\text{yHor}] + \text{dX} \times \text{predSamples}[\text{xHor} + \text{upHor}][\text{yHor}] \quad (44)$$

$$\text{predSamples}[\text{xHor} + \text{dX}][\text{yHor}] = (\text{sum} + \text{upHor}/2)/\text{upHor} \quad (45)$$

where (xHor, yHor) = (m×upHor-1, n×upVer-1), m=0, ..., predSizeW-1, n=1, ..., predSizeW, dX=1, ..., upHor-1.

This process is illustrated in FIG. 19. Take a 32×32 block as an example, after the vertical up-sampling filtering illustrated in FIG. 17 is completed, left reference chroma sample *refC_L* and all known points in the second prediction block are used as horizontal up-sampling reference points, which are filled with black. Here, the points filled with black are up-sampling reference points, and prediction points between each two points filled with black in the horizontal direction and obtained through linear interpolation are filled with gray.

The up-sampling also adopts linear interpolation, that is, the value of each interpolated point (filled with gray) between two up-sampling chroma reference points (filled with black) is a weighted average of two up-sampling reference chroma points. According to formulas (44) and (45), the weight of the left up-sampling reference chroma point is *(upHor-dX)/ upHor,* and the weight of the right reference chroma point is *dX/upHor,* where *dX=1,..., upHor-1* (that is, the distance between the current interpolation point and the left reference point). That is, during horizontal interpolation, the weight is only related to the horizontal up-sampling factor *upHor.*

As such, with the above process, *predSamples* obtained after interpolation is the prediction value of the final chroma prediction block in WCP technology.

It can also be understood that in embodiments of the disclosure, a chroma prediction value obtained through up-sampling "first in the horizontal direction and then in the vertical direction" and a chroma prediction value obtained through up-sampling "first in the vertical direction and then in the horizontal direction" can be averaged to obtain the final chroma prediction value. Alternatively, when performing up-sampling through linear interpolation, the value of each interpolated point (filled with gray) between two up-sampling chroma reference points (filled with black) can be the average value of two up-sampling reference chroma points, that is, the weight is 1/2. Alternatively, in addition to traditional up-sampling, convolution operations in neural network structures can also be used to replace up-sampling operations, which is not limited herein.

Embodiments provide a decoding method. The implementations of the foregoing embodiments are described in detail in embodiments. As can be seen, with the technical solutions of the foregoing embodiments, it is possible to improve accuracy of a chroma prediction value in a WCP prediction technology. Specifically, a weighting factor is calculated according to reference information of the neighbouring area and luma information of the current block, and the weighting factor is used for chroma prediction of the current block. In this way, the correlation between the current block and the neighbouring area in terms of luma information is fully utilized for chroma prediction of the current block, thereby improving accuracy of chroma prediction. For example, the decoding method is applied to a test software enhanced compression model (ECM) 3.1, and tested under an all intra frame (All Intra) condition at 48 frame intervals. Bjøntegaard-Delta rate (BD-rate) changes (i. e. average bit-rate changes under the same peak signal to noise ratio (PSNR)) of - 0.10%, - 0.74%, and - 0.61% can be achieved in Y, Cb, and Cr respectively. There will be better performance for a higher resolution sequence, and a BD-rate change of up to - 0.24% in Y can be achieved for test sequence Class A1. In addition, for the post-processing performed on the chroma prediction block outputted in WCP, which can utilize the low sensitivity of human eyes to chroma, and in order to reduce the complexity in chroma weighting calculation, the situation where the core parameter *predSizeW×predSizeH* is less than or equal to *nTbW×nTbH* in the WCP mode is fully considered. When *predSizeW×predSizeH* is less than *nTbW×nTbH,* up-sampling filtering is needed, and with up-sampling filtering that is "first in horizontal direction and then in vertical direction", different weights are assigned to different points to-be-interpolated between existing neighbouring points, as such, spatial correlation between the point to-be-interpolated and the existing points are fully considered. Reference chroma *refC_T* and *refC_L* are used as reference for up-sampling filtering, as such, characteristics in different directions are considered to obtain the final up-sampled prediction value. Besides, filtering enhancement can be performed on chroma prediction blocks that subject to up-sampling filtering and chroma prediction blocks that do not need up-sampling filtering (when *predSizeW×predSizeH* is equal to *nTbW×nTbH*). Bilateral filtering can achieve edge preserving and denoising, which can further improve the accuracy in chroma prediction.

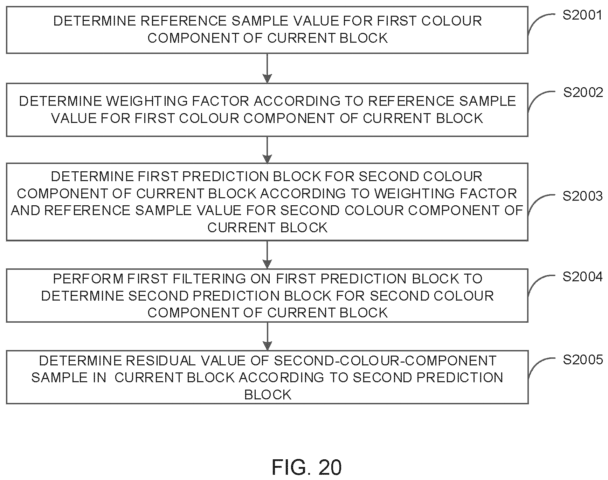

In another embodiment of the disclosure, referring to FIG. 20, FIG. 20 is schematic flowchart I of an encoding method provided in embodiments of the disclosure. As illustrated in FIG. 18, the method can include the following.

S2001, a reference sample value for a first colour component of a current block is determined.

It should be noted that, the encoding method in embodiments of the disclosure is applied to an encoding apparatus, or an encoding device (can also be referred to as an "encoder" for short) integrating the encoding apparatus. In addition, the encoding method in embodiments of the disclosure can specifically refer to an intra prediction method, and more specifically, to a WCP post processing method.

In embodiments of the disclosure, a video picture can be partitioned into multiple coding blocks, and each coding block can include a first colour component, a second colour component, and a third colour component. The current block herein refers to a coding block on which intra prediction is currently to be performed in the video picture. In addition, assuming that a first colour component of the current block is to be predicted and the first colour component is a luma component, that is, a colour component to-be-predicted is a luma component, the current block can also be called a luma prediction block. Alternatively, assuming that a second colour component of the current block is to be predicted and the second colour component is a chroma component, that is, the colour component to-be-predicted is a chroma component, the current block can also be called a predicted chroma block.

It should be further noted that, in embodiments of the disclosure, reference information for the current block can include a value of a first-colour-component sample in a neighbouring area of the current block and a value of a second-colour-component sample in the neighbouring area of the current block, and these samples can be determined from decoded samples in the neighbouring area of the current block. In some embodiments, the neighbouring area of the current block can include at least one of: a top neighbouring area, a top-right neighbouring area, a left neighbouring area, or a bottom-left neighbouring area.

In some embodiments, the reference sample value for the first colour component of the current block can be determined as follows. The reference sample value for the first colour component of the current block is determined according to a value of a first-colour-component sample in the neighbouring area of the current block.

It should be noted that, in embodiments of the disclosure, the reference sample for the current block can refer to a reference sample neighbouring the current block, and can also be referred to as a first-colour-component sample and a second-colour-component sample in the neighbouring area of the current block, which are referred to as "neighbouring sample" or "reference sample". In addition, in embodiments of the disclosure, the first colour component is a luma component, and the second colour component is a chroma component. In this case, the value of the first-colour-component sample in the neighbouring area of the current block refers to reference luma information corresponding to the reference sample for the current block, and a value of the second-colour-component sample in the neighbouring area of the current block refers to reference chroma information corresponding to the reference sample for the current block.

In some embodiments, in terms of determining the value of the first-colour-component sample, the method can further include the following. The value of the first-colour-component sample is determined by selecting from first-colour-component samples in the neighbouring area.

It should be noted that, among the first-colour-component samples in the neighbouring area, there can be some unimportant samples (for example, these samples have poor correlation) or some abnormal samples. To ensure accuracy of prediction, these samples need to be removed, so as to obtain a value of a valid first-colour-component sample. That is, in embodiments of the disclosure, a first sample set is formed from the first-colour-component samples in the neighbouring area of the current block. In this case, the value of the first-colour-component sample can be determined by selecting from the first sample set.

In an embodiment, the value of the first-colour-component sample can be determined by selecting from the first-colour-component samples in the neighbouring area as follows. A sample position to-be-selected is determined according to a position and/or a colour component intensity of the first-colour-component sample in the neighbouring area. The value of the first-colour-component sample is determined from the neighbouring area according to the sample position to-be-selected.

It should be noted that, in embodiments of the disclosure, the colour component intensity can be represented by colour component information, for example, reference luma information and reference chroma information. Here, a greater value of the colour component information represents a higher colour component intensity. In this way, selection from the first-colour-component samples in the neighbouring area can be performed according to the sample position or according to the colour component intensity, so as to determine a valid first-colour-component sample from the sample thus selected, thereby determining the value of the first-colour-component sample.

In some embodiments, the reference sample value for the first colour component of the current block can be further determined as follows. Second filtering is performed on the value of the first-colour-component sample to obtain a filtered neighbouring sample value for the first colour component of the current block. The reference sample value for the first colour component of the current block is determined according to the filtered neighbouring sample value for the first colour component of the current block.

In embodiments of the disclosure, the number of filtered neighbouring sample values for the first colour component of the current block is less than the number of values of the first-colour-component samples.

In embodiments of the disclosure, the second filtering can be down-sampling filtering. The first colour component is a luma component. Up-sampling filtering can be performed on the reference luma information, such that the spatial resolution of the filtered reference luma information is the same as the spatial resolution of the reference chroma information.

In some embodiments, the reference sample value for the first colour component of the current block can be further determined as follows. The reference sample value for the first colour component of the current block is determined based on a reconstructed value of a first-reference-colour-component sample in the current block.

In embodiments of the disclosure, the first reference colour component can be a luma component. In this case, the reconstructed value of the first-reference-colour-component sample in the current block is reconstructed luma information of the current block.

Further, in some embodiments, the reference sample value for the first colour component of the current block can be further determined as follows. Third filtering is performed on the reconstructed value of the first-reference-colour-component sample in the current block to obtain a filtered sample value of the first-reference-colour-component sample in the current block. The reference sample value for the first colour component of the current block is determined according to the filtered sample value of the first-reference-colour-component sample in the current block.

In embodiments of the disclosure, the number of filtered sample values of the first-reference-colour-component samples in the current block is less than the number of reconstructed values of the first-reference-colour-component samples in the current block.

In embodiments of the disclosure, the third filtering can be down-sampling filtering. The first reference colour component is a luma component, down-sampling filtering can be performed on the reconstructed luma information of the current block.

It can be understood that, in embodiments of the disclosure, the reference sample value for the first colour component of the current block can also be set to luma difference information. Therefore, in a possible implementation, the reference sample value for the first colour component of the current block is set to an absolute value of a difference between the value of the first-colour-component sample and the reconstructed value of the first-reference-colour-component sample.

In another possible implementation, the reference sample value for the first colour component of the current block is set to an absolute value of a difference between the filtered neighbouring sample value for the first colour component and the reconstructed value of the first-reference-colour-component sample.

In another possible implementation, the reference sample value for the first colour component of the current block is set to an absolute value of a difference between the filtered neighbouring sample value for the first colour component and the filtered sample value of the first-reference-colour-component sample.

In another possible implementation, the reference sample value for the first colour component of the current block is set to an absolute value of a difference between the value of the first-colour-component sample and the filtered sample value of the first-reference-colour-component sample.

That is, according to known reference information of the current block, such as the reference luma information of the neighbouring area of the current block, reconstructed luma information in the current block, filtering can be performed before weighted prediction, specifically, down-sampling filtering can be performed on reference luma information in the neighbouring area of the current block, or down-sampling filtering can be performed on the reconstructed luma information of the current block, or down-sampling filtering can be performed on both the reference luma information and the reconstructed luma information, or no down-sampling filtering is performed on the reference luma information and the reconstructed luma information. Then, the luma difference information can be determined according to different combinations of the above cases, and the luma difference information is used as the reference sample value for the first colour component of the current block.

S2002, a weighting factor is determined according to the reference sample value for the first colour component of the current block.

It should be noted that, in embodiments of the disclosure, the weighting factor can be determined according to the reference sample value for the first colour component of the current block as follows. A value corresponding to the reference sample value for the first colour component in a preset mapping is determined. The weighting factor is set to be equal to the value.

It can be understood that, in embodiments of the disclosure, the reference sample value for the first colour component can be the absolute value of the difference between the filtered neighbouring sample value for the first colour component of the current block and the filtered sample value of the first-reference-colour-component sample in the current block. The first reference colour component is the first colour component, and the first colour component is a colour component different from a second colour component to-be-predicted in embodiments of the disclosure.

It should be noted that, in embodiments of the disclosure, when predicting a chroma component of a sample to-be-predicted in the current block, at least one sample to-be-predicted in the current block can be selected, and a luma difference (represented by $|\Delta Y_k|$) between reconstructed luminance thereof and reference luminance of the neighbouring area is calculated. A smaller $|\Delta Y_k|$ indicates higher similarity between luma values, and the corresponding weighting factor (represented by $w_k$) can be given a greater value; on the contrary, a greater $|\Delta Y_k|$ indicates lower similarity between luma values, and $w_k$ can be given a smaller value. That is, in the preset mapping, $w_k$ and $|\Delta Y_k|$ are in approximately inverse proportion.

Further, in some embodiments, the value corresponding to the reference sample value for the first colour component in the preset mapping can be determined as follows. A first factor is determined. A first product value is determined according to the first factor and the reference sample value for the first colour component. A value corresponding to the first product value in the preset mapping is determined.

In an embodiment, the first factor can be determined as follows. The first factor is a preset constant value.

In another embodiment, the first factor can be determined as follows. A value of the first factor can be determined according to a size parameter of the current block.

Further, in some embodiments, the method can further include the following. The value of the first factor is determined according to a preset mapping look-up table between the size parameter of the current block and the value of the first factor.

Here, the size parameter of the current block can include at least one of: a width of the current block, or a height of the current block.

It should be noted that, in embodiments of the disclosure, the value of the first factor can be set by means of classification. For example, the size parameter of the current block is classified into three categories, and the value of the first factor corresponding to each category is determined. In this case, in embodiments of the disclosure, the mapping look-up table between the size parameter of the current block and the value of the first factor can also be pre-stored, and then the value of the first factor can be determined according to the look-up table. Exemplarily, the foregoing Table 1 shows a correspondence between the first factor and the size parameter of the current block.

In another embodiment, the first factor can be determined as follows. The value of the first factor is determined according to the number of reference samples for the current block.

Further, in some embodiments, the method can further include the following. The value of the first factor is determined according to a preset mapping look-up table between the number of reference samples for the current block and the value of the first factor.

It should be noted that, in embodiments of the disclosure, the number of reference samples can be classified into three categories, and the value of the first factor can also be set by means of classification. For example, the number of reference samples for the current block is classified into three categories, and the value of the first factor corresponding to each category is determined. In this case, in embodiments of the disclosure, the mapping look-up table between the number of reference samples for the current block and the value of the first factor can also be pre-stored, and then the value of the first factor can be determined according to the look-up table. Exemplarily, the foregoing Table 2 shows a correspondence between the first factor and the number of reference samples for the current block.

Further, for the first product value, the first product value can be determined according to the first factor and the reference sample value for the first colour component as follows. The first product value is set to be equal to a product of the first factor and the reference sample value for the first colour component. Alternatively, the first product value is set to be equal to a numerical value obtained by right-shifting the reference sample value for the first colour component, where the number of bits right shifted is equal to the first factor. Alternatively, the first product value is set to a value obtained by performing addition and bit shift on the reference sample value for the first colour component according to the first factor.

Exemplarily, assuming that the first factor is equal to 0.25, and the reference sample value for the first colour component is represented by *Ref*, then the first product value can be equal to $0.25 \times Ref$, and $0.25 \times Ref$ can also be represented by *Ref*/4, that is, *Ref>>2*. In addition, in fixed-point calculation, a floating-point number can be converted into addition and shift operations. That is, there is no limitation on the manner for calculation of the first product value.

It can also be understood that, in embodiments of the disclosure, the first reference colour component can also be a chroma component, that is, at least one sample to-be-predicted in the current block is selected, and a chroma difference (represented by $|\Delta C_k|$) between reconstructed chrominance thereof and reference chrominance of the neighbouring area is calculated. A smaller $|\Delta C_k|$ indicates higher similarity between chroma values, and the corresponding weighting factor (represented by $w_k$) can be given a greater value; on the contrary, a greater $|\Delta C_k|$ indicates lower similarity between chroma values, and $w_k$ can be given a smaller value. That is, when calculating the weighting factor, the reference sample value for the first colour component can also be $|\Delta C_k|$, and then the weighting factor can be calculated.

To summarize, in embodiments of the disclosure, the reference sample value for the first colour component can be $|\Delta C_k|$, that is, an absolute value of the chroma difference. Alternatively, the reference sample value for the first colour component can be $|\Delta Y_k|$, that is, an absolute value of the luma difference. Alternatively, the reference sample value for the first colour component can be $|\alpha\Delta Y_k|$, that is, a product of the absolute value of the luma difference and a preset multiplier. Here, the preset multiplier is a second factor described in embodiments of the disclosure.

Further, for the second factor, in an embodiment, the method can include the following. The second factor is determined by performing least squares calculation on a first-colour-component value of the reference sample and a second-colour-component value of the reference sample.

That is, assuming that the number of reference samples is *N*, the first-colour-component value of the reference sample is the reference luma information for the current block, and the second-colour-component value of the reference sample is the reference chroma information for the current block, then least squares calculation can be performed on chroma component values and luma component values of the *N* reference samples, so as to obtain the second factor. Exemplarily, the least squares regression calculation can be as illustrated in formula (5) above, and then the second factor can be calculated.

In addition, for the preset mapping, the preset mapping can be a preset function relationship. In some embodiments, the preset mapping can be a Softmax function, as illustrated in the foregoing formula (6) or formula (7). The Softmax function is normalized exponential function. However, in embodiments of the disclosure, normalization may not be needed, and the value thereof is not limited to the range of [0, 1].

It should be further noted that, in addition to the Softmax function, in other embodiments, the preset mapping can be a weighting function that is in inverse proportion with the reference sample value for the first colour component, as illustrated in the foregoing formula (8) or formula (9).

In this way, the preset mapping can be as illustrated in formula (4), or can be as illustrated in formula (6) or formula (7), or can be as illustrated in formula (8) or formula (9), or can even be another function model of the weighting factor that is constructed by fitting the tendency that higher similarity between the reference luma value of the reference sample and the reconstructed luma value of the sample to-be-predicted in the current block leads to higher importance of a reference chroma value of the reference sample to the sample to-be-predicted in the current block. The preset mapping can be a preset look-up table, for example, using array element look-up table to reduce some calculation operations. Embodiments of the disclosure are not limited in this regard.

In this way, the weighting factor can be determined according to the reference sample value (such as $|\Delta Y_{kij}|$) for the first colour component, and the weighting factor can specifically include *N* weighting factors, namely $w_1$, $w_2$, ..., $w_N$, where *N* indicates the number of reference sample values for the second colour component. Here, theoretically, the sum of the *N* weighting factors is equal to 1, and each of the weighting factors is a value greater than or equal to 0 and less than or equal to 1. However, it should be noted that "the sum of N weighting factors equals 1" is only a theoretical concept. In the actual fixed-point implementation process, the absolute value of the weighting factor can be greater than 1.

S2003, a first prediction block for the second colour component of the current block is determined according to the weighting factor and a reference sample value for the second colour component of the current block.

It should be noted that, in embodiments of the disclosure, the first prediction block includes prediction values of at least part of the second-colour-component samples in the current block.

It should be further noted that, in embodiments of the disclosure, in terms of determining the reference sample value for the second colour component of the current block, the method can further include the following. The reference sample value for the second colour component of the current block is determined according to a value of a second-colour-component sample in the neighbouring area of the current block. Here, the neighbouring area can include at least one of: a top neighbouring area, a top-right neighbouring area, a left neighbouring area, or a bottom-left neighbouring area.

In an embodiment, the method can further include the following. Fourth filtering is performed on the value of the second-colour-component sample in the neighbouring area of the current block, to obtain a filtered neighbouring sample value for the second colour component of the current block. The reference sample value for the second colour component of the current block is determined according to the filtered neighbouring sample value for the second colour component of the current block.

In embodiments of the disclosure, the number of filtered neighbouring sample values for the second colour component of the current block is greater than the number of values of the second-colour-component samples in the neighbouring area of the current block.

In embodiments of the disclosure, the fourth filtering can be up-sampling filtering, and an up-sampling rate is a positive integer multiple of 2.

That is to say, the first colour component is a luma component, the second colour component is a chroma component, and up-sampling filtering can be performed on reference chroma information, such that the spatial resolution of the filtered reference luma information is the same as the spatial resolution of the reference chroma information. Exemplarily, if there are $2M+2N$ pieces of reference luma information and $M+N$ pieces of reference chroma information, then after up-sampling filtering on the reference chroma information, there will be $2M+2N$ pieces of reference chroma information.

It should be further noted that, in embodiments of the disclosure, no matter whether it is the second filtering performed on the value of the first-colour-component sample in the neighbouring area, or the third filtering performed on the reconstructed value of the first-reference-colour-component sample in the current block, the two types of filtering can be down-sampling filtering. The second filtering can be performed by using a first filter, and the third filtering can be performed by using a second filter. The first filter and the second filter can all be down-sampling filters. Due to different data to-be-processed, down-sampling rates of these filters can also be different, and therefore, the first filter can be the same as or different from the second filter. The fourth filtering can be performed on the value of the second-colour-component sample in the neighbouring area. The fourth filtering can be performed by using a third filter. If the fourth filtering is up-sampling filtering, the third filter can be an up-sampling filter. In addition, the first filter, the second filter, and the third filter can all be neural-network filters, which are not limited in this regard.

It can be understood that, assuming that the first colour component is a luma component and the second colour component is a chroma component, since the spatial resolution of the value (namely, reference luma information) of the first-colour-component sample in the neighbouring area, the spatial resolution of the value (namely, reference chroma information) of the second-colour-component sample in the neighbouring area, and even the spatial resolution of the reconstructed value (namely, reconstructed luma information) of the first-reference-colour-component sample in the current block will be affected by colour format information, the second filtering, the third filtering, or the fourth filtering can also be performed according to the current colour format information. Taking the fourth filtering as an example below, in some embodiments, the method can further include the following. Based on the colour format information, the fourth filtering is performed on the value of the second-colour-component sample in the neighbouring area of the current block, to obtain the filtered neighbouring sample value for the second colour component of the current block.

In an embodiment, for the fourth filtering, the method can further include the following. If the colour format information indicates 4:2:0 sampling, up-sampling filtering is performed on the value of the second-colour-component sample in the neighbouring area of the current block, where an up-sampling rate is a positive integer multiple of 2.

It should be noted that, in embodiments of the disclosure, if the colour format information indicates that the spatial resolution of the luminance is equal to the spatial resolution of the chrominance (such as a YUV444 format), no operation needs to be performed on the reference chroma information. If the colour format information indicates that the spatial resolution of the luminance is inconsistent with the spatial resolution of the chrominance (such as a video with chroma sub-sampling characteristics such as a 4:2:2 format/4:1:1 format/4:2:0 format), and the spatial resolution of the chroma component is lower than the spatial resolution of the luma component, then up-sampling filtering needs to be performed on the reference chroma information obtained from the neighbouring area.

In this way, with regard to up-sampling filtering performed on the reference chroma information, the manner for the up-sampling filtering can be any one of linear interpolation methods, such as nearest neighbour interpolation, bilinear interpolation, bicubic interpolation, mean interpolation, median interpolation, copy interpolation, etc. Alternatively, the manner for up-sampling filtering can be any one of nonlinear interpolation methods, such as a wavelet transform-based interpolation algorithm or an edge information-based interpolation algorithm. Alternatively, up-sampling filtering can also be performed based on a convolutional neural network (CNN). Embodiments of the disclosure are not limited in this regard.

Further, after the reference sample value for the second colour component of the current block is determined, in some embodiments, for S1803, the first prediction block for the second colour component of the current block can be determined according to the weighting factor and the reference sample value for the second colour component of the current block as follows. A weighted value obtained by multiplying the reference sample value for the second colour component by a corresponding weighting factor is determined. A prediction value of a second-colour-component sample in the first prediction block is set to be equal to a sum of $N$ weighted values, where $N$ represents the number of reference sample values for the second colour component, and $N$ is a positive integer.

That is, if the number of the reference sample values for the second colour component is $N$, a weighted value (namely $w_k C_k$) obtained by multiplying each reference sample value for the second colour component by a corresponding weighting factor is firstly determined, and then the sum of the $N$ weighted values is used as the prediction value of the second-colour-component sample in the prediction block. Specifically, the formula for calculation is illustrated in the foregoing formula (16). It should be noted that, in this way, it is conducive to parallel processing and higher calculation speed.

In embodiments of the disclosure, it is assumed that the width of the first prediction block is *predSizeW,* the height of the first prediction block is *predSizeH,* the width of the current block is *nTbW,* and the height of the current block is *nTbH,* then *predSizeH* is less than or equal to *nTbH,* or *predSizeW* is less than or equal to *nTbW.* That is, the first prediction block includes predictions values of at least part of the second-colour-component samples in the current block.

S2004, first filtering is performed on the first prediction block to determine a second prediction block for the second colour component of the current block.

S2005, a reconstructed value of a second-colour-component sample in the current block is determined according to the second prediction block.

It should be noted that, in embodiments of the disclosure, if the first prediction block comprises prediction values of some of the second-colour-component samples in the current block, then up-sampling filtering is required for the first prediction block, to obtain the final second prediction block. Therefore, in some embodiments, "first filtering is performed on the first prediction block to determine the second prediction block for the second colour component of the current block" can include the following: up-sampling filtering is performed on the first prediction block to determine the second prediction block for the second colour component of the current block.

It should be noted that, in embodiments of the disclosure, if the number of prediction values of the second colour component in the second prediction block is the same as the second-colour-component samples in the current block, but the second prediction block does not include the prediction values of the second-colour-component samples in the current block, filtering enhancement needs to be performed on the prediction value to obtain the final second prediction block. Therefore, in some embodiments, "first filtering is performed on the first prediction block to determine the second prediction block for the second colour component of the current block" can include the following: filtering enhancement is performed on the first prediction block, to determine the second prediction block for the second colour component of the current block.

It should be noted that, in embodiments of the disclosure, if the first prediction block includes the prediction values of all the second-colour-component samples in the current block, no processing is required for the first prediction block, and the first prediction block can be used as the final second prediction block directly.

It should be noted that, in embodiments of the disclosure, the first filtering can be up-sampling filtering or can be filtering enhancement, which is not limited herein. For the second prediction block subject to the first filtering, the second prediction block includes the prediction values of all the second-colour-component samples in the current block.

Here, when the first filtering is up-sampling filtering, the up-sampling filtering can be performed on the first prediction block with a fourth filter. The fourth filter can be an up-sampling filter and can be the same as or different from the third filter. The fourth filter can be a neural network filter, which is not limited herein.

In some embodiments, the first filtering can be performed on the first prediction block to determine the second prediction block for the second colour component of the current block as follows. The first filtering includes up-sampling filtering, where an input of the up-sampling filtering is a first up-sampling input block, and an output of the up-sampling filtering is a first up-sampling output block.

Further, in some embodiments, the up-sampling filtering can be performed as follows. An up-sampling factor is determined, where the up-sampling factor includes at least one of a horizontal up-sampling factor or a vertical up-sampling factor. Up-sampling filtering is performed on the first up-sampling input block according to the up-sampling factor, to obtain the first up-sampling output block.

In a possible implementation, up-sampling filtering can be performed on the first up-sampling input block according to the up-sampling factor to obtain the first up-sampling output block as follows. If the horizontal up-sampling factor is greater than 1 or the vertical up-sampling factor is greater than 1, up-sampling filtering is performed on the first up-sampling input block to obtain the first up-sampling output block.

In embodiments of the disclosure, performing up-sampling filtering on the first up-sampling input block includes at least one of: performing up-sampling filtering on the first up-sampling input block in a horizontal direction; performing up-sampling filtering on the first up-sampling input block in a vertical direction; performing up-sampling filtering on the first up-sampling input block in a horizontal direction and then in a vertical direction; or performing up-sampling filtering on the first up-sampling input block in a vertical direction and then in a horizontal direction.

Here, the horizontal up-sampling factor can be calculated according to the width of the first up-sampling input block and the width of the first up-sampling output block, and the vertical up-sampling factor can be calculated according to the height of the first up-sampling input block and the height of the first up-sampling output block. Then up-sampling filtering is performed on the first up-sampling input block according to the horizontal up-sampling factor and the vertical up-sampling factor. Specifically, if the horizontal up-sampling factor is greater than 1 and the vertical up-sampling factor is equal to 1, only horizontal up-sampling needs to be performed on the first up-sampling input block. If the horizontal up-sampling factor is equal to 1 and the vertical up-sampling factor is greater than 1, only vertical up-sampling needs to be performed on the first up-sampling input block. If the horizontal up-sampling factor is greater than 1 and the vertical up-sampling factor is greater than 1, both horizontal up-sampling and vertical up-sampling need to be performed on the first up-sampling input block. Firstly, horizontal up-sampling and then vertical up-sampling can be performed, or firstly vertical up-sampling and then horizontal up-sampling can be performed, or the up-sampling filtering operation herein can even be replaced by a convolution operation in a neural network structure, which is not limited in embodiments of the disclosure.

In another possible implementation, up-sampling filtering is performed on the first prediction block to determine the second prediction block. In this case, the method can further include the following. The first prediction block is taken as the first up-sampling input block, and the first up-sampling output block is taken as the second prediction block for the second colour component of the current block.

In another possible implementation, firstly enhancement filtering and then up-sampling filtering are performed on the first prediction block to determine the second prediction block. In this case, the method can further include the following. Filtering enhancement is performed on the first prediction block to determine a first enhanced prediction block. The first enhanced prediction block is taken as the first up-sampling input block, and the first up-sampling output block is taken as the second prediction block for the second colour component of the current block.

In another possible implementation, firstly up-sampling filtering and then enhancement filtering are performed on the first prediction block to determine the second prediction block. In this case, the method can further include the following. The first prediction block is taken as the first up-sampling input block, and the first up-sampling output block is taken as a first up-sampling-filtered prediction block. Filtering enhancement is performed on the first up-sampling-filtered prediction block, to determine the second prediction block for the second colour component of the current block.

In another possible implementation, firstly enhancement filtering, then up-sampling filtering, and then enhancement filtering is performed on the first prediction block, to determine the second prediction block. In this case, the method can further include the following. First filtering enhancement is performed on the first prediction block to determine a second enhanced prediction block. The second enhanced prediction block is taken as the first up-sampling input block, and the first up-sampling output block is taken as a second up-sampling-filtered prediction block. Second filtering enhancement is performed on the second up-sampling-filtered prediction block, to determine the second prediction block for the second colour component of the current block.

It should be noted that, when the first filtering is up-sampling filtering, the up-sampling filtering can be performed on the first prediction block with a horizontal up-sampling factor and a vertical up-sampling factor. In some embodiments, the up-sampling filtering is performed on the first prediction block to determine the second prediction block for the second colour component of the current block as follows: a horizontal up-sampling factor and a vertical up-sampling factor are determined; the up-sampling filtering is performed on the first prediction block with the horizontal up-sampling factor and the vertical up-sampling factor, to obtain the second prediction block for the second colour component of the current block.

In some embodiments, the up-sampling filtering is performed on the first prediction block with the horizontal up-sampling factor and the vertical up-sampling factor, to obtain the second prediction block for the second colour component of the current block, as follows: if the horizontal up-sampling factor is greater than 1, or the vertical up-sampling factor is greater than 1, the up-sampling filtering is performed on the first prediction block, to obtain the second prediction block.

In embodiments of the disclosure, performing up-sampling filtering on the first up-sampling input block includes at least one of: performing up-sampling filtering on the first up-sampling input block in a horizontal direction; performing up-sampling filtering on the first up-sampling input block in a vertical direction; performing up-sampling filtering on the first up-sampling input block in a horizontal direction and then in a vertical direction; or performing up-sampling filtering on the first up-sampling input block in a vertical direction and then in a horizontal direction.

Here, the horizontal up-sampling factor can be calculated according to the width of the first prediction block and the width of the current block, and the vertical up-sampling factor can be calculated according to the height of the first prediction block and the height of the current block. Then, up-sampling filtering is performed on the first prediction block according to the horizontal up-sampling factor and the vertical up-sampling factor. Specifically, if the horizontal up-sampling factor is greater than 1 and the vertical up-sampling factor is equal to 1, only horizontal up-sampling needs to be performed on the first prediction block. If the horizontal up-sampling factor is equal to 1 and the vertical up-sampling factor is greater than 1, only vertical up-sampling needs to be performed on the first prediction block. If the horizontal up-sampling factor is greater than 1 and the vertical up-sampling factor is greater than 1, both horizontal up-sampling and vertical up-sampling need to be performed on the first prediction block. Firstly, horizontal up-sampling and then vertical up-sampling can be performed, or firstly vertical up-sampling and then horizontal up-sampling can be performed, or the up-sampling operation herein can even be replaced by a convolution operation in a neural network structure, which is not limited in embodiments of the disclosure.

In some embodiments, the up-sampling filtering is implemented by one of: linear interpolation, or convolution operation based on a preset neural network. That is, the up-sampling filtering can be implemented with different filters, such as a two-dimensional filter, a one-dimensional filter, etc. For the one-dimensional filter, the filtering order thereof can be "firstly in a vertical direction and then in a horizontal direction", or "firstly in a horizontal direction and then in a vertical direction". The above two orders can be fixed filtering order, or can be a flexible filtering order determined according some parameters (for example, a filtering order directly indicated by identifier information, an implicit order related to prediction mode or block size, etc.), and embodiments of the disclosure are not limited in this regard.

In another possible implementation, when the first filtering is filtering enhancement, the filtering enhancement can be implemented through bilateral filtering. Specifically, performing the first filtering on the first prediction block to determine the second prediction block for the second colour component of the current block includes: determining a first weight value for the first prediction block in a bilateral filtering mode, performing bilateral filtering on the first prediction block according to the first weight value, to obtain the second prediction block.

In embodiments of the disclosure, in addition to bilateral filtering, filtering enhancement processing can also include median filtering, Gaussian filtering, normalization filtering, and so on. That is to say, filtering enhancement processing can include at least one of the following: bilateral filtering processing, median filtering processing, Gaussian filtering processing, and normalization filtering processing, but is not specifically limited.

Further, in some embodiments, the method further includes: before performing up-sampling filtering on the first prediction block, performing filtering enhancement on the first prediction block, and using the enhanced first prediction block as the first prediction block.

Further, in some embodiments, the method further includes: after performing up-sampling filtering on the first prediction block, performing filtering enhancement on the first prediction block subject to up-sampling filtering, to obtain a second prediction block for a second colour component of the current block.

That is to say, in embodiments of the disclosure, the first filtering process can be up-sampling filtering or filtering enhancement, or the first filtering process may include both up-sampling filtering and filtering enhancement. In this case, the up-sampling filtering can be performed on the first prediction block first and then the filtering enhancement is performed, or the filtering enhancement can be performed on the first prediction block first and then the up-sampling filtering is performed, which is not limited herein.

For *predSamples*(*i, j*) obtained in formula (20), *predSamples*(*i, j*) may not be the final prediction value, but may be a prediction value subject to filtering enhancement before up-sampling (here, *predSamples*(*i, j*) is not the final prediction value), or may be a prediction value subject to up-sampling and filtering enhancement, or may be prediction value subject to filtering enhancement without up-sampling.

Further, for filtering enhancement, in some embodiments, the method further includes: determining a compensation value of a second-colour-component sample of the first prediction block, according to a reference sample value in a neighbouring area of the current block, and refining a prediction value of the second-colour-component sample of the first prediction block according to the compensation value, to determine the second prediction block.

It should be noted that, in order to further improve prediction accuracy of the WCP mode, position-related refinement can be performed on the first prediction block. For example, a chroma compensation value for each second-colour-component sample to-be-predicted is calculated by using a reference sample that is near in spatial position, the second-colour-component sample in the second prediction block is refined by using the chroma compensation value, and a final prediction value (*predSamples*) of the second-colour-component sample is determined according to the refined prediction value, thereby obtaining the final second prediction block.

For filtering enhancement, the method further includes: prediction is performed on the second-colour-component sample in the first prediction block according to at least one prediction mode, to determine at least one initial prediction value of the second-colour-component sample in the second prediction block. Weighted average calculation is performed on the at least one initial prediction value and the prediction value of the second-colour-component sample in the first prediction block to determine the second prediction block.

It should be noted that, in order to further improve prediction accuracy of the WCP mode, weighted average calculation can also be performed on a chroma prediction value(s) calculated in another prediction mode(s) and a chroma prediction value calculated in the WCP mode, and a final predicted chroma value is determined according to the weighted result. Alternatively, in order to improve prediction accuracy of the WCP mode, a neural network model can be used to refine the chroma prediction value calculated in WCP, and embodiments of the disclosure are not limited in this regard.

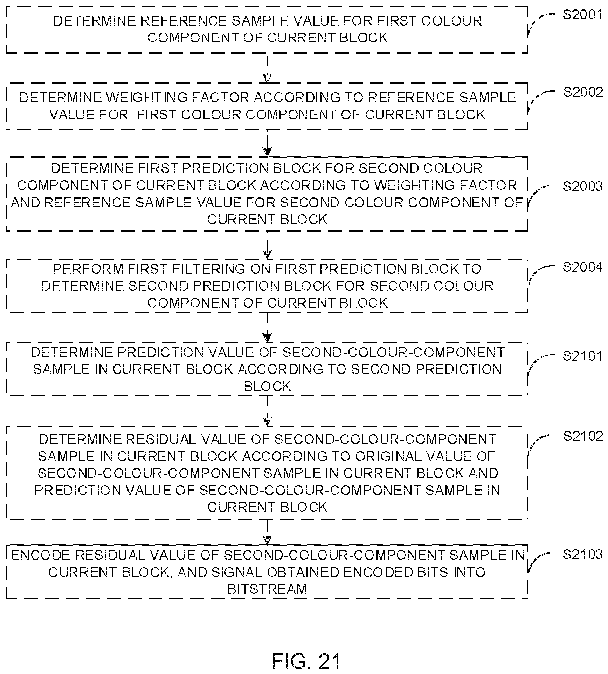

In some embodiments, as illustrated in FIG. 21, after the second prediction block is determined in S2004, the method can further include the following.

S2101, a prediction value of the second-colour-component sample in the current block is determined according to the second prediction block.

S2102, the residual value of the second-colour-component sample in the current block is determined according to an original value of the second-colour-component sample in the current block and the prediction value of the second-colour-component sample in the current block.

S2103, the residual value of the second-colour-component sample in the current block is encoded, and encoded bits obtained are signalled into a bitstream.

It should be noted that, in embodiments of the disclosure, the prediction value of the second-colour-component sample in the current block can be determined according to the second prediction block as follows. The prediction value of the second-colour-component sample in the current block can be set to be equal to a value of the second prediction block. Alternatively, up-sampling filtering can be performed on the value of the second prediction block, and the prediction value of the second-colour-component sample in the current block can be set to be equal to an output value after up-sampling filtering.

It should also be noted that, after the prediction value of the second-colour-component sample in the current block is determined, the residual value of the second-colour-component sample can be determined according to the original value of the second-colour-component sample and the prediction value of the second-colour-component sample. Specifically, the residual value of the second-colour-component sample can be determined by performing subtraction calculation on the original value of the second-colour-component sample and the prediction value of the second-colour-component sample. In this way, after the residual value of the second-colour-component sample is signaled into the bitstream, at a decoding end, the residual value of the second-colour-component sample can be obtained by decoding, so as to restore the reconstructed value of the second-colour-component sample in the current block.

It can be understood that, in embodiments of the disclosure, during prediction in the WCP mode, post-processing after the WCP prediction will be detailed below in four aspects. First, luma information of a reference sample and luma information of the current block are fully utilized, so as to realize calculation of a weighting factor of chrominance of the reference sample. Second, utilize the low sensitivity of human eyes to chromaticity and in order to reduce the complexity in calculation of the weighting factor of chrominance, core parameters of WCP mode is fully considered, that is, when $predSizeW \times predSizeH$ is less than or equal to $nTbW \times nTbH$, up-sampling is performed on the chroma predication block. Third, when performing up-sampling, reference chroma information is fully utilized, and characteristics in different directions is considered; during linear interpolation, different weight values are assigned to different points to-be-interpolated between existing neighbouring points, as such, spatial correlation between the points to-be-interpolated and existing points are fully considered, which can improve the accuracy of up-sampling filtering. Fourth, consider the possibility of unstable and inaccurate prediction values caused by the chroma prediction block output by WCP prediction as well as inaccurate prediction values caused by up-sampling filtering, for the chroma prediction blocks in those cases, filtering enhancement is performed with bilateral filtering which can achieve edge preserving and denoising, so as to further improve the accuracy and subjective/objective quality of the chroma prediction block. It should be noted that, the above four aspects are not in any particular order, and can be used individually or in combination.

Embodiments of the disclosure provide an encoding method. The reference sample value for the first colour component of the current block is determined. The weighting factor is determined according to the reference sample value for the first colour component of the current block. The first prediction block for the second colour component of the current block is determined according to the weighting factor and the reference sample value for the second colour component of the current block. First filtering is performed on the first prediction block to determine the second prediction block for the second colour component of the current block, where the second prediction block comprises prediction values of all second-colour-component samples in the current block. The reconstructed value of the second-colour-component sample in the current block is determined according to the second prediction block. As such, the weighting factor can be calculated with aid of the reference sample neighbouring the current block and colour component information of the current block, correlation between the current block and neighbouring areas in terms of luma information is fully taken into consideration, and such correlation is used in chroma prediction of the current block, so as to improve accuracy of chroma prediction. Considering that human eyes have low sensitivity to chroma information and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, and thus improve coding performance.

In another embodiment of the disclosure, embodiments of the disclosure further provide a bitstream. The bitstream is generated by performing bit encoding according to information to-be-encoded; The information to-be-encoded at least includes a residual value of a second-colour-component sample in a current block.

In embodiments of the disclosure, after the residual value of the second-colour-component sample in the current block is transmitted to a decoding end from encoding end, at the decoding end, the residual value of the second-colour-component sample is obtained by decoding, and then a reconstructed value of the second-colour-component sample in the current block can be restored according to a prediction value of the second-colour-component sample in the current block. Considering that human eyes have low sensitivity to chroma information and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, and thus improve coding performance.

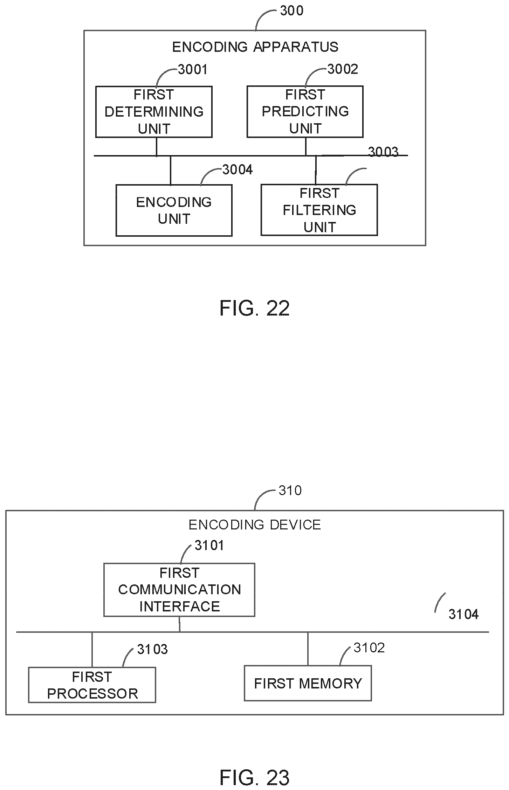

In still another embodiment of the disclosure, based on the same concept as the foregoing embodiment, referring to FIG. 22, FIG. 22 is a schematic structural diagram of an encoding apparatus 300 provided in embodiments of the disclosure. As illustrated in FIG. 20, the encoding apparatus 300 can include a first determining unit 3001, a first predicting unit 3002, and a first filtering unit 3003. The first determining unit 3001 is configured to determine a reference sample value for a first colour component of a current block, and determine a weighting factor according to the reference sample value for the first colour component of the current block. The first predicting unit 3002 is configured to determine a first prediction block for a second colour component of the current block according to the weighting factor and a reference sample value for the second colour component of the current block. The first filtering unit 3003 is configured to perform first filtering on the first prediction block to determine a second prediction block for the second colour component of the current block, where the second prediction block includes prediction values of all second-colour-component samples in the current block. The first determining unit 3001 is further configured to determine a residual value of the second-colour-component sample in the current block according to the second prediction block.

In some embodiments, the first prediction block includes prediction values of at least part of the second-colour-component samples in the current block.

In some embodiments, the first determining unit 3001 is further configured to determine the reference sample value for the first colour component of the current block according to a value of a first-colour-component sample in a neighbouring area of the current block, where the neighbouring area includes at least one of: a top neighbouring area, a top-right neighbouring area, a left neighbouring area, or a bottom-left neighbouring area.

In some embodiments, the first determining unit 3001 is further configured to determine the value of the first-colour-component sample by selecting from first-colour-component samples in the neighbouring area.

In some embodiments, the first determining unit 3001 is further configured to determine a sample position to-be-selected according to a position and/or a colour component intensity of the first-colour-component sample in the neighbouring area; and determine the value of the first-colour-component sample from the neighbouring area according to the sample position to-be-selected.

In some embodiments, the first filtering unit 3003 is further configured to perform second filtering on the value of the first-colour-component sample to obtain a filtered neighbouring sample value for the first colour component of the current block; and determine the reference sample value for the first colour component of the current block according to the filtered neighbouring sample value for the first colour component of the current block.

In some embodiments, the number of filtered neighbouring sample values for the first colour component of the current block is less than the number of values of the first-colour-component samples.

In some embodiments, the first determining unit 3001 is further configured to determine the reference sample value for the first colour component of the current block based on a reconstructed value of a first-reference-colour-component sample in the current block.

In some embodiments, the reference sample value for the first colour component of the current block is set to an absolute value of a difference between the value of the first-colour-component sample and the reconstructed value of the first-reference-colour-component sample.

In some embodiments, the reference sample value for the first colour component of the current block is set to an absolute value of a difference between the filtered neighbouring sample value for the first colour component and the reconstructed value of the first-reference-colour-component sample.

In some embodiments, the first filtering unit 3003 is further configured to perform second filtering on the value of the first-colour-component sample to obtain a first colour of the current block, perform third filtering on a reconstructed value of a first-reference-colour-component sample in the current block to obtain a filtered sample value of the first-reference-colour-component sample in the current block; and determine the reference sample value for the first colour component of the current block according to the filtered sample value of the first-reference-colour-component sample in the current block.

In some embodiments, the number of filtered sample values of the first-reference-colour-component samples in the current block is less than the number of reconstructed values of the first-reference-colour-component samples in the current block.

In some embodiments, the reference sample value for the first colour component of the current block is set to an absolute value of a difference between a filtered neighbouring sample value for the first colour component and the filtered sample value of the first-reference-colour-component sample.

In some embodiments, the reference sample value for the first colour component of the current block is set to an absolute value of a difference between the value of the first-colour-component sample and the filtered sample value of the first-reference-colour-component sample.

In some embodiments, the first determining unit 3001 is further configured to determine a value corresponding to the reference sample value for the first colour component in a preset mapping; and set the weighting factor to be equal to the value.

In some embodiments, the first determining unit 3001 is further configured to determine a first factor; determine a first product value according to the first factor and the reference sample value for the first colour component; and determine a value corresponding to the first product value in the preset mapping.

In some embodiments, the first factor is a preset constant value.

In some embodiments, the first determining unit 3001 is further configured to determine a value of the first factor according to a size parameter of the current block, where the size parameter of the current block includes at least one of: a width of the current block, a height of the current block, or a product of the width and the height of the current block.

In some embodiments, the preset mapping is a Softmax function.

In some embodiments, the preset mapping is a weighting function that is in inverse proportion with the reference sample value for the first colour component.

In some embodiments, the first determining unit 3001 is further configured to determine the reference sample value for the second colour component of the current block according to a value of a second-colour-component sample in a neighbouring area of the current block.

In some embodiments, the first filtering unit 3003 is further configured to perform fourth filtering on the value of the second-colour-component sample in the neighbouring area of the current block, to obtain a filtered neighbouring sample value for the second colour component of the current block; and determine the reference sample value for the second colour component of the current block according to the filtered neighbouring sample value for the second colour component of the current block.

In some embodiments, the number of filtered neighbouring sample values for the second colour component of the current block is greater than the number of values of the second-colour-component samples in the neighbouring area of the current block.

In some embodiments, the fourth filtering is up-sampling filtering, where an up-sampling rate is a positive integer multiple of 2.

In some embodiments, the first filtering unit 3003 is further configured to perform fourth filtering on the value of the second-colour-component sample in the neighbouring area of the current block based on colour format information, to obtain the filtered neighbouring sample value for the second colour component of the current block.

In some embodiments, the first filtering unit 3003 is further configured to perform up-sampling filtering on the value of the second-colour-component sample in the neighbouring area of the current block if the colour format information indicates 4:2:0 sampling, where an up-sampling rate is a positive integer multiple of 2.

In some embodiments, the first predicting unit 3002 is further configured to determine a weighted value obtained by multiplying the reference sample value for the second colour component by a corresponding weighting factor; and set a prediction value of a second-colour-component sample in the first prediction block to be equal to a sum of $N$ weighted values, where $N$ represents the number of reference sample values for the second colour component, and $N$ is a positive integer.

In some embodiments, the first filtering includes up-sampling filtering. An input of the up-sampling filtering is a first up-sampling input block, and an output of the up-sampling filtering is a first up-sampling output block. The first determining unit 3001 is further configured to determine an up-sampling factor, where the up-sampling factor comprises at least one of: a horizontal up-sampling factor, or a vertical up-sampling factor.

In some embodiments, the first filtering unit 3003 is further configured to perform up-sampling filtering on the first up-sampling input block according to the up-sampling factor, to obtain the first up-sampling output block.

In some embodiments, the first filtering unit 3003 is further configured to perform up-sampling filtering on the first up-sampling input block to obtain the first up-sampling output block, when the horizontal up-sampling factor is greater than 1 or the vertical up-sampling factor is greater than 1.

In some embodiments, the first filtering unit 3003 configured to perform up-sampling filtering on the first up-sampling input block is configured to implement at least one of the following: performing up-sampling filtering on the first up-sampling input block in a horizontal direction; performing up-sampling filtering on the first up-sampling input block in a vertical direction; performing up-sampling filtering on the first up-sampling input block in a horizontal direction and then in a vertical direction; performing up-sampling filtering on the first up-sampling input block in a vertical direction and then in a horizontal direction.

In some embodiments, the first filtering unit 3003 is further configured to use the first prediction block as the first up-sampling input block, and use the first up-sampling output block as a second prediction block for a second colour component of the current block.

In some embodiments, the first filtering unit 3003 is further configured to perform filtering enhancement on the first prediction block to obtain a first enhanced prediction block; use the first enhanced prediction block as the first up-sampling input block; and use the first up-sampling output block as a second prediction block for a second colour component of the current block.

In some embodiments, the first filtering unit 3003 is further configured to use the first enhanced prediction block as the first up-sampling input block; use the first up-sampling output block as a first up-sampling-filtering prediction block; and perform filtering enhancement on the first up-sampling-filtering prediction block, to determine a second prediction block for a second colour component of the current block.

In some embodiments, the first filtering unit 3003 is further configured to perform first filtering enhancement on the first prediction block to determine a second enhanced prediction block; use the second enhanced prediction block as the first up-sampling input block; use the first up-sampling output block as a second up-sampling-filtering prediction block; and perform second filtering enhancement on the second up-sampling-filtering prediction block, to determine a second prediction block for a second colour component of the current block.

In some embodiments, the first filtering unit 3003 is further configured to perform up-sampling filtering on the first prediction block to determine the second prediction block for the second colour component of the current block.

In some embodiments, the first filtering unit 3003 is further configured to determine the horizontal up-sampling factor and the vertical up-sampling factor, and perform up-sampling filtering on the first prediction block according to the horizontal up-sampling factor and the vertical up-sampling factor, to obtain the second prediction block for the second colour component of the current block.

In some embodiments, the first filtering unit 3003 is further configured to perform up-sampling filtering on the first up-sampling input block to obtain the first up-sampling output block, if the horizontal up-sampling factor is greater than 1 or the vertical up-sampling factor is greater than 1.

In some embodiments, the first filtering unit 3003 is further configured to perform at least one of the following up-sampling filtering process: performing up-sampling filtering on the first up-sampling input block in a horizontal direction; performing up-sampling filtering on the first up-sampling input block in a vertical direction; performing up-sampling filtering on the first up-sampling input block in a horizontal direction and then in a vertical direction; or performing up-sampling filtering on the first up-sampling input block in a vertical direction and then in a horizontal direction.

In some embodiments, the first filtering unit 3003 is further configured to perform filtering enhancement on the first prediction block before performing up-sampling filtering on the first prediction block, and use the enhanced first prediction block as the first prediction block.

In some embodiments, the first filtering unit 3003 is further configured to perform up-sampling filtering on the first prediction block and then perform filtering enhancement on the first prediction block subject to up-sampling filtering, to obtain the second prediction block for the second colour component of the current block.

In some embodiments, the up-sampling filtering is implemented by one of: linear interpolation, or convolution operation based on a preset neural network.

In some embodiments, the filtering enhancement comprises at least one of: bilateral filtering, median filtering, Gaussian filtering, normalized filtering, or neural network filtering.

In some embodiments, the first filtering unit 3003 is further configured to perform filtering enhancement on the first prediction block, to determine the second prediction block for the second colour component of the current block.

In some embodiments, the first filtering unit 3003 is further configured to determine a first weight value for the first prediction block in a bilateral filtering mode, and perform bilateral filtering on the first prediction block according to the first weight value, to obtain the second prediction block.

In some embodiments, the first predicting unit 3002 is further configured to determine a compensation value of a second-colour-component sample of the first prediction block, according to a reference sample value in a neighbouring area of the current block, and refine a prediction value of the second-colour-component sample of the first prediction block according to the compensation value, to determine the second prediction block.

In some embodiments, the first predicting unit 3002 is further configured to predict a second-colour-component sample of the first prediction block according to at least one prediction modes, to determine at least one initial prediction value of the second-colour-component sample of the first prediction block; and perform weighted average calculation on the at least one initial prediction value and the prediction value of the second-colour-component sample in the first prediction block to determine the second prediction block.

In some embodiments, the first determining unit 3001 is further configured to: determine a prediction value of the second-colour-component sample in the current block according to the second prediction block; and determine the residual value of the second-colour-component sample in the current block according to an original value of the second-colour-component sample in the current block and the prediction value of the second-colour-component sample in the current block.

In some embodiments, referring to FIG. 22, the encoding apparatus 300 further includes an encoding unit 3004, which is configued to encode the residual value of the second-colour-component sample in the current block, and signal obtained encoded bits into a bitstream.

It can be understood that, in embodiments of the disclosure, the "unit" can be part of a circuit, part of a processor, part of a program or software, etc., or can be a module, or can be non-modular. In addition, various components in embodiments can be integrated into one processing unit or can be present as a number of physically separated units, and two or more units can be integrated into one. The integrated unit can be implemented in a form of hardware, or can be implemented in a form of software functional module.

If the integrated units are implemented as software functional modules and sold or used as standalone products, they can be stored in a computer-readable storage medium. Based on such an understanding, the technical solution of this embodiment essentially or partially contributes to the existing technology, or all or part of the technical solution can be embodied in the form of a software product, which is stored in a storage medium and includes several instructions to enable a computer device (which can be a personal computer, server, or network device, etc.) or processor to perform all or part of the steps of the method described in this embodiments. The aforementioned storage media include: USB flash drives, portable hard drives, read only memory (ROM), random access memory (RAM), magnetic disks or optical disks, and various other media that can store program code.

Therefore, embodiments provide a computer-readable storage medium. The computer-readable storage medium is applied to a decoding device 300. The computer-readable storage medium stores computer programs which, when executed by a first processor, are operable with the first processor to implement the method according to any one of the foregoing embodiments.

Based on the structure of the foregoing encoding apparatus 300 and the computer-readable storage medium, referring to FIG. 23, FIG. 23 is a schematic structural diagram illustrating hardware of a encoding device 310 provided in embodiments of the disclosure. As illustrated in FIG. 23, the encoding device 310 can include a first communication interface 3101, a first memory 3102, and a first processor 3103. These components are coupled together via a second bus system 3104. It should be understood that, the first bus system 3104 is configured for connection and communication between these components. In addition to a data bus, the second bus system 3104 further includes a power bus, a control bus, and a status signal bus. However, for the sake of illustration, various buses are marked as the second bus system 3104 in FIG. 23.

The first communication interface 3301 is configured for signal reception and transmission during information reception and transmission with other external network elements. The first memory 3302 is configured to store computer programs executable by the second processor 3103. The first processor 3103 is configured to execute the computer programs to implement the following steps: determining a reference sample value for a first colour component of a current block; determining a weighting factor according to the reference sample value for the first colour component of the current block; determining a first prediction block for a second colour component of the current block according to the weighting factor and a reference sample value for the second colour component of the current block; performing first filtering on the first prediction block to determine a second prediction block for the second colour component of the current block, wherein the second prediction block comprises prediction values of all second-colour-component samples in the current block; and determining a residual value of the second-colour-component sample in the current block according to the second prediction block.

It can be understood that, the first memory 3102 in embodiments of the disclosure can be a volatile memory or a non-volatile memory, or may include both the volatile memory and the non-volatile memory. The non-volatile memory can be a ROM, a programmable ROM (PROM), an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the first memory 3102 of the systems and methods described in the disclosure is intended to include, but is not limited to, these and any other suitable types of memory.

The first processor 3103 can be an integrated circuit chip with signal processing capabilities. During implementation, each step of the foregoing method can be completed by an integrated logic circuit in hardware in the first processor 3103 or an instruction in the form of software. The first processor 3103 can be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor can be a microprocessor, or the processor can be any conventional processor or the like. The steps of the method disclosed in embodiments of the disclosure can be directly implemented by a hardware decoding processor, or can be performed by hardware and software modules in the decoding processor. The software module can be located in a storage medium such as a RAM, a flash memory, a ROM, a PROM, or an electrically erasable programmable memory, registers, and the like. The storage medium is located in the first memory 3102, and the first processor 3103 reads information in the first memory 3102 and completes the steps of the foregoing with the hardware thereof.

It will be appreciated that embodiments described herein can be implemented in hardware, software, firmware, middleware, microcode, or a combination thereof. For hardware implementation, the processing unit can be implemented in one or more application ASICs, DSPs, DSP devices (DSPDs), programmable logic devices (PLDs), FPGAs, general-purpose processors, controllers, micro-controllers, microprocessors, other electronic units for performing the functionality in the disclosure, or a combination thereof. For software implementation, the techniques described in the disclosure can be implemented by modules (e. g., procedures, functions, etc.) for performing the functionality in the disclosure. The software codes can be stored in the memory and executed by the processor. The memory can be implemented inside or external to the processor.

Optionally, as another embodiment, the first processor 3103 is further configured to execute the computer programs to implement the method described in any of the foregoing embodiments.

Embodiments provide an encoding device, and the encoding device can further include the encoding apparatus 300 according to any one of the foregoing embodiments. For the encoding device, considering that human eyes have low sensitivity to chroma information and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, and thus improve coding performance.

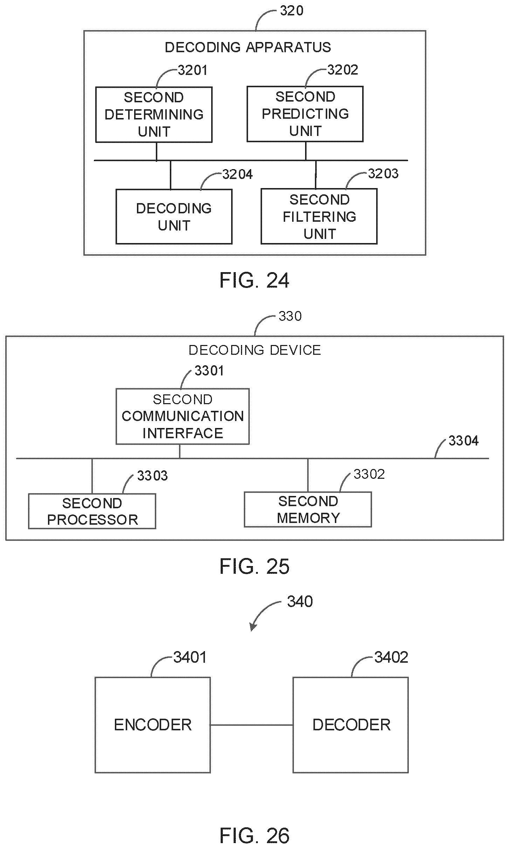

Based on the same concept as the foregoing embodiment, referring to FIG. 24, FIG. 24 is a schematic structural diagram of a decoding apparatus 320 provided in embodiments of the disclosure. As illustrated in FIG. 24, the decoding apparatus 320 can include a second determining unit 3201, a second predicting unit 3202, and a second filtering unit 3203. The second determining unit 3201 is configured to determine a reference sample value for a first colour component of a current block, and determine a weighting factor according to the reference sample value for the first colour component of the current block. The second predicting unit 3202 is configured to determine a first prediction block for a second colour component of the current block according to the weighting factor and a reference sample value for the second colour component of the current block. The second filtering unit 3203 is configured to perform first filtering on the first prediction block to determine a second prediction block for the second colour component of the current block, where the second prediction block comprises prediction values of all second-colour-component samples in the current block. The second determining unit 3201 is further configured to determine a reconstructed value of the second-colour-component sample in the current block according to the second prediction block.

In some embodiments, the first prediction block includes prediction values of at least part of the second-colour-component samples in the current block.

In some embodiments, the second determining unit 3201 is further configured to determine the reference sample value for the first colour component of the current block according to a value of a first-colour-component sample in a neighbouring area of the current block, where the neighbouring area includes at least one of: a top neighbouring area, a top-right neighbouring area, a left neighbouring area, or a bottom-left neighbouring area.

In some embodiments, the second determining unit 3201 is further configured to determine the value of the first-colour-component sample by selecting from first-colour-component samples in the neighbouring area.

In some embodiments, the second determining unit 3201 is further configured to determine a sample position to-be-selected according to a position and/or a colour component intensity of the first-colour-component sample in the neighbouring area; and determine the value of the first-colour-component sample from the neighbouring area according to the sample position to-be-selected.

In some embodiments, the second filtering unit 3203 is further configured to perform second filtering on the value of the first-colour-component sample to obtain a filtered neighbouring sample value for the first colour component of the current block; and determine the reference sample value for the first colour component of the current block according to the filtered neighbouring sample value for the first colour component of the current block.

In some embodiments, the number of filtered neighbouring sample values for the first colour component of the current block is less than the number of values of the first-colour-component samples.

In some embodiments, the second determining unit 3201 is further configured to determine the reference sample value for the first colour component of the current block based on a reconstructed value of a first-reference-colour-component sample in the current block.

In some embodiments, the reference sample value for the first colour component of the current block is set to an absolute value of a difference between the value of the first-colour-component sample and the reconstructed value of the first-reference-colour-component sample.

In some embodiments, the reference sample value for the first colour component of the current block is set to an absolute value of a difference between the filtered neighbouring sample value for the first colour component and the reconstructed value of the first-reference-colour-component sample.

In some embodiments, the second filtering unit 3203 is further configured to perform third filtering on a reconstructed value of a first-reference-colour-component sample in the current block to obtain a filtered sample value of the first-reference-colour-component sample in the current block; and determine the reference sample value for the first colour component of the current block according to the filtered sample value of the first-reference-colour-component sample in the current block.

In some embodiments, the number of filtered sample values of the first-reference-colour-component samples in the current block is less than the number of reconstructed values of the first-reference-colour-component samples in the current block.

In some embodiments, the reference sample value for the first colour component of the current block is set to an absolute value of a difference between a filtered neighbouring sample value for the first colour component and the filtered sample value of the first-reference-colour-component sample.

In some embodiments, the reference sample value for the first colour component of the current block is set to an absolute value of a difference between the value of the first-colour-component sample and the filtered sample value of the first-reference-colour-component sample.

In some embodiments, the second determining unit 3201 is further configured to determine a value corresponding to the reference sample value for the first colour component in a preset mapping; and set the weighting factor to be equal to the value.

In some embodiments, the second determining unit 3201 is further configured to determine a first factor; determine a first product value according to the first factor and the reference sample value for the first colour component; and determine a value corresponding to the first product value in the preset mapping.

In some embodiments, the first factor is a preset constant value.

In some embodiments, the second determining unit 3201 is further configured to determine a value of the first factor according to a size parameter of the current block, where the size parameter of the current block includes at least one of: a width of the current block, a height of the current block, or a product of the width and the height of the current block.

In some embodiments, the preset mapping is a Softmax function.

In some embodiments, the preset mapping is a weighting function that is in inverse proportion with the reference sample value for the first colour component.

In some embodiments, the second determining unit 3201 is further configured to determine the reference sample value for the second colour component of the current block according to a value of a second-colour-component sample in a neighbouring area of the current block.

In some embodiments, the second filtering unit 3203 is further configured to perform fourth filtering on the value of the second-colour-component sample in the neighbouring area of the current block, to obtain a filtered neighbouring sample value for the second colour component of the current block; and determine the reference sample value for the second colour component of the current block according to the filtered neighbouring sample value for the second colour component of the current block.

In some embodiments, the number of filtered neighbouring sample values for the second colour component of the current block is greater than the number of values of the second-colour-component samples in the neighbouring area of the current block.

In some embodiments, the fourth filtering is up-sampling filtering, where an up-sampling rate is a positive integer multiple of 2.

In some embodiments, the second filtering unit 3203 is further configured to perform fourth filtering on the value of the second-colour-component sample in the neighbouring area of the current block based on colour format information, to obtain the filtered neighbouring sample value for the second colour component of the current block.

In some embodiments, the second filtering unit 3203 is further configured to perform up-sampling filtering on the value of the second-colour-component sample in the neighbouring area of the current block if the colour format information indicates 4:2:0 sampling, where an up-sampling rate is a positive integer multiple of 2.

In some embodiments, the second predicting unit 3202 is further configured to determine a weighted value obtained by multiplying the reference sample value for the second colour component by a corresponding weighting factor; and set a prediction value of a second-colour-component sample in the first prediction block to be equal to a sum of N weighted values, where $N$ represents the number of reference sample values for the second colour component, and $N$ is a positive integer.

In some embodiments, the first filtering is up-sampling filtering. An input of the up-sampling filtering is a first up-sampling input block, and an output of the up-sampling filtering is a first up-sampling output block.

In some emdobiments, the second determining unit 3201 is further configured to perform up-sampling filtering on the first up-sampling input block according to the up-sampling factor, to obtain the first up-sampling output block.

In some embodiments, the second filtering unit 3203 is further configured to perform up-sampling filtering on the first up-sampling input block to obtain the first up-sampling output block when the horizontal up-sampling factor is greater than 1 or the vertical up-sampling factor is greater than 1.

In some embodiments, the second filtering unit 3203 is further configured to perform up-sampling filtering on the first up-sampling input block. Perform up-sampling filtering includes at least one of: performing up-sampling filtering on the first up-sampling input block in a horizontal direction; performing up-sampling filtering on the first up-sampling input block in a vertical direction; performing up-sampling filtering on the first up-sampling input block in a horizontal direction and then in a vertical direction; or performing up-sampling filtering on the first up-sampling input block in a vertical direction and then in a horizontal direction.

In some embodiments, the second filtering unit 3203 is further configured to: use the first prediction block as the first up-sampling input block; and use the first up-sampling output block as a second prediction block for a second colour component of the current block.

In some embodiments, the second filtering unit 3203 is further configured to: perform filtering enhancement on the first prediction block to obtain a first enhanced prediction block; use the first enhanced prediction block as the first up-sampling input block; and use the first up-sampling output block as a second prediction block for a second colour component of the current block.

In some embodiments, the second filtering unit 3203 is further configured to: use the first prediction block as the first up-sampling input block; use the first up-sampling output block as a first up-sampling-filtering prediction block; and perform filtering enhancement on the first up-sampling-filtering prediction block, to determine a second prediction block for a second colour component of the current block.

In some embodiments embodiments, the second filtering unit 3203 is further configured to: perform first filtering enhancement on the first prediction block to determine a second enhanced prediction block; use the second enhanced prediction block as the first up-sampling input block; use the first up-sampling output block as a second up-sampling-filtering prediction block; and perform second filtering enhancement on the second up-sampling-filtering prediction block, to determine a second prediction block for a second colour component of the current block

In some embodiments, the second filtering unit 3203 is further configured to: perform the first filtering on the first prediction block to determine the second prediction block for the second colour component of the current block.

In some embodiments, the second filtering unit 3203 is further configured to: determine a horizontal up-sampling factor and a vertical up-sampling factor, and perform up-sampling filtering on the first up-sampling input block according to the horizontal up-sampling factor and the vertical up-sampling factor, to obtain a second prediction block for the second colour component of the current block

In some embodiments, the second filtering unit 3203 is further configured to: when the horizontal up-sampling factor is greater than 1 or the vertical up-sampling factor is greater than 1, performing up-sampling filtering on the first up-sampling input block to obtain the second prediction block.

In some embodiments, the second filtering unit 3203 is further configured to: performing up-sampling filtering on the first up-sampling input block. Performing up-sampling filtering includes at least one of: performing up-sampling filtering on the first up-sampling input block in a horizontal direction; performing up-sampling filtering on the first up-sampling input block in a vertical direction; performing up-sampling filtering on the first up-sampling input block in a horizontal direction and then in a vertical direction; or performing up-sampling filtering on the first up-sampling input block in a vertical direction and then in a horizontal direction.

In some embodiments, the second filtering unit 3203 is further configured to: before performing up-sampling filtering on the first prediction block, perform filtering enhancement on the first prediction block to obtain a first enhanced prediction block, and use the first enhanced prediction block as the first prediction block.

In some embodiments, the second filtering unit 3203 is further configured to: after performing up-sampling filtering on the first prediction block, performing filtering enhancement on the first prediction block obtained after up-sampling filtering, to obtain the second prediction block for the second colour component of the current block.

In some embodiments, the up-sampling filtering is implemented by one of: linear interpolation, or convolution operation based on a preset neural network.

In some embodiments, the filtering enhancement comprises at least one of: bilateral filtering, median filtering, Gaussian filtering, normalized filtering, or neural network filtering.

In some embodiments, the second filtering unit 3203 is further configured to: perform filtering enhancement on the first prediction block, to determine the second prediction block for the second colour component of the current block.

In some embodiments, the second filtering unit 3203 is further configured to: determine a first weight value for the first prediction block in a bilateral filtering mode, and perform bilateral filtering on the first prediction block according to the first weight value, to obtain the second prediction block.

In some embodiments, the the second predicting unit 3202 is further configured to: determine a compensation value of a second-colour-component sample of the first prediction block, according to a reference sample value in a neighbouring area of the current block, and refine a prediction value of the second-colour-component sample of the first prediction block according to the compensation value, to determine the second prediction block.

In some embodiments, the second predicting unit 3202 is further configured to: predict a second-colour-component sample of the first prediction block according to at least one prediction modes, to determine at least one initial prediction value of the second-colour-component sample of the first prediction block; and perform weighted average calculation on the at least one initial prediction value and the prediction value of the second-colour-component sample in the first prediction block to determine the second prediction block.

In some embodiments, the second determining unit 3201 is further configured to: determine a residual value of the second-colour-component sample in the current block; determine a prediction value of the second-colour-component sample in the current block according to the second prediction block; and determine the reconstructed value of the second-colour-component sample in the current block according to the residual value of the second-colour-component sample in the current block and the prediction value of the second-colour-component sample in the current block.

In some embodiments, referring to FIG. 24, the decoding apparatus 320 can further include a decoding unit 3204. The decoding unit 3204 is configured to parse a bitstream to determine the residual value of the second-colour-component sample in the current block.

It can be understood that, in embodiments of the disclosure, the "unit" can be part of a circuit, part of a processor, part of a program or software, etc., or can be a module, or can be non-modular. In addition, various components in embodiments can be integrated into one processing unit or can be present as a number of physically separated units, and two or more units can be integrated into one. The integrated unit can be implemented in a form of hardware, or can be implemented in a form of software functional module.

If the integrated units are implemented as software functional modules and sold or used as standalone products, they can be stored in a computer-readable storage medium. Based on such an understanding, embodiments provide a computer-readable storage medium. The computer-readable storage medium is applied to a decoding device 320. The computer-readable storage medium stores computer programs which, when executed by a second processor, are operable with the second processor to implement the method according to any one of the foregoing embodiments.

Based on the structure of the foregoing decoding apparatus 320 and the computer-readable storage medium, referring to FIG. 25, FIG. 25 is a schematic structural diagram illustrating hardware of a decoding device 330 provided in embodiments of the disclosure. As illustrated in FIG. 23, the decoding device 330 can include a second communication interface 3301, a second memory 3302, and a second processor 3303. These components are coupled together via a second bus system 3304. It should be understood that, the second bus system 3304 is configured for connection and communication between these components. In addition to a data bus, the second bus system 3304 further includes a power bus, a control bus, and a status signal bus. However, for the sake of illustration, various buses are marked as the second bus system 3304 in FIG. 25. The second communication interface 3301 is configured for signal reception and transmission during information reception and transmission with other external network elements. The second memory 3302 is configured to store computer programs executable by the second processor 3303. The second processor 3303 is configured to execute the computer programs to implement the following steps: determining a reference sample value for a first colour component of a current block; determining a weighting factor according to the reference sample value for the first colour component of the current block; determining a first prediction block for a second colour component of the current block according to the weighting factor and a reference sample value for the second colour component of the current block; performing first filtering on the first prediction block to determine a second prediction block for the second colour component of the current block, where the second prediction block comprises prediction values of all second-colour-component samples in the current block; and determining a reconstructed value of the second-colour-component sample in the current block according to the second prediction block.

Optionally, as another embodiment, the second processor 3303 is further configured to execute the computer programs to implement the method described in any of the foregoing embodiments.

It can be understood that the second memory 3302 has a hardware function similar to that of the first memory 3102, and the second processor 3303 has a hardware function similar to that of the first processor 3103, which are not described again herein.

Embodiments provide a decoding device, and the decoding device can further include the decoding apparatus 320 described in the foregoing embodiment. For the decoding device, considering that human eyes have low sensitivity to chroma information and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, and thus improve coding performance.

In another embodiment of the disclosure, referring to FIG. 26, FIG. 26 is a schematic structural diagram of a coding system provided in embodiments of the disclosure. As illustrated in FIG. 24, the coding system 340 may include an encoder 3401 and a decoder 3402. The encoder 3401 can be a device integrating the encoding apparatus 300 in the foregoing embodiment, or can be the encoding device 310 in the foregoing embodiment. The decoder 3402 can be a device integrating the decoding apparatus 320 described in the foregoing embodiment, or can be the decoding device 330 described in the foregoing embodiment.

In embodiments of the disclosure, in the coding system 340, at the encoder 3401 or the decoder 3402, considering that human eyes have low sensitivity to chroma and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, and thus improve coding performance.

It should be noted that, in the disclosure, the terms "include", "comprise", and "have" as well as variations thereof are intended to cover non-exclusive inclusion, so that a process, method, article, or apparatus that includes a series of elements not only includes those elements, but also includes other elements that are not explicitly listed, or further includes elements inherent to the process, method, article, or apparatus. Unless there are other limitations, an element limited by "including a..." does not exclude the case where there are other same elements in the process, method, article, or apparatus that includes the element.

The sequential numbers in embodiments of the disclosure are only for illustration, and do not indicate the preference of embodiments.

The methods disclosed in the method embodiments of the disclosure can be combined arbitrarily without conflicts to obtain new method embodiments.

The features disclosed in the product embodiments of the disclosure can be combined arbitrarily without conflicts to obtain new product embodiments.

The features disclosed in the several method embodiments or device embodiments of the disclosure can be arbitrarily combined without conflicts to obtain new method embodiments or device embodiments.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

Industrial Applicability

In embodiments of the disclosure, at an encoding end or at a decoding end, a reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block. First filtering is performed on the first prediction block to determine a second prediction block for the second colour component of the current block, where the second prediction block comprises prediction values of all second-colour-component samples in the current block. In this way, at the encoding end, a residual value of a second-colour-component sample in the current block can be determined according to the second prediction block and then the residual value is signaled into a bitstream, such that at the decoding end, a reconstructed value of the second-colour-component sample in the current block can be determined according to the second prediction block and the residual value obtained by decoding. As such, with aid of a reference sample neighbouring the current block and colour component information of the current block. In this way, the weighting factor can be calculated with aid of the reference sample neighbouring the current block and colour component information of the current block, correlation between the current block and neighbouring areas in terms of luma information is fully taken into consideration, and such correlation is used in chroma prediction of the current block, so as to improve accuracy of chroma prediction. Considering that human eyes have low sensitivity to chroma and in order to reduce the complexity in calculating the weighting factor, when the size of the first prediction block is less than the size of the current block, up-sampling filtering is performed on the first prediction block. In addition, considering that the prediction value of the first prediction block is unstable, filtering enhancement can also be performed, so as to further improve accuracy as well as subjective and objective quality of chroma prediction, save bit-rate, improve coding efficiency, and thus improve coding performance.

**Claims**

1. A decoding method, comprising:

    determining a reference sample value for a first colour component of a current block;
    determining a weighting factor according to the reference sample value for the first colour component of the current block;
    determining a first prediction block for a second colour component of the current block according to the weighting factor and a reference sample value for the second colour component of the current block;
    performing first filtering on the first prediction block to determine a second prediction block for the second colour component of the current block, wherein the second prediction block comprises prediction values of all second-colour-component samples in the current block; and
    determining a reconstructed value of the second-colour-component sample in the current block according to the second prediction block.

2. The method of claim 1, wherein the first prediction block comprises prediction values of at least part of the second-colour-component samples in the current block.

3. The method of claim 1, wherein determining the reference sample value for the first colour component of the current block comprises:
determining the reference sample value for the first colour component of the current block according to a value of a first-colour-component sample in a neighbouring area of the current block, wherein the neighbouring area comprises at least one of: a top neighbouring area, a top-right neighbouring area, a left neighbouring area, or a bottom-left neighbouring area.

4. The method of claim 3, further comprising:
determining the value of the first-colour-component sample by selecting from first-colour-component samples in the neighbouring area.

5. The method of claim 4, wherein determining the value of the first-colour-component sample by selecting from the first-colour-component samples in the neighbouring area comprises:

determining a sample position to-be-selected according to a position and/or a colour component intensity of the first-colour-component sample in the neighbouring area; and
determining the value of the first-colour-component sample from the neighbouring area according to the sample position to-be-selected.

6. The method of claim 3, wherein determining the reference sample value for the first colour component of the current block further comprises:

performing second filtering on the value of the first-colour-component sample to obtain a filtered neighbouring sample value for the first colour component of the current block; and
determining the reference sample value for the first colour component of the current block according to the filtered neighbouring sample value for the first colour component of the current block.

7. The method of claim 6, wherein the number of filtered neighbouring sample values for the first colour component of the current block is less than the number of values of the first-colour-component samples.

8. The method of claim 3 or 6, wherein determining the reference sample value for the first colour component of the current block further comprises:
determining the reference sample value for the first colour component of the current block based on a reconstructed value of a first-reference-colour-component sample in the current block.

9. The method of claim 8, wherein the reference sample value for the first colour component of the current block is set to an absolute value of a difference between the value of the first-colour-component sample and the reconstructed value of the first-reference-colour-component sample.

10. The method of claim 8, wherein the reference sample value for the first colour component of the current block is set to an absolute value of a difference between the filtered neighbouring sample value for the first colour component and the reconstructed value of the first-reference-colour-component sample.

11. The method of claim 3 or 6, wherein determining the reference sample value for the first colour component of the current block further comprises:

performing third filtering on a reconstructed value of a first-reference-colour-component sample in the current block to obtain a filtered sample value of the first-reference-colour-component sample in the current block; and
determining the reference sample value for the first colour component of the current block according to the filtered sample value of the first-reference-colour-component sample in the current block.

12. The method of claim 11, wherein the number of filtered sample values of the first-reference-colour-component samples in the current block is less than the number of reconstructed values of the first-reference-colour-component samples in the current block.

13. The method of claim 11, wherein the reference sample value for the first colour component of the current block is set to an absolute value of a difference between a filtered neighbouring sample value for the first colour component and the filtered sample value of the first-reference-colour-component sample.

14. The method of claim 11, wherein the reference sample value for the first colour component of the current block is set to an absolute value of a difference between the value of the first-colour-component sample and the filtered sample value of the first-reference-colour-component sample.

15. The method of claim 1, wherein determining the weighting factor according to the reference sample value for the first colour component of the current block comprises:

   determining a value corresponding to the reference sample value for the first colour component in a preset mapping; and
   setting the weighting factor to be equal to the value.

16. The method of claim 15, wherein determining the value corresponding to the reference sample value for the first colour component in the preset mapping comprises:

   determining a first factor;
   determining a first product value according to the first factor and the reference sample value for the first colour component; and
   determining a value corresponding to the first product value in the preset mapping.

17. The method of claim 16, wherein determining the first factor comprises:
   the first factor being a preset constant value.

18. The method of claim 16, wherein determining the first factor comprises:
   determining a value of the first factor according to a size parameter of the current block, wherein the size parameter of the current block comprises at least one of: a width of the current block or a height of the current block.

19. The method of claim 15, wherein the determining the value corresponding to the reference sample value for the first colour component in the preset mapping comprises:
   the preset mapping being a Softmax function.

20. The method of claim 15, wherein determining the value corresponding to the reference sample value for the first colour component in the preset mapping comprises:
   the preset mapping being a weighting function that is in inverse proportion with the reference sample value for the first colour component.

21. The method of claim 1, further comprising:
   determining the reference sample value for the second colour component of the current block according to a value of a second-colour-component sample in a neighbouring area of the current block.

22. The method of claim 21, further comprising:

   performing fourth filtering on the value of the second-colour-component sample in the neighbouring area of the current block, to obtain a filtered neighbouring sample value for the second colour component of the current block; and
   determining the reference sample value for the second colour component of the current block according to the filtered neighbouring sample value for the second colour component of the current block.

23. The method of claim 22, wherein the number of filtered neighbouring sample values for the second colour component of the current block is greater than the number of values of the second-colour-component samples in the neighbouring area of the current block.

24. The method of claim 22, further comprising:
   the fourth filtering being up-sampling filtering, wherein an up-sampling rate is a positive integer multiple of 2.

**25.** The method of claim 22, further comprising:
performing fourth filtering on the value of the second-colour-component sample in the neighbouring area of the current block based on colour format information, to obtain the filtered neighbouring sample value for the second colour component of the current block.

**26.** The method of claim 25, wherein performing the fourth filtering further comprises:
performing up-sampling filtering on the value of the second-colour-component sample in the neighbouring area of the current block when the colour format information indicates 4:2:0 sampling, wherein an up-sampling rate is a positive integer multiple of 2.

**27.** The method of claim 1, wherein determining the first prediction block for the second colour component of the current block according to the weighting factor and the reference sample value for the second colour component of the current block comprises:

determining a weighted value obtained by multiplying the reference sample value for the second colour component by a corresponding weighting factor; and
setting a prediction value of a second-colour-component sample in the first prediction block to be equal to a sum of N weighted values, wherein N represents the number of reference sample values for the second colour component, and N is a positive integer.

**28.** The method of claim 1, wherein performing the first filtering on the first prediction block to determine the second prediction block for the second colour component of the current block comprises:
the first filtering comprising up-sampling filtering, wherein an input of the up-sampling filtering is a first up-sampling input block, and an output of the up-sampling filtering is a first up-sampling output block.

**29.** The method of claim 28, wherein the up-sampling filtering comprises:

determining an up-sampling factor, wherein the up-sampling factor comprises at least one of: a horizontal up-sampling factor, or a vertical up-sampling factor;
performing up-sampling filtering on the first up-sampling input block according to the up-sampling factor, to obtain the first up-sampling output block.

**30.** The method of claim 29, wherein performing up-sampling filtering on the first up-sampling input block according to the up-sampling factor, to obtain the first up-sampling output block comprises:
when the horizontal up-sampling factor is greater than 1 or the vertical up-sampling factor is greater than 1, performing up-sampling filtering on the first up-sampling input block to obtain the first up-sampling output block.

**31.** The method of claim 30, wherein performing up-sampling filtering on the first up-sampling input block comprises at least one of:

performing up-sampling filtering on the first up-sampling input block in a horizontal direction;
performing up-sampling filtering on the first up-sampling input block in a vertical direction;
performing up-sampling filtering on the first up-sampling input block in a horizontal direction and then in a vertical direction; or
performing up-sampling filtering on the first up-sampling input block in a vertical direction and then in a horizontal direction.

**32.** The method of claim 28, further comprising:

using the first prediction block as the first up-sampling input block; and
using the first up-sampling output block as a second prediction block for a second colour component of the current block.

**33.** The method of claim 28, further comprising:

performing filtering enhancement on the first prediction block to obtain a first enhanced prediction block;
using the first enhanced prediction block as the first up-sampling input block; and
using the first up-sampling output block as a second prediction block for a second colour component of the current block.

**34.** The method of claim 28, further comprising:

using the first prediction block as the first up-sampling input block;
using the first up-sampling output block as a first up-sampling-filtering prediction block; and
performing filtering enhancement on the first up-sampling-filtering prediction block, to determine a second prediction block for a second colour component of the current block.

**35.** The method of claim 28, further comprising:

performing first filtering enhancement on the first prediction block to determine a second enhanced prediction block;
using the second enhanced prediction block as the first up-sampling input block;
using the first up-sampling output block as a second up-sampling-filtering prediction block; and
performing second filtering enhancement on the second up-sampling-filtering prediction block, to determine a second prediction block for a second colour component of the current block.

**36.** The method of any of claims 28 to 35, wherein the up-sampling filtering is implemented by one of: linear interpolation, or convolution operation based on a preset neural network.

**37.** The method of any of claims 33 to 35, wherein the filtering enhancement comprises at least one of: bilateral filtering, median filtering, Gaussian filtering, normalized filtering, or neural network filtering.

**38.** The method of claim 1, wherein performing the first filtering on the first prediction block to determine the second prediction block for the second colour component of the current block comprises:

determining a first weight value for the first prediction block in a bilateral filtering mode; and
performing bilateral filtering on the first prediction block according to the first weight value, to obtain the second prediction block.

**39.** The method of claim 1, wherein performing the first filtering on the first prediction block to determine the second prediction block for the second colour component of the current block comprises:

determining a compensation value of a second-colour-component sample of the first prediction block, according to a reference sample value in a neighbouring area of the current block; and
refining a prediction value of the second-colour-component sample of the first prediction block according to the compensation value, to determine the second prediction block.

**40.** The method of claim 1, wherein performing the first filtering on the first prediction block to determine the second prediction block for the second colour component of the current block comprises:

predicting a second-colour-component sample of the first prediction block according to at least one prediction modes, to determine at least one initial prediction value of the second-colour-component sample of the first prediction block; and
performing weighted average calculation on the at least one initial prediction value and the prediction value of the second-colour-component sample in the first prediction block to determine the second prediction block.

**41.** The method of claim 1, wherein determining the reconstructed value of the second-colour-component sample in the current block according to the second prediction block comprises:

determining a residual value of the second-colour-component sample in the current block;
determining a prediction value of the second-colour-component sample in the current block according to the second prediction block; and
determining the reconstructed value of the second-colour-component sample in the current block according to the residual value of the second-colour-component sample in the current block and the prediction value of the second-colour-component sample in the current block.

42. An encoding method, comprising:

   determining a reference sample value for a first colour component of a current block;
   determining a weighting factor according to the reference sample value for the first colour component of the current block;
   determining a first prediction block for a second colour component of the current block according to the weighting factor and a reference sample value for the second colour component of the current block;
   performing first filtering on the first prediction block to determine a second prediction block for the second colour component of the current block, wherein the second prediction block comprises prediction values of all second-colour-component samples in the current block; and
   determining a residual value of the second-colour-component sample in the current block according to the second prediction block.

43. The method of claim 42, wherein the first prediction block comprises prediction values of at least part of the second-colour-component samples in the current block.

44. The method of claim 42, wherein determining the reference sample value for the first colour component of the current block comprises:
   determining the reference sample value for the first colour component of the current block according to a value of a first-colour-component sample in a neighbouring area of the current block, wherein the neighbouring area comprises at least one of: a top neighbouring area, a top-right neighbouring area, a left neighbouring area, or a bottom-left neighbouring area.

45. The method of claim 44, further comprising:
   determining the value of the first-colour-component sample by selecting from first-colour-component samples in the neighbouring area.

46. The method of claim 45, wherein determining the value of the first-colour-component sample by selecting from the first-colour-component samples in the neighbouring area comprises:

   determining a sample position to-be-selected according to a position and/or a colour component intensity of the first-colour-component sample in the neighbouring area; and
   determining the value of the first-colour-component sample from the neighbouring area according to the sample position to-be-selected.

47. The method of claim 44, wherein determining the reference sample value for the first colour component of the current block further comprises:

   performing second filtering on the value of the first-colour-component sample to obtain a filtered neighbouring sample value for the first colour component of the current block; and
   determining the reference sample value for the first colour component of the current block according to the filtered neighbouring sample value for the first colour component of the current block.

48. The method of claim 47, wherein the number of filtered neighbouring sample values for the first colour component of the current block is less than the number of values of the first-colour-component samples.

49. The method of claim 44 or 47, wherein determining the reference sample value for the first colour component of the current block further comprises:
   determining the reference sample value for the first colour component of the current block based on a reconstructed value of a first-reference-colour-component sample in the current block.

50. The method of claim 49, wherein the reference sample value for the first colour component of the current block is set to an absolute value of a difference between the value of the first-colour-component sample and the reconstructed value of the first-reference-colour-component sample.

51. The method of claim 49, wherein the reference sample value for the first colour component of the current block is set to an absolute value of a difference between the filtered neighbouring sample value for the first colour component and the reconstructed value of the first-reference-colour-component sample.

**52.** The method of claim 44 or 47, wherein determining the reference sample value for the first colour component of the current block further comprises:

performing third filtering on a reconstructed value of a first-reference-colour-component sample in the current block to obtain a filtered sample value of the first-reference-colour-component sample in the current block; and determining the reference sample value for the first colour component of the current block according to the filtered sample value of the first-reference-colour-component sample in the current block.

**53.** The method of claim 52, wherein the number of filtered sample values of the first-reference-colour-component samples in the current block is less than the number of reconstructed values of the first-reference-colour-component samples in the current block.

**54.** The method of claim 52, wherein the reference sample value for the first colour component of the current block is set to an absolute value of a difference between a filtered neighbouring sample value for the first colour component and the filtered sample value of the first-reference-colour-component sample.

**55.** The method of claim 52, wherein the reference sample value for the first colour component of the current block is set to an absolute value of a difference between the value of the first-colour-component sample and the filtered sample value of the first-reference-colour-component sample.

**56.** The method of claim 42, wherein determining the weighting factor according to the reference sample value for the first colour component of the current block comprises:

determining a value corresponding to the reference sample value for the first colour component in a preset mapping; and setting the weighting factor to be equal to the value.

**57.** The method of claim 56, wherein determining the value corresponding to the reference sample value for the first colour component in the preset mapping comprises:

determining a first factor; determining a first product value according to the first factor and the reference sample value for the first colour component; and determining a value corresponding to the first product value in the preset mapping.

**58.** The method of claim 57, wherein determining the first factor comprises: the first factor being a preset constant value.

**59.** The method of claim 57, wherein determining the first factor comprises: determining a value of the first factor according to a size parameter of the current block, wherein the size parameter of the current block comprises at least one of: a width of the current block or a height of the current block.

**60.** The method of claim 56, wherein the determining the value corresponding to the reference sample value for the first colour component in the preset mapping comprises: the preset mapping being a Softmax function.

**61.** The method of claim 56, wherein determining the value corresponding to the reference sample value for the first colour component in the preset mapping comprises: the preset mapping being a weighting function that is in inverse proportion with the reference sample value for the first colour component.

**62.** The method of claim 42, further comprising: determining the reference sample value for the second colour component of the current block according to a value of a second-colour-component sample in a neighbouring area of the current block.

**63.** The method of claim 62, further comprising:

performing fourth filtering on the value of the second-colour-component sample in the neighbouring area of the current block, to obtain a filtered neighbouring sample value for the second colour component of the current block; and

determining the reference sample value for the second colour component of the current block according to the filtered neighbouring sample value for the second colour component of the current block.

64. The method of claim 63, wherein the number of filtered neighbouring sample values for the second colour component of the current block is greater than the number of values of the second-colour-component samples in the neighbouring area of the current block.

65. The method of claim 63, further comprising:
the fourth filtering being up-sampling filtering, wherein an up-sampling rate is a positive integer multiple of 2.

66. The method of claim 63, further comprising:
performing fourth filtering on the value of the second-colour-component sample in the neighbouring area of the current block based on colour format information, to obtain the filtered neighbouring sample value for the second colour component of the current block.

67. The method of claim 66, wherein performing the fourth filtering further comprises:
performing up-sampling filtering on the value of the second-colour-component sample in the neighbouring area of the current block when the colour format information indicates 4:2:0 sampling, wherein an up-sampling rate is a positive integer multiple of 2.

68. The method of claim 42, wherein determining the first prediction block for the second colour component of the current block according to the weighting factor and the reference sample value for the second colour component of the current block comprises:

determining a weighted value obtained by multiplying the reference sample value for the second colour component by a corresponding weighting factor; and
setting a prediction value of a second-colour-component sample in the first prediction block to be equal to a sum of $N$ weighted values, wherein $N$ represents the number of reference sample values for the second colour component, and $N$ is a positive integer.

69. The method of claim 42, wherein performing the first filtering on the first prediction block to determine the second prediction block for the second colour component of the current block comprises:
the first filtering comprising up-sampling filtering, wherein an input of the up-sampling filtering is a first up-sampling input block, and an output of the up-sampling filtering is a first up-sampling output block.

70. The method of claim 69, wherein the up-sampling filtering comprises:

determining an up-sampling factor, wherein the up-sampling factor comprises at least one of: a horizontal up-sampling factor, or a vertical up-sampling factor; and
performing up-sampling filtering on the first up-sampling input block according to the up-sampling factor, to obtain the first up-sampling output block.

71. The method of claim 70, wherein performing up-sampling filtering on the first up-sampling input block according to the up-sampling factor, to obtain the first up-sampling output block comprises:
when the horizontal up-sampling factor is greater than 1 or the vertical up-sampling factor is greater than 1, performing up-sampling filtering on the first up-sampling input block to obtain the first up-sampling output block.

72. The method of claim 71, wherein performing up-sampling filtering on the first up-sampling input block comprises at least one of:

performing up-sampling filtering on the first up-sampling input block in a horizontal direction;
performing up-sampling filtering on the first up-sampling input block in a vertical direction;
performing up-sampling filtering on the first up-sampling input block in a horizontal direction and then in a vertical direction; or
performing up-sampling filtering on the first up-sampling input block in a vertical direction and then in a horizontal direction.

**73.** The method of claim 69, further comprising:

using the first prediction block as the first up-sampling input block; and
using the first up-sampling output block as a second prediction block for a second colour component of the current block.

**74.** The method of claim 69, further comprising:

performing filtering enhancement on the first prediction block to obtain a first enhanced prediction block;
using the first enhanced prediction block as the first up-sampling input block;
using the first up-sampling output block as a second prediction block for a second colour component of the current block.

**75.** The method of claim 74, further comprising:

using the first enhanced prediction block as the first up-sampling input block;
using the first up-sampling output block as a first up-sampling-filting prediction block; and
performing filtering enhancement on the first up-sampling-filting prediction block, to determine a second prediction block for a second colour component of the current block.

**76.** The method of claim 69, further comprising:

performing first filtering enhancement on the first prediction block to determine a second enhanced prediction block;
using the second enhanced prediction block as the first up-sampling input block;
using the first up-sampling output block as a second up-sampling-filtering prediction block; and
performing second filtering enhancement on the second up-sampling-filtering prediction block, to determine a second prediction block for a second colour component of the current block.

**77.** The method of any of claims 69 to 76, wherein the up-sampling filtering is implemented by one of: linear interpolation, or convolution operation based on a preset neural network.

**78.** The method of any of claims 74 to 76, wherein the filtering enhancement comprises at least one of: bilateral filtering, median filtering, Gaussian filtering, normalized filtering, or neural network filtering.

**79.** The method of claim 42, wherein performing the first filtering on the first prediction block to determine the second prediction block for the second colour component of the current block comprises:

determining a first weight value for the first prediction block in a bilateral filtering mode;
performing bilateral filtering on the first prediction block according to the first weight value, to obtain the second prediction block.

**80.** The method of claim 42, wherein performing the first filtering on the first prediction block to determine the second prediction block for the second colour component of the current block comprises:

determining a compensation value of a second-colour-component sample of the first prediction block, according to a reference sample value in a neighbouring area of the current block; and
refining a prediction value of the second-colour-component sample of the first prediction block according to the compensation value, to determine the second prediction block.

**81.** The method of claim 42, wherein performing the first filtering on the first prediction block to determine the second prediction block for the second colour component of the current block comprises:

predicting a second-colour-component sample of the first prediction block according to at least one prediction modes, to determine at least one initial prediction value of the second-colour-component sample of the first prediction block; and
performing weighted average calculation on the at least one initial prediction value and the prediction value of the second-colour-component sample in the first prediction block to determine the second prediction block.

82. The method of claim 42, wherein determining the residual value of the second-colour-component sample in the current block according to the second prediction block. comprises:

determining a prediction value of the second-colour-component sample in the current block according to the second prediction block; and
determining the residual value of the second-colour-component sample in the current block according to an original value of the second-colour-component sample in the current block and the prediction value of the second-colour-component sample in the current block.

83. The method of claim 82, further comprising:
encoding the residual value of the second-colour-component sample in the current block, and signaling obtained encoded bits into a bitstream.

84. An encoding apparatus, comprising:

a first determining unit configured to determine a reference sample value for a first colour component of a current block, and determine a weighting factor according to the reference sample value for the first colour component of the current block;
a first predicting unit configured to determine a first prediction block for a second colour component of the current block according to the weighting factor and a reference sample value for the second colour component of the current block; and
a first filtering unit configured to perform first filtering on the first prediction block to determine a second prediction block for the second colour component of the current block wherein the second prediction block comprises prediction values of all second-colour-component samples in the current block; and
the first determining unit being further configured to determine a residual value of the second-colour-component sample in the current block according to the second prediction block.

85. An encoding device, comprising a first memory and a first processor, wherein

the first memory is configured to store computer programs executable by the first processor; and
the first processor is configured to execute the computer programs to perform the method any of claims 42 to 83.

86. A decoding apparatus, comprising:

a second determining unit configured to determine a reference sample value for a first colour component of a current block, and determine a weighting factor according to the reference sample value for the first colour component of the current block;
a second predicting unit configured to determine a first prediction block for a second colour component of the current block according to the weighting factor and a reference sample value for the second colour component of the current block; and
a second filtering unit configured to perform first filtering on the first prediction block to determine a second prediction block for the second colour component of the current block, wherein the second prediction block comprises prediction values of all second-colour-component samples in the current block; and
the second determining unit being further configured to determine a reconstructed value of the second-colour-component sample in the current block according to the second prediction block.

87. A decoding device, comprising a second memory and a second processor, wherein

the second memory is configured to store computer programs executable by the second processor; and
the second processor is configured to execute the computer programs to perform the method of any of claims 1 to 41.

88. A computer-readable storage medium, configured to store computer programs which, when executed, are operable to implement the method of any of claims 1 to 41 or implement the method of any of claims 42 to 83.

| TOP NEIGHBOURING AREA | TOP-RIGHT NEIGHBOURING AREA |
|---|---|

LEFT NEIGHBOURING AREA | CODING BLOCK

BOTTOM-LEFT NEIGHBOURING AREA

FIG. 1

(a)                 (b)                 (c)

FIG. 2

FIG. 3

FIG. 4A

FIG. 4B

```
┌─────────────────────────────────────────────────┐
│  DETERMINE REFERENCE SAMPLE VALUE FOR FIRST COLOUR │ ⌐ S501
│         COMPONENT OF CURRENT BLOCK                 │
└─────────────────────────────────────────────────┘
                        │
                        ▼
┌─────────────────────────────────────────────────┐
│ DETERMINE WEIGHTING FACTOR ACCORDING TO REFERENCE │ ⌐ S502
│ SAMPLE VALUE FOR FIRST COLOUR COMPONENT OF CURRENT │
│                    BLOCK                           │
└─────────────────────────────────────────────────┘
                        │
                        ▼
┌─────────────────────────────────────────────────┐
│  DETERMINE FIRST PREDICTION BLOCK FOR SECOND COLOUR │
│  COMPONENT OF CURRENT BLOCK ACCORDING TO WEIGHTING │ ⌐ S503
│ FACTOR AND REFERENCE SAMPLE VALUE FOR SECOND COLOUR │
│          COMPONENT OF CURRENT BLOCK                │
└─────────────────────────────────────────────────┘
                        │
                        ▼
┌─────────────────────────────────────────────────┐
│  PERFORM FIRST FILTERING ON FIRST PREDICTION BLOCK TO │ ⌐ S504
│ DETERMINE SECOND PREDICTION BLOCK FOR SECOND COLOUR │
│          COMPONENT OF CURRENT BLOCK                │
└─────────────────────────────────────────────────┘
                        │
                        ▼
┌─────────────────────────────────────────────────┐
│  DETERMINE RECONSTRUCTED VALUE OF SECOND-COLOUR-   │ ⌐ S505
│  COMPONENT SAMPLE IN CURRENT BLOCK ACCORDING TO    │
│          SECOND PREDICTION BLOCK                   │
└─────────────────────────────────────────────────┘
```

FIG. 5

| TOP-<br>LEFT<br>AREA | TOP AREA | |
|---|---|---|
| LEFT<br>AREA | CURRENT BLOCK | |

FIG. 6A

| | | | | | | | |
|---|---|---|---|---|---|---|---|
| RefLuma (i,j) | RefLuma (i+1,j) | | | | | | |
| RefLuma (i,j+1) | | | | | | | |

| | | | |
|---|---|---|---|
| RefChroma | | | |

| | | | | | | | |
|---|---|---|---|---|---|---|---|
| RefChroma (i,j) | RefChroma _copy (i,j) | RefChroma (i+2,j) | RefChroma _copy (i+2,j) | | | | |
| RefChroma (i,j) | RefChroma (i,j) | RefChroma _copy (i+2,j) | RefChroma _copy (i+2,j) | | | | |

FIG. 6B

CENTER POSITION $(i, j)$ OF THE
CURRENT FILTER

WEIGHT VALUE OF A
NEIGHBOURING POINT OF THE
CENTER POINT

FIG. 7

FIG. 8

FIG. 9

DETERMINE CORE PARAMETER FOR WCP MODE — S1001

DETERMINE THE TARGET INFORMATION OF THE CURRENT BLOCK ACCORDING TO THE CORE PARAMETERS — S1002

PERFORM WCP ACCORDING TO THE TARGET INFORMATION, TO OBTAIN A FIRST PREDICTION BLOCK FOR THE CURRENT BLOCK — S1003

PERFORM POST-PROCESSING ON THE CHROMA PREDICTION VALUE OF THE FIRST PREDICTION BLOCK, TO DETERMINE A SECOND PREDICTION BLOCK FOR THE CURRENT BLOCK — S1004

FIG. 10

FOR A SAMPLE TO-BE-PREDICTED, CONSTRUCT A LUMA DIFFERENCE VECTOR IS BY USING THE RECONSTRUCTED LUMA INFORMATION OF THE CURRENT BLOCK, THE REFERENCE LUMA INFORMATION, AND THE REFERENCE CHROMA INFORMATION IN THE TARGET INFORMATION — S1101

FOR THE SAMPLE TO-BE-PREDICTED, CALCULATE A WEIGHT VECTOR ACCORDING TO THE LUMA DIFFERENCE VECTOR BY USING A NONLINEAR FUNCTION — S1102

FOR THE SAMPLE TO-BE-PREDICTED, PERFORM WEIGHTED CALCULATION ACCORDING TO THE WEIGHT VECTOR AND THE REFERENCE CHROMA INFORMATION IN THE TARGET INFORMATION, TO OBTAIN A CHROMA PREDICTION VALUE — S1103

FOR THE SAMPLE TO-BE-PREDICTED, REFINE THE CHROMA PREDICTION VALUE OBTAINED TO DETERMINE THE FIRST PREDICTION BLOCK FOR THE CURRENT BLOCK — S1104

FIG. 11

DETERMINE THE OUTPUT SIZE OF THE FIRST PREDICTION BLOCK — S1201

IF THE OUTPUT SIZE OF THE FIRST PREDICTION BLOCK IS EQUAL TO THE SIZE OF THE CURRENT BLOCK, PERFORM FILTERING ENHANCEMENT ON THE FIRST PREDICTION BLOCK DIRECTLY TO OBTAIN THE SECOND PREDICTION BLOCK — S1202

IF THE OUTPUT SIZE OF THE FIRST PREDICTION BLOCK IS LESS THAN THE SIZE OF THE CURRENT BLOCK, DETERMINE AN EXECUTION ORDER FOR THE FIRST PREDICTION BLOCK — S1203

PERFORM UP-SAMPLING FILTERING ON THE FIRST PREDICTION BLOCK FIRST, TO OBTAIN THE UP-SAMPLED PREDICTION BLOCK, AND THE SIZE THEREOF IS RESTORED TO THE SAME SIZE AS THE CURRENT BLOCK — S1204

PERFORM FILTERING ENHANCEMENT PERFORMED ON THE PREDICTION BLOCK OBTAINED AFTER UP-SAMPLING FILTERING, TO OBTAIN THE ENHANCED PREDICTION BLOCK — S1206

THEN PERFORM FILTERING ENHANCEMENT ON THE UP-SAMPLED PREDICTION BLOCK, TO OBTAIN THE SECOND PREDICTION BLOCK — S1205

PERFORM UP-SAMPLING FILTERING ON THE ENHANCED PREDICTION BLOCK, TO OBTAIN THE SECOND PREDICTION BLOCK, AND THE SIZE THEREOF IS RESTORED TO THE SAME SIZE AS THE CURRENT BLOCK — S1207

FIG. 12

refC_T

predWcp

refC_L

FIG. 13

FIG. 14

FIG. 15

FIG. 16

FIG. 17

FIG. 18

FIG. 19

DETERMINE REFERENCE SAMPLE VALUE FOR FIRST COLOUR COMPONENT OF CURRENT BLOCK — S2001

DETERMINE WEIGHTING FACTOR ACCORDING TO REFERENCE SAMPLE VALUE FOR FIRST COLOUR COMPONENT OF CURRENT BLOCK — S2002

DETERMINE FIRST PREDICTION BLOCK FOR SECOND COLOUR COMPONENT OF CURRENT BLOCK ACCORDING TO WEIGHTING FACTOR AND REFERENCE SAMPLE VALUE FOR SECOND COLOUR COMPONENT OF CURRENT BLOCK — S2003

PERFORM FIRST FILTERING ON FIRST PREDICTION BLOCK TO DETERMINE SECOND PREDICTION BLOCK FOR SECOND COLOUR COMPONENT OF CURRENT BLOCK — S2004

DETERMINE RESIDUAL VALUE OF SECOND-COLOUR-COMPONENT SAMPLE IN CURRENT BLOCK ACCORDING TO SECOND PREDICTION BLOCK — S2005

FIG. 20

DETERMINE REFERENCE SAMPLE VALUE FOR FIRST COLOUR COMPONENT OF CURRENT BLOCK — S2001

DETERMINE WEIGHTING FACTOR ACCORDING TO REFERENCE SAMPLE VALUE FOR FIRST COLOUR COMPONENT OF CURRENT BLOCK — S2002

DETERMINE FIRST PREDICTION BLOCK FOR SECOND COLOUR COMPONENT OF CURRENT BLOCK ACCORDING TO WEIGHTING FACTOR AND REFERENCE SAMPLE VALUE FOR SECOND COLOUR COMPONENT OF CURRENT BLOCK — S2003

PERFORM FIRST FILTERING ON FIRST PREDICTION BLOCK TO DETERMINE SECOND PREDICTION BLOCK FOR SECOND COLOUR COMPONENT OF CURRENT BLOCK — S2004

DETERMINE PREDICTION VALUE OF SECOND-COLOUR-COMPONENT SAMPLE IN CURRENT BLOCK ACCORDING TO SECOND PREDICTION BLOCK — S2101

DETERMINE RESIDUAL VALUE OF SECOND-COLOUR-COMPONENT SAMPLE IN CURRENT BLOCK ACCORDING TO ORIGINAL VALUE OF SECOND-COLOUR-COMPONENT SAMPLE IN CURRENT BLOCK AND PREDICTION VALUE OF SECOND-COLOUR-COMPONENT SAMPLE IN CURRENT BLOCK — S2102

ENCODE RESIDUAL VALUE OF SECOND-COLOUR-COMPONENT SAMPLE IN CURRENT BLOCK, AND SIGNAL OBTAINED ENCODED BITS INTO BITSTREAM — S2103

FIG. 21

300

ENCODING APPARATUS

3001

FIRST
DETERMINING
UNIT

3002

FIRST
PREDICTING
UNIT

3003

3004

ENCODING
UNIT

FIRST
FILTERING
UNIT

**FIG. 22**

310

ENCODING DEVICE

3101

FIRST
COMMUNICATION
INTERFACE

3104

3103

FIRST
PROCESSOR

3102

FIRST MEMORY

**FIG. 23**

320

DECODING APPARATUS

3201
SECOND
DETERMINING
UNIT

3202
SECOND
PREDICTING
UNIT

3204
DECODING
UNIT

3203
SECOND
FILTERING
UNIT

FIG. 24

330

DECODING DEVICE

3301
SECOND
COMMUNICATION
INTERFACE

3304

3303
SECOND
PROCESSOR

3302
SECOND
MEMORY

FIG. 25

340

3401
ENCODER

3402
DECODER

FIG. 26

## INTERNATIONAL SEARCH REPORT

| International application No. |
|---|
| **PCT/CN2022/086467** |

**A. CLASSIFICATION OF SUBJECT MATTER**

H04N 19/186(2014.01)i; H04N 19/159(2014.01)i

According to International Patent Classification (IPC) or to both national classification and IPC

**B. FIELDS SEARCHED**

Minimum documentation searched (classification system followed by classification symbols)

H04N19/-

Documentation searched other than minimum documentation to the extent that such documents are included in the fields searched

Electronic data base consulted during the international search (name of data base and, where practicable, search terms used)

CNTXT; CNABS; CNKI: 色度, 左, 权重, 加权, 参考, 相邻, 左下, 差, 左上, 第二颜色, 减, 差, 亮度, 右, 预测, 系数, 第一颜色, 第一色彩, 第二色彩, 右上, CCLM, 重建, 跨分量, 线性预测, 滤波, 上采样, 下采样, 增强, 修正; IEEE; USTXT; VEN; EPTXT; WOTXT; JCTVC: colour, left, up, difference, reconstruc+, predict+, CCLM, LM, weight, coefficient, chroma, chromatic, luminance, brightness, luma, reference, filter, downsampl+, upsampl+, correct+, modif+

**C. DOCUMENTS CONSIDERED TO BE RELEVANT**

| Category* | Citation of document, with indication, where appropriate, of the relevant passages | Relevant to claim No. |
|---|---|---|
| Y | WO 2020029202 A1 (GUANGDONG OPPO MOBILE TELECOMMUNICATIONS CORP., LTD.) 13 February 2020 (2020-02-13) <br> description, pp. 5-15, and figures 1-10 | 1-88 |
| Y | TW 202147844 A (GUANGDONG OPPO MOBILE TELECOMMUNICATIONS CORP., LTD.) 16 December 2021 (2021-12-16) <br> description, paragraphs 0005-0065, and figures 1-17 | 1-88 |
| A | WO 2018012808 A1 (SAMSUNG ELECTRONICS CO., LTD.) 18 January 2018 (2018-01-18) <br> entire document | 1-88 |
| A | CN 110100436 A (QUALCOMM INC.) 06 August 2019 (2019-08-06) <br> entire document | 1-88 |
| A | CN 104871537 A (MEDIATEK INC.) 26 August 2015 (2015-08-26) <br> entire document | 1-88 |
| A | WO 2020187161 A1 (MEDIATEK INC.) 24 September 2020 (2020-09-24) <br> entire document | 1-88 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 June 2022** | **28 July 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/086467** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112292863 A (KWANGWOON UNIVERSITY INDUSTRY-ACADEMIC COLLABORATION FOUNDATION) 29 January 2021 (2021-01-29) entire document | 1-88 |

Form PCT/ISA/210 (second sheet) (January 2015)

**INTERNATIONAL SEARCH REPORT**
Information on patent family members

| International application No. |
| --- |
| **PCT/CN2022/086467** |

| Patent document cited in search report | | | Publication date (day/month/year) | Patent family member(s) | | | Publication date (day/month/year) |
| --- | --- | --- | --- | --- | --- | --- | --- |
| CN | 104871537 | A | 26 August 2015 | US | 2015365684 | A1 | 17 December 2015 |
| | | | | US | 2017295366 | A1 | 12 October 2017 |
| | | | | WO | 2014154094 | A1 | 02 October 2014 |
| | | | | CA | 2896637 | A1 | 02 October 2014 |
| | | | | EP | 2920964 | A1 | 23 September 2015 |
| | | | | EP | 2920964 | A4 | 13 April 2016 |
| | | | | US | 9736487 | B2 | 15 August 2017 |
| | | | | CA | 2896637 | C | 13 February 2018 |
| | | | | CN | 104871537 | B | 16 March 2018 |
| | | | | EP | 2920964 | B1 | 09 May 2018 |
| | | | | US | 10154268 | B2 | 11 December 2018 |
| TW | 202147844 | A | 16 December 2021 | WO | 2021244197 | A1 | 09 December 2021 |
| | | | | CN | 113766246 | A | 07 December 2021 |
| WO | 2018012808 | A1 | 18 January 2018 | KR | 20180135075 | A | 19 December 2018 |
| | | | | US | 2021281831 | A1 | 09 September 2021 |
| | | | | US | 11277604 | B2 | 15 March 2022 |
| CN | 110100436 | A | 06 August 2019 | WO | 2018132710 | A1 | 19 July 2018 |
| | | | | US | 2018205946 | A1 | 19 July 2018 |
| | | | | IN | 201927021223 | A | 24 January 2020 |
| | | | | US | 11025903 | B2 | 01 June 2021 |
| WO | 2020029202 | A1 | 13 February 2020 | RU | 2771350 | C1 | 04 May 2022 |
| | | | | US | 2021160505 | A1 | 27 May 2021 |
| | | | | KR | 20210041603 | A | 15 April 2021 |
| | | | | PH | 12021550291 | A1 | 11 October 2021 |
| | | | | SG | 11202101310 P | A | 30 March 2021 |
| | | | | BR | 112021002310 | A2 | 04 May 2021 |
| | | | | US | 2022038699 | A1 | 03 February 2022 |
| | | | | AU | 2018436324 | A1 | 11 March 2021 |
| | | | | IL | 280695 | D0 | 25 March 2021 |
| | | | | CA | 3109014 | A1 | 13 February 2020 |
| | | | | JP | 2022501863 | A | 06 January 2022 |
| | | | | EP | 3823284 | A1 | 19 May 2021 |
| | | | | CN | 112534819 | A | 19 March 2021 |
| | | | | SG | 11202101310 | A1 | 30 March 2021 |
| | | | | IN | 202117009313 | A | 23 April 2021 |
| | | | | VN | 78157 | A | 25 May 2021 |
| | | | | EP | 3823284 | A4 | 14 July 2021 |
| | | | | CN | 113132722 | A | 16 July 2021 |
| | | | | US | 11218701 | B2 | 04 January 2022 |
| | | | | JP | 2022501863 | W | 06 January 2022 |
| WO | 2020187161 | A1 | 24 September 2020 | EP | 3939298 | A1 | 19 January 2022 |
| | | | | CA | 3132744 | A1 | 24 September 2020 |
| | | | | TW | 202042556 | A | 16 November 2020 |
| | | | | CN | 113632481 | A | 09 November 2021 |
| | | | | IN | 202127046689 | A | 04 February 2022 |
| CN | 112292863 | A | 29 January 2021 | US | 2020036971 | A1 | 30 January 2020 |
| | | | | WO | 2019240448 | A1 | 19 December 2019 |
| | | | | KR | 101956756 | B1 | 11 March 2019 |
| | | | | US | 2021195180 | A1 | 24 June 2021 |

Form PCT/ISA/210 (patent family annex) (January 2015)

International application No.

**PCT/CN2022/086467**

| Patent document cited in search report | Publication date (day/month/year) | Patent family member(s) | | Publication date (day/month/year) |
|---|---|---|---|---|
| | | CA | 3141482 A1 | 19 December 2019 |
| | | US | 10477205 B1 | 12 November 2019 |
| | | IN | 202117000987 A | 19 March 2021 |
| | | US | 10972727 B2 | 06 April 2021 |
| | | KR | 20190140820 A | 20 December 2019 |